# EUROPÄISCHE PATENTSCHRIFT

(11) **EP 1 050 200 B1**
(45) Veröffentlichungstag und Bekanntmachung des Hinweises auf die Patenterteilung: **30.10.2002**
(21) Anmeldenummer: 99901496.2
(22) Anmeldetag: 22.01.1999
(51) Int. Cl.: H05H 1/34

(54) **Schweissgerät FÜR SCHNEIDVERFAHREN**
Welding apparatus FOR CUTTING PROCESSES
Appareil de soudage DESTINE A UN PROCEDE DE DECOUPE

(30) Priorität: 23.01.1998 AT 11398
(43) Veröffentlichungstag der Anmeldung: 08.11.2000
(73) Patentinhaber: FRONIUS Schweissmaschinen Produktion GmbH & Co. KG, 4643 Pettenbach (AT)
(72) Erfinder: LAIMER, Johann, A-2500 Baden (AT); STÖRI, Herbert, A-1070 Wien (AT); PAUSER, Heribert, A-3484 Grafenwörth (AT)
(74) Vertreter: Secklehner, Günter, Dr.
(86) Internationale Anmeldenummer: AT9900017
(87) Internationale Veröffentlichungsnummer: WO99038365

(56) Entgegenhaltungen:
- DE-A- 1 964 816
- FR-A- 2 657 489
- GB-A- 930 436
- US-A- 3 567 898
- US-A- 5 560 844
- US-A- 5 609 777
- PATENT ABSTRACTS OF JAPAN vol. 014, no. 499 (M-1042), 31. Oktober 1990 & JP 02 205270 A (HITACHI SEIKO LTD), 15. August 1990
- DATABASE WPI Section Ch, Week 9707 Derwent Publications Ltd., London, GB; Class M23, AN 97-075816 XP002103892 & RU 2 060 128 C (AUTOGENOUS EQUIP RES CONSTR INST), 20. Mai 1996

## Beschreibung

Die Erfindung bezieht sich auf ein Schweissgerät für ein Schneidverfahren sowie auf ein Verfahren, wie in den Ansprüchen 1 und 59 beschrieben.

Aus der JP 02 205 270 A ist ein Brenner für ein Wasserdampf-Schneidverfahren, bestehend aus einer Steuervorrichtung, einem Flüssigkeitsversorgungssystem und einer Stromquelle, wobei der Brenner über Leitungen mit der Stromquelle verbunden ist, bekannt. Der Brenner ist über eine Versorgungsleitung mit dem Flüssigkeitsversorgungssystem verbunden. Ein im Brenner angeordneter Strömungskanal ist so ausgebildet, daß im Betrieb die Flüssigkeit in ein Gas bzw. in Dampf umgewandelt wird. Der Brenner umfaßt eine Kathode und eine Anode. Das Flüssikeitsversorgungssystem ist über eine Leitung mit dem Zwischenraum zwischen der Kathode und der Anode verbunden.

Aus der EP 0 640 426 B1 ist ein Brenner für ein Schneidverfahren, insbesondere ein Wasserdampf-Schneidverfahren, bekannt, bei dem im Brenner ein Behälter für die Flüssigkeit, insbesondere für Wasser, angeordnet ist. Der Brenner weist eine Anode und eine über einen Zwischenraum getrennte Kathode auf, wobei zwischen der Anode und der Kathode ein Lichtbogen gebildet wird. Zum Zünden des Lichtbogens wird der Brenner mit Energie von einer in einem Versorgungsgerät angeordneten Stromquelle versorgt, wobei die Kathode durch Beaufschlagung mit Druck vom Benutzer an die Anode angepreßt wird, sodaß bei der Abhebbewegung der Kathode von der Anode in die Ruhestellung der Kathode der Lichtbogen gezündet wird. Damit die Flüssigkeit in den Zwischenraum zwischen der Anode und der Kathode gelangen kann, ist der Be-hälter mit einem porösen, wärmeleitenden Material gefüllt, welches mit einem den Zwischenraum abschließenden Ring verbunden ist, sodaß durch in dem Ring angeordnete Verbindungsgänge die Flüssigkeit bzw. ein durch das Erwärmen der Flüssigkeit entstehendes Gas vom Behälter in den Zwischenraum strömen kann. Durch den im Zwischenraum gezündeten Lichtbogen wird die Flüssigkeit von ihrem flüssigen Zustand in einen gasförmigen Zustand umgewandelt und gleichzeitig erwärmt, sodaß das Gas, insbesondere ein Wasserdampf, mit hoher Temperatur aus dem Brenner ausströmen kann. Nachteilig ist hierbei, daß durch die Anordnung des Behälters im Brenner die Baugröße beschränkt ist, damit eine möglichst hohe Flexibilität für die Hand-habung des Brenners erreichen werden kann, wodurch nur eine geringe Flüssigkeitsmenge in den Behälter eingefüllt werden kann und somit ein längerer Schneidvorgang ohne Unterbrechung nicht möglich ist.

Der vorliegenden Erfindung liegt die Aufgabe zugrunde, ein Schweissgerät für ein Schneidverfahren sowie ein Verfahren hierzu zu schaffen, bei dem eine lange Laufzeit für einen Schneidvorgang und eine hohe Flexibilität des Brenners erreicht wird.

Diese Aufgabe der Erfindung wird durch die Merkmale im Kennzeichenteil des Anspruches 1 gelöst. Vorteilhaft ist hierbei, daß durch die Verwendung eines Heizelementes sichergestellt ist, daß keine Flüssigkeit in den Zwischenraum zwischen Anode und Kathode gelangen kann, sodaß ein Erlöschen des Lichtbogens sicher verhindert wird.

Ein weiterer Vorteil liegt darin, daß durch den vorgegebenen Verlauf und/oder Querschnitt des Kanals bzw. Strömungskanals im Schweißbrenner erreicht wird, daß die Flüssigkeit beim Austritt aus dem Kanal bzw. Strömungskanal in den gasförmigen Zustand umgewandelt wird. Ein weiterer nicht vorhersehbarer Vorteil liegt darin, daß durch die Verbindung des Brenners mit einem externen Flüssigkeitsversorgungssystem der Benutzer einen zeitlich unbeschränkten Schneidprozeß durchführen kann. Ein weiterer Vorteil liegt darin, daß dadurch die externe Anordnung des Flüssigkeitsversorgungssystems ein einfacher Aufbau des Brenners geschaffen werden kann.

Von Vorteil sind auch Ausbildungen nach den Ansprüchen 2 bis 4, da die Wärmeenergie durch das Heizelement in kurzer Zeit für die Verdampfung der Flüssigkeit zur Verfügung steht.

Es ist auch eine Ausbildung nach den Ansprüchen 5 und 6 von Vorteil, da dadurch eine unbegrenzte Menge an Flüssigkeit für den Brenner zur Verfügung steht.

Gemäß der Ausbildung nach Anspruch 7 wird in vorteilhafter Weise erreicht, daß eine Vorerwärmung der Flüssigkeit geschaffen wird, sodaß zum Umwandeln der Flüssigkeit in das Gas weniger Energie benötigt wird.

Durch die Ausbildung nach Anspruch 8 wird erreicht, daß durch die tangential umlaufende Führung des Kanals bzw. Strömungskanals im Brenner eine Verlängerung des Zufuhrweges der Flüssigkeit in den Zwischenraum geschaffen wird.

Vorteilhaft ist auch eine Ausbildung nach Anspruch 9, da dadurch ein einfacher Aufbau des Brenners erzielt wird.

Von Vorteil ist auch eine Ausbildung nach Anspruch 10, da dadurch die Durchflußgeschwindigkeit der Flüssigkeit erhöht bzw. geregelt werden kann.

Vorteilhaft ist auch eine weitere Ausführungsform nach Anspruch 11, da dadurch eine sichere Zündung des Lichtbogens zwischen der Anode und der Kathode durchgeführt werden kann, da hierzu ein Zündverfahren, wie es bereits aus dem Stand der Technik, insbesondere aus der Schweißtechnik, bekannt ist, eingesetzt werden kann. Ein weiterer Vorteil liegt darin, daß durch das Einsetzen eines Hochfrequenzzündverfahrens keine beweglichen Bauelemente im Brenner angeordnet werden müssen, sodaß ein stabiler Aufbau des Brenners ermöglicht wird.

Durch die Ausbildung nach Anspruch 12 ist es möglich, daß eine kompakte Baueinheit für den Brenner geschaffen werden kann.

Von Vorteil ist auch eine Ausbildung nach den Ansprüchen 13 bis 15, da dadurch in einfacher Form ein radialer Fließkanal in Längsrichtung der Längsmittelachse des Brenners geschaffen werden kann.

Gemäß einer Ausbildung, wie in den Ansprüchen 16 und 17 beschrieben, ist es möglich, daß ein zum Stand der Technik zählendes Heizelement zur Erwärmung der Flüssigkeit eingesetzt werden kann.

Vorteilhaft ist auch eine Ausbildung nach den Ansprüchen 18 und 19, da dadurch das im Inneren des Brenners gebildete Gas über die Bohrung der Anode aus den Innenraum des Brenners ausströmen kann, wobei das Gas durch den zwischen der Anode und der Kathode gebildeten Lichtbogen auf eine entsprechend hohe Temperatur aufgeheizt wird.

Möglich ist dabei auch eine Ausbildung nach den Ansprüchen 20 bis 22, da durch die Ausbildung der Kathodenhülse aus unterschiedlichen Materialien eine hohe bzw. gerichtete Wärmeabfuhr von der Kathode erreicht wird.

Von Vorteil ist auch eine Ausbildung nach den Ansprüchen 23 und 24, da dadurch eine Zwangsführung des im Inneren des Brenners gebildeten Gases geschaffen wird, wobei das Gas durch den im Zwischenraum angeordneten Lichtbogen auf eine ent-sprechende Temperatur erwärmt wird und somit ein Schneidverfahren durch das aus-tretende Gas möglich ist.

Bei der Ausbildung gemäß den Ansprüchen 25 und 26 wird in vorteilhafter Weise erreicht, daß eine gute Kühlung der Kathodenhülse, insbesondere der Kathode, erzielt wird.

Nach einer vorteilhaften Weiterbildung gemäß den Ansprüchen 27 und 28 wird erreicht, daß eine elektrische Isolierung der Kathodenhülse gegenüber den weiteren Bauelementen erzielt wird, sodaß ein Kurzschluß zwischen den einzelnen Bauelementen verhindert wird.

Bei der Ausbildung gemäß den Ansprüchen 29 bis 32 wird durch die umlaufende Nut eine konstante Verteilung des Gases erreicht, sodaß ein gleichmäßiges Einströmen des Gases in den Zwischenraum zwischen der Anode und Kathode geschaffen wird.

Vorteilhaft ist auch eine Ausbildung nach den Ansprüchen 33 bis 41, da dadurch in einfacher Form eine Führung der Flüssigkeit im Inneren des Brenners geschaffen werden kann.

Nach einer vorteilhaften Weiterbildung gemäß den Ansprüchen 42 und 43 wird erreicht, daß die stromführenden Bauelemente des Brenners im Inneren des Schutzgehäuses angeordnet sind, sodaß der Benutzer beim Berühren des Schweißbrenners keinen Stromschlag erhalten kann.

Es ist auch eine Ausbildung nach Anspruch 44 von Vorteil, da dadurch in einfacher Form eine Regelung des Druckes der Flüssigkeit zum Fördern an den Brenner erzielt wird.

Vorteilhaft ist auch eine Ausbildung nach den Ansprüchen 45 bis 47, da dadurch eine bessere Erwärmung der Flüssigkeit im Inneren des Brenners erzielt wird.

Nach einer anderen Ausführungsvariante gemäß den Ansprüchen 48 und 49 wird erreicht, daß dadurch Verbindungsleitungen zwischen dem Versorgungsgerät und dem Brenner eingespart werden können, sodaß die Flexibilität des Brenners erhöht wird.

Es ist auch eine Ausbildung nach den Ansprüchen 50 und 51 von Vorteil, da dadurch für die Bildung des Brenners eine geringe Anzahl von unterschiedlichen Bauelementen benötigt wird, sodaß eine kostengünstige Herstellung eines Brenners möglich ist.

Von Vorteil ist auch eine Ausbildung nach den Ansprüchen 52 bis 56, da dadurch der Benutzer die Möglichkeit hat, in die einzelnen Behälter unterschiedliche Flüssigkeiten, wie beispielsweise Wasser und anorganische und/oder organische Lösungsmittel getrennt einzufüllen, sodaß nach Einstellung des Mischungsverhältnisses über die Steuervorrichtung ein selbsttätiges Zusammenmischen der beiden Flüssigkeiten erzielt wird. Es besteht weiters die Möglichkeit, das Mischverhältnis der Flüssigkeiten in einfacher Form schnell zu verändern. Weiters wird in vorteilhafter Weise erreicht, daß das Volumen der Behälter unterschiedlich ausgebildet werden kann, sodaß bei entsprechenden Mischverhältnissen von Flüssigkeiten die Schneiddauer bzw. Schweißdauer verlängert werden kann.

Bei der Ausbildung gemäß den Ansprüchen 57 und 58 wird in vorteilhafter Weise erreicht, daß im Brenner bzw. zwischen dem Brenner und dem Werkstück jeweils ein eigener Lichtbogen gezündet werden kann, der anschließend über die Steuervorrichtung unabhängig voneinander geregelt werden kann. Dadurch wird erreicht, daß einerseits die Erwärmung des Brenners, insbesondere deren Bauteile, für das Verdampfen der zugeführten Flüssigkeiten sicher gestellt ist und andererseits über den weiteren Lichtbogen zwischen dem Brenner und dem Werkstück eine weitere Erwärmung des aus dem Brenner austretenden Gases, insbesondere des Wasserdampfes oder des Wasserdampfgemisches, erreicht wird. Durch diese Ausbildung des weiteren Lichtbogens zwischen dem Brenner und dem Werkstück wird weiters erreicht, daß mit einem der-artigen Brenner sowohl ein Schneidverfahren als auch ein Schweißverfahren durchgeführt werden kann, da für ein Schweißverfahren lediglich Zusatzmaterial, insbeson-dere ein Schweißdraht, in den Bereich des externen Lichtbogens zugeführt werden muß.

Die Aufgabe der Erfindung wird auch durch die Merkmale im Kennzeichenteil des Anspruch des 59 gelöst. Vorteilhaft ist hierbei, daß durch die Verwendung eines Heizelementes die Zufuhr bzw. Einbringung der Wärmeenergie geregelt werden kann, wodurch es möglich ist, daß dadurch der Brenner ohne zusätzlichen Kühlkreislauf ausgebildet werden kann, wodurch die Baugröße und die Kosten eines derartigen Brenenrs gering gehalten werden können.Vorteilhaft ist weiters, daß durch die Zufuhr der Flüssigkeit unter Druck das Schwerefeld der Erde keinen Einfluß auf die Flüssigkeit bzw. das Gas ausübt, sodaß der Brenner in jeder beliebigen Lage einsetzbar ist.

Es sind auch die Maßnahmen nach Anspruch 60 von Vorteil, da dadurch sichergestellt ist, daß keine Flüssigkeit in den Zwischenraum eintritt, welche zum Erlöschen des Lichtbogens führen könnte.

Es sind auch die Maßnahmen nach den Ansprüchen 61 und 62 von Vorteil, da durch die Umwandlung der Flüssigkeit in das Gas vor der Zündung des Lichtbogens der Zündvorgang vereinfacht wird.

Es sind auch die Maßnahmen nach Anspruch 63 von Vorteil, da dadurch eine Lageunabhängigkeit des Brenners geschaffen wird. Ein weiterer Vorteil liegt auch darin, daß durch die radiale Führung der Flüssigkeit im Brenner eine Verlängerung des Flüssigkeitsweges bis zur Anode erzielt wird, und somit sichergestellt ist, daß die Flüssigkeit durch Erwärmen von ihrem flüssigen Zustand in einen gasförmigen Zustand umgewandelt wird.

Vorteilhaft sind auch die Maßnahmen nach Anspruch 64, da dadurch die Zustandsänderung der Flüssigkeit in das Gas außerhalb des Brenners durchgeführt werden kann, wobei anschließend über den Lichtbogen das zugeführte Gas ionisiert und erwärmt wird.

Es sind auch die Maßnahmen nach Anspruch 65 von Vorteil, da dadurch eine zusätzliche Erwärmung des austretenden Gases erreicht wird.

Schließlich sind auch die Maßnahmen nach den Ansprüchen 66 und 67 von Vorteil, da dadurch mit einem derartigen Brenner sowohl ein Schneidverfahren als auch,ein Schweißverfahren in einfacher Form durchgeführt werden kann.

Die Erfindung wird im nachfolgenden anhand der in den Zeichnungen dargestellten Ausführungsbeispiele näher erläutert.

Es zeigen:
- Fig. 1: ein schematischer Aufbau eines Wasserdampf-Schneidgerätes;
- Fig. 2: eine detaillierte Darstellung des erfindungsgemäßen Brenners in Seitenansicht geschnitten und in vereinfachter, schematischer Darstellung;
- Fig. 3: eine Explosionsdarstellung der Bauelemente des erfindungsgemäßen Brenners nach Fig. 2;
- Fig. 4: eine weitere Explosionsdarstellung der weiteren Bauelemente des erfindungsgemäßen Brenners nach Fig. 2;
- Fig. 5: ein anderes Ausführungsbeispiel des erfindungsgemäßen Brenners in Seitenansicht geschnitten und in vereinfachter, schematischer Darstellung;
- Fig. 6: ein anderes Ausführungsbeispiel des erfindungsgemäßen Brenners, in Seitenansicht geschnitten und in vereinfachter, schematischer Darstellung;
- Fig. 7: ein weiteres Ausführungsbeispiel des erfindungsgemäßen Brenners, in Seitenansicht geschnitten und in vereinfachter, schematischer Darstellung;
- Fig. 8: ein anderes Ausführungsbeispiel des erfindungsgemäßen Brenners in Seitenansicht geschnitten und in vereinfachter, schematischer Darstellung;
- Fig. 9: ein schematischer Aufbau eines Wasserdampf-Schneidgerätes in vereinfachter, schematischer Darstellung;
- Fig. 10: ein weiteres Ausführungsbeispiel des erfindungsgemäßen Brenners in Seitenansicht geschnitten und in vereinfachter, schematischer Darstellung.

Einführend sei festgehalten, daß in den beschriebenen Ausführungsbeispielen gleiche Teile mit gleichen Bezugszeichen bzw. gleichen Bauteilbezeichnungen versehen sind, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebenen sowie dargestellten Figuren bezogen und sind bei einer Lageänderung sinngemäß auf die neue Lage zu übertragen. Weiters können auch Einzelmerkmale aus den gezeigten Ausführungsbeispielen für sich eigenständige, erfindungsgemäße Lösungen darstellen.

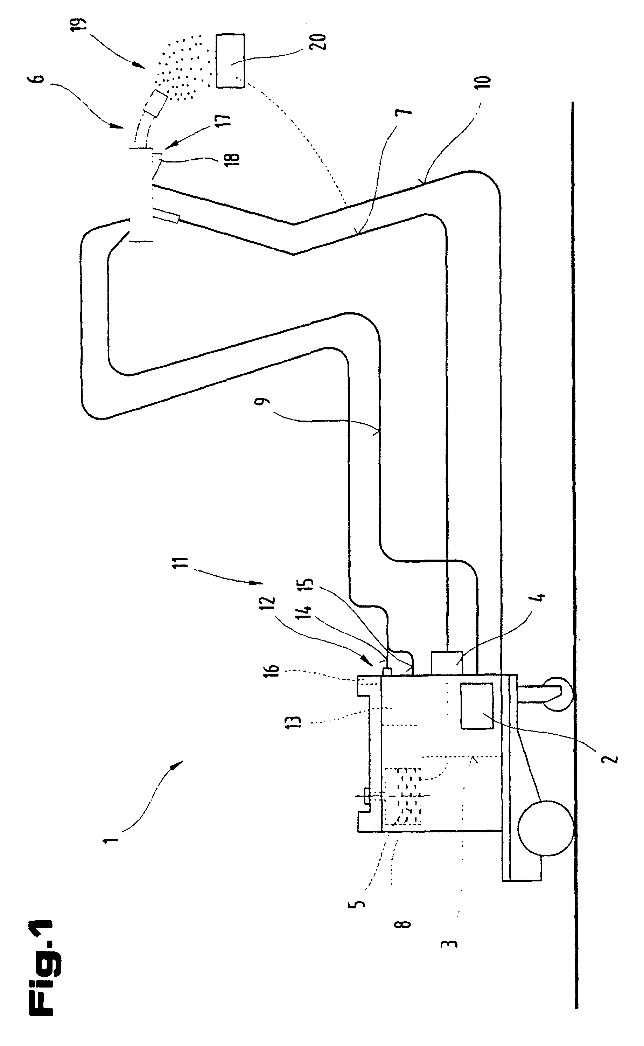

ln Fig. 1 ist ein Versorgungsgerät 1 für ein Wasserdampf-Schneidverfahren gezeigt. Das Versorgungsgerät 1 umfaßt eine Stromquelle 2, eine Steuervorrichtung 3 und ein der Steuervorrichtung 3 zugeordnetes Sperrelement 4. Das Sperrelement 4 ist mit einem Behälter 5 und einem Brenner 6 über eine Versorgungsleitung 7 verbunden, sodaß über die Versorgungsleitung 7 der Brenner 6 mit einer im Behälter 5 angeordneten Flüssigkeit 8 versorgt werden kann.

Die Versorgung des Brenners 6 mit Energie, insbesondere mit Strom und Spannung, erfolgt über Leitungen 9, 10 von der Stromquelle 2.

Zum Kühlen des Brenners 6 ist über einen Kühlkreislauf 11 der Brenner 6, z.B. unter Zwischenschaltung eines Strömungswächters 12 mit einem Flüssigkeitsbehälter 13 verbunden, wodurch bei der Inbetriebnahme des Brenners 6 bzw. des Versorgungsgerätes 1 der Kühlkreislauf 11 von der Steuervorrichtung 3 gestartet werden kann und somit eine Kühlung des Brenners 6 über den Kühlkreislauf 11 erreicht wird. Der Brenner 6 wird hierzu über Kühlleitungen 14, 15 mit dem Flüssigkeitsbehälter 13 verbunden.

Weiters weist das Versorgungsgerät 1 eine Eingabe- und/oder Anzeigevorrichtung 16 auf, über die die unterschiedlichsten Parameter bzw. Betriebsarten des Versorgungsgerätes 1 eingestellt werden können. Dabei werden die über die Eingabe- und/oder Anzeigevorrichtung 16 eingestellten Parameter an die Steuervorrichtung 3 weitergeleitet, worauf von der Steuervorrichtung 3 die einzelnen Komponenten des Versorgungsgerätes 1 angesteuert werden können.

Selbstverständlich ist es möglich, daß nicht, wie in dem dargestellten Ausführungsbeispiel gezeigt, der Brenner 6 über die einzeln dargestellten Leitungen mit dem Versorgungsgerät 1 verbunden wird, sondern daß die einzelnen Leitungen in einem gemeinsamen Schlauchpaket zusammengefaßt sind und an dem Brenner 6 und dem Versorgungsgerät 1 über Anschlußstecker angeschlossen sind.

Weiters kann der Brenner 6 zumindest ein Bedienungselement 17, insbesondere einen Taster 18, aufweisen. Über das Bedienungselement 17, insbesondere den Taster 18 kann der Benutzer der Steuervorrichtung 3 vom Brenner 6 aus mitteilen, daß ein Wasserdampf-Schneidverfahren gestartet bzw. durchgeführt werden soll.

Hierzu werden von der Steuervorrichtung 3 nach dem Betätigen des Tasters 18 die einzelnen für das Wasserdampf-Schneidverfahren benötigten Komponenten aktiviert, d.h., daß von der Steuervorrichtung 3 zuerst das Sperrelement 4 und die Stromquelle 2 angesteuert werden, wodurch eine Versorgung des Brenners 6 mit der Flüssigkeit 8 sowie mit Energie eingeleitet wird. Anschließend aktiviert die Steuervorrichtung 3 den Kühlkreislauf 11, sodaß eine Kühlung des Brenners 6 ermöglicht wird. Durch die Versorgung des Brenners 6 mit der Flüssigkeit 8 und mit Energie, insbesondere mit Strom und Spannung, wird nunmehr im Brenner 6 die Flüssigkeit 8 in ein Gas 19 mit hoher Temperatur umgewandelt, sodaß durch das aus dem Brenner 6 ausströmende Gas 19 ein Schneidprozeß an einem Werkstück 20 durchgeführt werden kann.

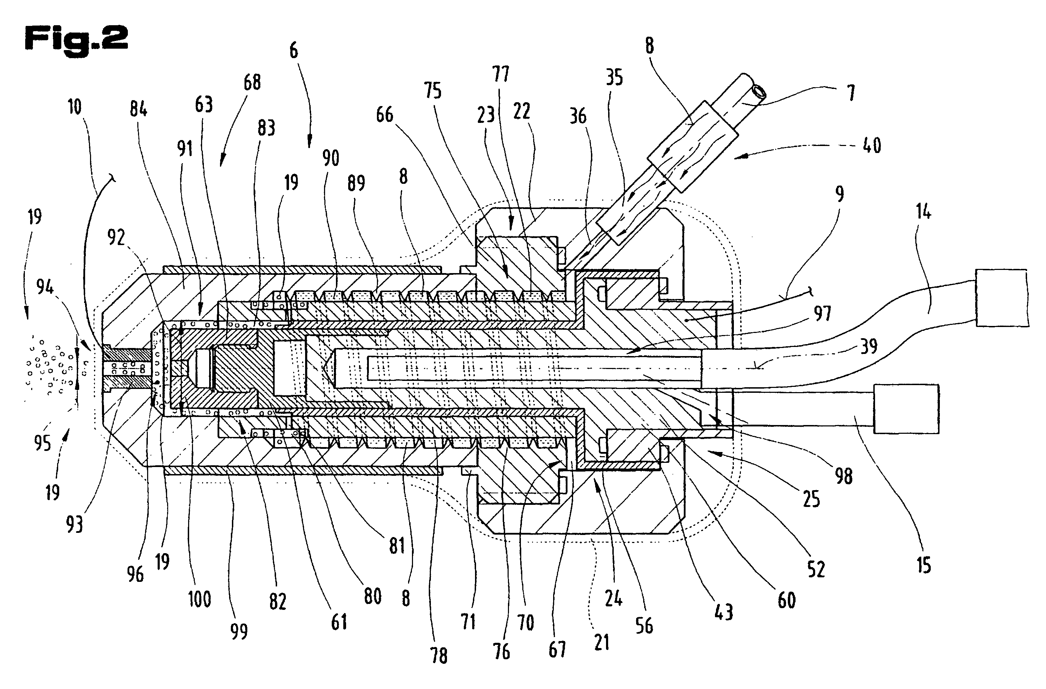

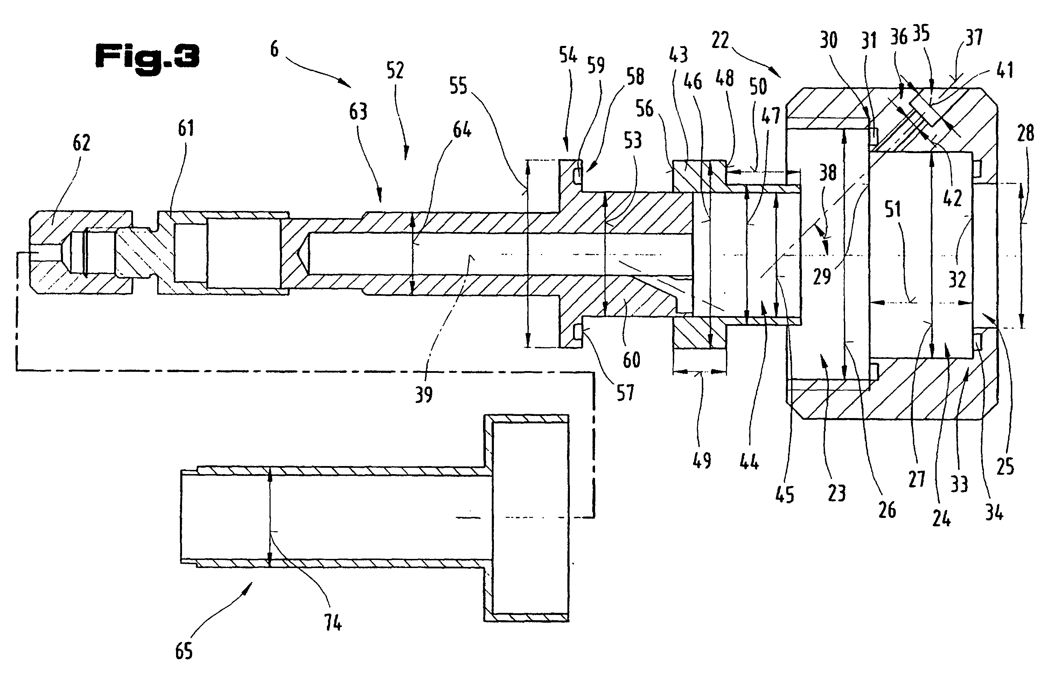

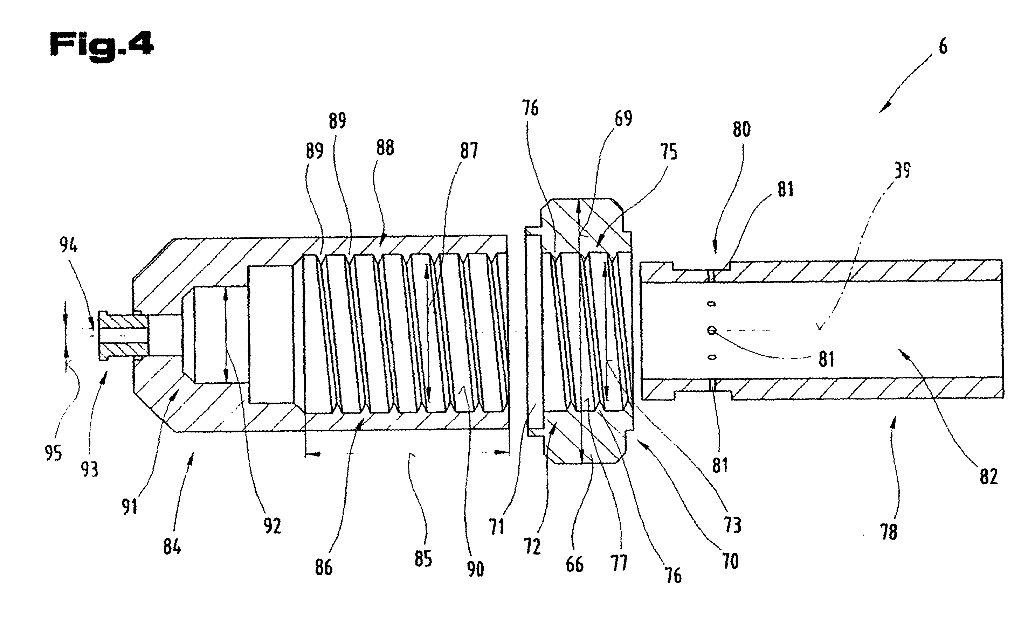

In den Fig. 2 bis 4 ist eine Detaildarstellung des Brenners 6 in Seitenansicht geschnitten und eine Explosionsdarstellung der einzelnen Bauelemente des Brenners 6 dargestellt. Bei dem dargestellten Ausführungsbeispiel sind die einzelnen Verbindungsleitungen zum Versorgungsgerät 1 nur schematisch angedeutet.

Der Brenner 6 wird bevorzugt aus einzelnen kreisrunden Bauelementen aufgebaut, wobei bei dem dargestellten Ausführungsbeispiel über die einzelnen Bauelemente des Brenners 6 ein Schutzgehäuse 21 schematisch angedeutet ist. Das Schutzgehäuse 21 wird bevorzugt durch ein Kunststoffgehäuse gebildet, sodaß der Benutzer beim Berühren des Schutzgehäuses 21 durch die einzelnen stromführenden Bauelemente keinen Stromschlag erhalten kann.

Der Brenner 6 weist einen Aufnahmeteil 22, in dem drei Bohrungen 23 bis 25 mit unterschiedlichen Durchmessern 26 bis 28 angeordnet sind, auf. Im Übergangsbereich zwischen der Bohrung 23 zur Bohrung 24 kann in eine Stirnfläche 29 eine Dichtungsnut 30, in der eine Dichtung 31 einlegbar ist, angeordnet sein. Selbstverständlich ist es möglich, daß in dem weiteren Übergangsbereich zwischen der Bohrung 24 und der Bohrung 25, also in einer Stirnfläche 32 wiederum eine Dichtungsnut 33, in der wiederum eine Dichtung 34 einlegbar ist, angeordnet sein kann.

Der Aufnahmeteil 22 weist weiters zwei weitere Bohrungen 35, 36 auf. Die beiden Bohrungen 35, 36 sind konzentrisch zu der im Mittel der beiden Bohrungen 35, 36 verlaufenden Mittelachse 37 angeordnet. Die Mittelachse 37 kann beispielsweise in einem Winkel 38 zu einer in Längsrichtung des Brenners 6 verlaufenden Längsmittelachse 39 angeordnet sein. Die Bohrung 36 mündet in die Bohrung 24, sodaß von der Bohrung 24 ein Ausgang bzw. Eingang über die beiden Bohrungen 35, 36 geschaffen wird.

Durch die Ausbildung der beiden Bohrungen 35, 36 ist es nunmehr möglich, daß ein Anschlußstück 40 für die Versorgungsleitung 7 in die Bohrung 35 angeordnet werden kann. Die Bohrung 35 weist dazu einen größeren Durchmesser 41 als ein Durchmesser 42 der Bohrung 36 auf. Das Anschlußstück 40 kann beispielsweise über ein Gewinde in die Bohrung 35 eingeschraubt werden. Durch das Anschlußstück 40 ist es nunmehr möglich, daß der Brenner 6 über die Versorgungsleitung 7 mit dem Versorgungsgerät 1 verbunden werden kann. Hierzu ist es z.B. möglich, daß jede beliebige aus dem Stand der Technik bekannte Kupplungsvorrichtung zum Verbinden des Anschlußstückes 40 mit der Versorgungsleitung 7 eingesetzt werden kann. Selbstverständlich ist es auch möglich, daß anstelle der beiden Bohrungen 35, 36 mit den unterschiedlichen Durchmessern 41, 42 nur eine Bohrung 35 oder 36, nämlich die Bohrung 35, angeordnet sein kann, sodaß wiederum eine Anordnung mit dem Anschlußstück 40 in der Bohrung 35 möglich ist.

Die Bohrungen 35, 36 werden bevorzugt im Übergangsbereich zwischen der Bohrung 23 und der Bohrung 24, also im Bereich der Stirnfläche 29 angeordnet, sodaß der Ausgang der Bohrung 36 im Übergangsbereich in die Bohrung 24 einmündet.

Mit dem Aufnahmeteil 22 werden nunmehr weitere Bauelemente des Brenners 6 verbunden. Hierzu wird in die Bohrung 24 ein Isolierelement 43, welches bevorzugt aus einem nicht leitenden Material gebildet ist, eingeschoben bzw. befestigt. Das Isolierelement 43 ist derartig ausgebildet, daß dieses in Längsrichtung zur Längsmittelachse 39 des Brenners 6 eine Bohrung 44 mit einem Durchmesser 45, der dem Durchmesser 28 der Bohrung 25 des Aufnahmeteiles 22 entspricht, angeordnet ist. Weiters weist das Isolierelement 43 zwei unterschiedliche Außendurchmesser 46, 47 auf, sodaß im Übergangsbereich der beiden Außendurchmesser 46, 47 des Isolierelementes 43 eine Stirnfläche 48 geschaffen wird. Das Isolierelement 43 wird derartig im Aufnahmeteil 22 positioniert, daß dieses mit dem Außendurchmesser 47 in die Bohrung 25 des Aufnahmeteils 22 eingeschoben wird bzw. sich von der Bohrung 24 durch oder in die Bohrung 25 erstreckt. Hierzu entspricht der Außendurchmesser 47 dem Durchmesser 28 der Bohrung 25, sodaß durch Einschieben des Isolierelementes 43 über die Bohrungen 23, 24 eine Positionierung bzw. Führung über die Bohrung 25 für das Isolierelement 43 geschaffen wird. Zusätzlich wird durch die Anordnung der Dichtung 34 ein dichtender Abschluß zwischen der Stirnfläche 32 der Bohrung 24 und der Stirnfläche 48 des Isolierelementes 43 im Übergangsbereich geschaffen.

Durch die beiden unterschiedlich ausgebildeten Außendurchmesser 46, 47 des Isolierelementes 43 wird eine stufenförmige Form erreicht, wobei jener Bereich des Isolierelementes 43 mit dem Außendurchmesser 46 eine Länge 49 und der weitere Bereich eine Länge 50 aufweist. Die Länge 49 wird dabei geringer ausgelegt als eine Länge 51 der Bohrung 24, d.h., daß beim Einführen des Isolierelementes 43 dieses sich nicht über die gesamte Länge 51 der Bohrung 24 erstreckt, sondern, daß sich das Isolierelement nur über einen Teilbereich der Bohrung 24 erstreckt, wodurch ein Freiraum in der Bohrung 24 für weitere Teile des Brenners 6 geschaffen wird. Die weitere Dimensionierung einer Länge 50 für den Bereich des Außendurchmessers 47 des Isolierelementes 43 ist bei dem dargestellten Ausführungsbeispiel derartig ausgebildet, daß sich beim Einführen des Isolierelementes 43 in die Bohrung 24 der Bereich des Isolierelementes 43 mit dem Außendurchmesser 47 durch die Bohrung 25 hindurch erstreckt.

In das Isolierelement 43 wird ein weiteres Bauelement des Brenners 6, nämlich eine Kathodenhülse 52 positioniert bzw. eingeführt, d.h., daß die Kathodenhülse 52 im Bereich des Isolierelementes 43 einen Außendurchmesser 53 aufweist, der dem Durchmesser 45 der Bohrung 44 entspricht, wodurch eine exakte Positionierung bzw. Führung der Kathodenhülse 52 im Isolierelement 43 erzielt wird. Hierzu ist es z.B. möglich, daß die Kathodenhülse 52 einen Vorsprung 54 mit einem Außendurchmesser 55 aufweist, sodaß durch das Einführen der Kathodenhülse 52 eine exakte Positionierung an einer Außenfläche 56 des Isolierelementes 43 erzielt wird. Der Außendurchmesser 55 des Vorsprunges 54 entspricht dabei dem Außendurchmesser 46 des Isolierelementes 43, sodaß ein geradliniger Abschluß des Vorsprunges 54 mit dem Isolierelement 43 geschaffen wird.

Hierzu ist es z.B. möglich, daß in einer Stirnfläche 57 des Vorsprunges 54, die dem Bereich der Kathodenhülse 52 mit dem Außendurchmesser 53 zugeordnet ist, eine Dichtungsnut 58 mit einer in der Dichtungsnut 58 angeordneten Dichtung 59 angeordnet ist, wodurch durch das Zusammenfügen der beiden Bauelemente, insbesondere der Kathodenhülse 52 und dem Isolierelement 43 über die Dichtung 59 ein dichtender Abschluß erzielt wird.

Bei der Ausbildung der Kathodenhülse 52 ist es z.B. möglich, daß diese aus mehreren Teilen 60, 61, 62, die über Gewindeanordnungen zueinander fixiert werden können, gebildet wird. Hierzu ist es z.B. bei dem dargestellten Ausführungsbeispiel möglich, daß der Teil 60 der Kathodenhülse 52 in das Isolierelement 43 eingeschoben wird.

Die Kathodenhülse 52, insbesondere der Teil 60, weist an dem Vorsprung 54 in entgegengesetzter Richtung des Bereiches der Kathodenhülse 52 mit dem Außendurchmesser 53 einen Längsbereich 63 auf, an dem die weiteren Teile 61, 62 angeordnet sind. Der Längsbereich 63 hat einen Außendurchmesser 64, der kleiner ist als der Außendurchmesser 53 des vor dem Vorsprung 54 angeordneten Bereiches, sodaß eine entsprechende Querschnittsverminderung nach den Vorsprung 54 geschaffen wird.

Die weiteren Teile 61, 62 der Kathodenhülse 52 können beliebig ausgebildet werden, wobei jedoch darauf zu achten ist, daß der Außendurchmesser 64 durch die einzelnen Teile 61, 62 nicht vergrößert wird. Hierzu sind die einzelnen Teile 60 bis 62 derart ausgebildet, daß im Übergangsbereich zwischen den einzelnen Teilen 60 bis 62, jeweils eine Verjüngung angeordnet ist, wobei auf diese Verjüngung die weiteren Teile 60 bis 62 aufgesteckt bzw. aufgeschraubt werden können. Hierzu ist es möglich, daß im Übergangsbereich der einzelnen Teile 60 bis 62 zum Verbinden dieser Teile 60 bis 62 eine Gewindeanordnung eingesetzt werden kann.

Das Ausbilden der Kathodenhülse 52 aus mehreren einzelnen Teilen 60 bis 62 hat den Vorteil, daß dadurch unterschiedliche Materialien zur Bildung der Kathodenhülse 52 eingesetzt werden können. Hierzu ist es beispielsweise möglich, daß der Teil 62 aus Kupfer mit einem im Mittel des Teils 62 angeordneten Hafniumeinsatz bzw. Zirkoniumeinsatz gebildet sein kann. Die Verwendung eines Hafniumeinsatzes bzw. eines Zirkoniumeinsatzes bietet den Vorteil, daß sich der Einsatz schneller bzw. höher erwärmt, sodaß bei einer Zündung des Lichtbogens zwischen der Anode und der Kathode sich der Lichtbogen hauptsächlich vom Hafniumeinsatz bzw. Zirkoniumeinsatz zur Anode erstreckt. Der weitere Teil 61 kann beispielsweise aus Stahl gebildet werden, wodurch erreicht wird, daß eine geringe Wärmeabgabe an den Teil 60 durchgeführt wird, d.h., daß durch die Ausbildung der Kathodenhülse 52 aus unterschiedlichen Materialien eine gerichtete Wärmeabgabe der Kathodenhülse 52 erzielt wird. Der Teil 60 kann aus einem beliebigen Material, insbesondere Kupfer, gebildet werden. Durch die gerichtete Wärmeabgabe wird erreicht, daß ein entsprechend hoher Wärmeanteil am Teil 62 aufrecht erhalten bleibt und somit ein entsprechender Heizvorgang über die Kathodenhülse durchgeführt werden kann. Die einzelnen Teile 60 bis 62 werden aus elektrisch leitenden Materialien gebildet, sodaß beim Verbinden eines Teiles 60 bis 62, insbesondere des Teiles 60, mit der Leitung 9 beim Beaufschlagen mit Energie diese über die einzelnen Teile 60 bis 62 in den Endbereich der Kathodenhülse 52 fließen kann.

Durch die Anordnung des Isolierelementes 43 wird eine Isolierung der Kathodenhülse 52 gegenüber dem Aufnahmeteil 22 und der weiteren Bauelemente erreicht. Da der Außendurchmesser 46 des Isolierelementes 43 und der Außendurchmesser 55 des Vorsprungs 54 kleiner als der Durchmesser 27 der Bohrung 24 des Aufnahmeteils 22 ist, wird zwischen dem Aufnahmeteil 22 und dem Vorsprung 54 sowie dem Isolierelement 43 ein Luftspalt gebildet, sodaß in den Luftspalt, insbesondere über die Kathodenhülse 52 und das Isolierelement 43, eine Isolierhülse 65 eingeschoben werden kann, wodurch auch eine Isolierung des Vorsprunges 54 gegenüber dem Aufnahmeteil 22 durch die Isolierhülse 65 erreicht wird.

Hierzu ist die Isolierhülse 65 aus einem nicht leitenden Material ausgebildet. Die Isolierhülse 65 kann jene Form aufweisen, die die beiden einzelnen Bauelemente, nämlich das Isolierelement 43 und die Kathodenhülse 52, im Bereich des Aufnahmeteils 22 bzw. im zusammengebauten Zustand ausbilden. Selbstverständlich ist es möglich, daß im Verbindungsbereich zwischen dem Vorsprung 54 und dem Isolierelement 43 sowie der Isolierhülse 65 wiederum eine Gewindeanordnung angeordnet sein kann, wodurch ein Aufschrauben der Isolierhülse 65 auf die beiden Bauelemente ermöglicht wird.

Bei der Ausbildung der einzelnen Bauelemente des Brenners 6, insbesondere der Isolierhülse 65, der Kathodenhülse 52 und dem Isolierelement 43 ist darauf zu achten, daß bei der Anordnung in der Bohrung 24 des Aufnahmeteils 22 diese sich nicht über die gesamte Länge 51 der Bohrung 24 erstrecken, sodaß zwischen der Isolierhülse 65 und ein in die Bohrung 23 eingestecktes bzw. eingeschraubtes Übergangsstück 66 ein Kanal 67 ausgebildet wird. Durch die Ausbildung des Kanals 67 zwischen der Isolierhülse 65 und dem Übergangsstück 66 ist es nun möglich, daß bei Übereinstimmung der Einmündung der Bohrung 36 mit dem Kanal 67 die Flüssigkeit 8 über die Versorgungsleitung 7 durch die Bohrungen 35, 36 in den Kanal 67 einströmen kann.

Im Längsbereich 63 der Kathodenhülse 52 erstreckt sich die Isolierhülse 65 über einen Teilbereich der Gesamtlänge der Kathodenhülse 52, sodaß im Endbereich 68 des Brenners 6 die Kathodenhülse 52 freiliegt bzw. gegenüber den weiteren Bauelementen nicht isoliert ist.

Das in die Bohrung 23 eingeführte Übergangsstück 66 ist derartig ausgebildet, daß dessen Außendurchmesser 69 dem Durchmesser 26 der Bohrung 23 entspricht. Hierzu ist es von Vorteil, daß an den Berührungsflächen des Übergangsstückes 66 mit der Bohrung 23 ein Gewinde angeordnet ist, sodaß ein Einschrauben des Übergangsstückes 66 in die Bohrung 23 möglich ist. Weiters weist das Übergangsstück 66 einen Vorsprung 70 auf. Der Vorsprung 70 ragt in die Bohrung 24 des Aufnahmeteils 22, sodaß eine Verjüngung des Kanals 67 gegeben ist. Vorteilhaft ist dabei, daß durch die Ausbildung des Vorsprunges 70 auf die Breite bzw. den Querschnitt des Kanals 67 Einfluß genommen werden kann, d.h., daß bei größerer Ausbildung des Vorsprunges 70 der Kanal 67 verjüngt wird, sodaß weniger Flüssigkeit 8 über die Bohrung 36 in den Kanal 67 strömen kann und die Strömungsgeschwindigkeit der Flüssigkeit 8 erhöht wird. Durch die Ausbildung des Vorsprunges 70 wird weiters erreicht, daß eine Anpassung an die Durchflußmenge der Flüssigkeit 8 durch den Brenner 6 möglich ist. Hierzu ist es möglich, daß durch einfaches Austauschen des Übergangsstückes 66 mit dem Vorsprung 70 eine rasche Anpassung an die Breite bzw. an den Querschnitt des Kanals 67 für die Durchflußmenge bzw. Strömungsgeschwindigkeit der Flüssigkeit 8 möglich ist. Weiters weist in entgegengesetzter Richtung des Vorsprunges 70 das Übergangsstück 66 einen weiteren Vorsprung 71 auf. Dieser Vorsprung 71 dient dazu, daß in den Vorsprung 71 weitere Bauelemente des Brenners 6 mit dem Übergangsstück 66 verbunden werden können bzw. durch den Vorsprung 71 geführt werden.

Das Übergangsstück 66 weist eine in Längsrichtung der Längsmittelachse 39 des Brenners 6 verlaufende Bohrung 72 auf. Die Bohrung 72 hat dabei einen Durchmesser 73, der größer ist als ein Außendurchmesser 74 der Isolierhülse 65 im Längsbereich 63 der Kathodenhülse 52, wodurch ein entsprechender Luftspalt zwischen der Isolierhülse 65 und dem Übergangsstück 66 geschaffen wird.

In der Bohrung 72 des Übergangsstückes 66 ist ein Gewinde 75 angeordnet. Das Gewinde 75 weist beispielsweise eine Steigung zwischen 1 mm und 10 mm, bevorzugt 3 mm bis 6 mm auf. Durch die Ausbildung des Gewindes 75 wird erreicht, daß zwischen einzelnen Gewindegängen 76 ein Führungskanal 77 für die Flüssigkeit 8 geschaffen wird.

Die Ausbildung des Führungskanals 77 ist insofern möglich, da durch Anordnung eines weiteren Bauelements, nämlich einer Hülse 78, die über die Isolierhülse 65 aufgesteckt wird, der Zwischenraum bzw. Luftspalt zwischen der Isolierhülse 65 und dem Gewinde 75, insbesondere den Gewindegängen 76, ausgefüllt wird, sodaß der entsprechende Führungskanal 77 durch die Gewindegänge 76 gebildet wird.

Durch die Ausbildung des Übergangsstückes 66 mit dem in der Bohrung 72 angeordneten Gewinde 75 bzw. dem Führungskanal 77 wird weiters erreicht, daß eine Verbindung zwischen dem Gewinde 76 und dem Kanal 67 durch den Führungskanal 77 geschaffen wird, sodaß beim Eindringen der Flüssigkeit 8 in den Kanal 67 eine Weiterleitung der Flüssigkeit 8 über den Führungskanal 77 durch die Gewindegänge 76 erzielt wird.

Selbstverständlich ist es möglich, daß in der Bohrung 72 kein Gewinde 75 angeordnet wird, sodaß ein Luftspalt bzw. ein Kanal zwischen dem Übergangsstück 66 und der Hülse 78 geschaffen wird, wodurch es wiederum zu der Ausbildung des Führungskanals 77 kommt und somit eine Weiterleitung der Flüssigkeit 8 sichergestellt ist.

Im Endbereich 68 des Brenners 6 weist die Hülse 78 eine umlaufende Nut 80 auf. Die Nut 80 ist weiters über radial zur Längsmittelachse 39 des Brenners 6 angeordnete Bohrungen 81 durchsetzt, sodaß eine Verbindung der Nut 80 zu einer in der Hülse 78 angeordnete Bohrung 82 erreicht wird. Die Nut 80 wird in jenem Bereich angeordnet, in dem die Isolierhülse 65 beim Abdecken der Kathodenhülse 52 endet, d.h., daß die Bohrungen 81 in jenen Bereich münden, in dem die Kathodenhülse 52 gegenüber den weiteren Bauelementen des Brenners 6 frei liegt und somit diese nicht mehr über die Isolierhülse 65 nach außen elektrisch isolierend abgeschirmt ist. Hierzu sind die radial um die Längsmittelachse 39 verlaufenden Bohrungen 81 derartig ausgebildet, daß diese zwischen dem Ende der Isolierhülse 65 und der freiliegenden Kathodenhülse 52 in einen Zwischenraum 83 einmünden.

Das Ende der Isolierhülse 65 kann beliebig ausgebildet werden. Es muß nur sichergestellt sein, daß der Austritt der Bohrung 81 in den Zwischenraum 83 möglich ist. Hierzu ist es z.B. möglich, daß die Isolierhülse 65 stufig im Endbereich 68 des Brenners 6 ausgebildet ist.

Weiters wird über die Hülse 78 ein Verdampfungselement 84 aufgeschoben. Das Verdampfungselement 84 weist über eine Länge 85 eine Bohrung 86 mit einem Durchmesser 87 auf. In der Bohrung 86 ist ein Gewinde 88 über die Länge 85 angeordnet. Das Gewinde 88 weist beispielsweise eine Steigung zwischen 1 mm und 10 mm, bevorzugt 3 mm bis 6 mm auf. Durch die Bildung eines Gewindeganges 89 des Gewindes 88 wird zwischen den einzelnen Gewindegängen 89 ein Fließkanal 90 gebildet. Der Durchmesser 87 der Bohrung 86 des Verdampfungselementes 84 ist gleich groß wie der Durchmesser 73 der Bohrung 72 des Übergangsstückes 66, sodaß ein fluchtender Übergang des Führungskanals 77 vom Übergangsstück 66 zum Fließkanal 90 des Verdampfungselementes 84 erreicht wird.

Durch die derartige Ausbildung des Verdampfungselementes 84 kann nun die Flüssigkeit 8 von der Versorgungsleitung 7 über die Bohrungen 35, 36 in den Kanal 67 einströmen, wobei anschließend die Flüssigkeit 8 über den Führungskanal 77 und dem Fließkanal 90 bis zur Nut 80 der Hülse 78 vorströmen kann. Die Flüssigkeit 8 strömt hierbei spiralenförmig, insbesondere tangential in Längsrichtung um die Längsmittelachse 39, durch die einzelnen Gewindegänge 76, 89 des Übergangsstückes 86 und des Verdampfungselementes 84. Von der Nut 80 kann die Flüssigkeit 8 bzw. das im Verdampfungselement 84 gebildete Gas 19 über die radial zur Längsmittelachse 39 angeordneten Bohrungen 81 in den Zwischenraum 83 zwischen der Hülse 78 und der Kathodenhülse 52 einströmen.

Durch die Ausbildung der Nut 80 in Richtung des Verdampfungselementes 84 wird erreicht, daß die Flüssigkeit 8 bzw. das im Verdampfungselement 84 gebildete Gas 19 sich gleichmäßig umlaufend in der Nut 80 verteilt, wodurch über die Bohrungen 81 ein gleichmäßiges Einströmen des Gases 19 in den Zwischenraum 83 erreicht wird.

Es kann nun gesagt werden, daß durch den definierten bzw. vorgegebenen Fließkanal 90, welcher in dem dargestellten Ausführungsbeispiel durch das Gewinde 88 gebildet wird, ein gleichmäßiges, tangentiales Verteilen des Gases 19 um die Längsmittelachse 39 des Brenners 6 geschaffen wird, sodaß beim Eintritt des Gases 19 in den Zwischenraum 83 dieses nicht durch die Lage des Brenners 6 bzw. das Schwerefeld der Erde beeinflußt wird, d.h., daß das Schwerefeld der Erde keinen Einfluß auf die einzelnen, im Brenner 6 befindlichen Medien oder Flüssigkeiten 8 bzw. Gase 19 ausübt, da die Flüssigkeit 8 mit Druck an den Brenner 6 befördert wird, sodaß durch das Einpressen der Flüssigkeit 8 und das anschließende Umwandeln der Flüssigkeit 8 in das Gas 19 ebenfalls ein entsprechender Druck der Medien, insbesondere der Flüssigkeit 8 und des Gases 19, im Inneren des Brenners 6 zustande kommt, sodaß bei Verwendung des Brenners 6 auf die Lage des Brenners 6 nicht Rücksicht genommen werden muß.

Das Verdampfungselement 84 ist im Endbereich 68 des Brenners 6 derartig ausgebildet, daß sich der Zwischenraum 83 bevorzugt in derselben Distanz um die Kathodenhülse 52 erstreckt. Hierzu weist das Verdampfungselement 84 eine weitere Bohrung 91 mit geringerem Durchmesser 92 auf.

Damit die Flüssigkeit 8 vom Innenraum des Brenners 6 nach außen, insbesondere in die Atmosphäre, ausströmen bzw. austreten kann, kann im Endbereich 68 des Brenners 6 in Form eines Einsteckstückes eine Anode 93 in dem Verdampfungselement 84 positioniert sein. Die Anode 93 weist dabei eine in Längsrichtung der Längsmittelachse 39 verlaufende Bohrung 94 mit einem Durchmesser 95 auf. Die Anode 93 wird bevorzugt aus einem gut elektrisch leitenden Material gebildet, wobei die Anode 93 in das Verdampfungselement 84 eingepreßt bzw. eingeschraubt werden kann. Selbstverständlich ist es möglich, daß bei Ausbildung des Verdampfungselementes 84 aus einem gut elektrisch leitenden Material dieses einteilig ausgebildet sein kann, sodaß die Bohrung 94 in dem Verdampfungselement 84 angeordnet ist und das Einsteckstück entfallen kann, wodurch das gesamte Verdampfungselement 84 die Anode 93 bildet.

Damit nunmehr der Brenner 6 mit Strom und Spannung versorgt werden kann, sind die einzelnen Bauelemente, die für die Stromführung benötigt werden, über die Leitungen 9, 10 mit dem Versorgungsgerät 1 verbunden, d.h., daß die Anode 93 - wie schematisch dargestellt - mit der Leitung 10 verbunden ist, wogegen die Kathodenhülse 52 über die Leitung 9 mit dem Versorgungsgerät 1 verbunden ist. Hierzu wird über die Kathodenhülse 52 das negative Potential geführt, wogegen an die Anode 91 das positive Potential angelegt wird, sodaß eine Zündung eines Lichtbogens 96 zwischen der Kathodenhülse 52 und der Anode 93 stattfinden kann, wodurch der Stromkreis geschlossen wird.

Damit, wie in Fig. 1 beschrieben, der Brenner 6 beispielsweise über den Kühlkreislauf 18 gekühlt werden kann, sind in der Kathodenhülse 52 jeweils für die Kühlleitungen 14, 15 Bohrungen 97, 98 angeordnet, wodurch im Inneren des Brenners 6 durch Einströmen der Kühlflüssigkeit der Kühlkreislauf 11 aufgebaut werden kann. Damit eine Kühlung des Brenners 6 durchgeführt werden kann, wird bei dem dargestellten Ausführungsbeispiel in die Bohrung 97 der Kathodenhülse 52 ein Einsatzstück in Form eines Rohres eingesetzt, wobei das Rohr mit der Kühlleitung 14 wasserdicht verbunden ist. Das Rohr weist im Endbereich eine Öffnung auf, sodaß durch Zufuhr der Kühlflüssigkeit über die Kühlleitung 14 dieses aus dem Rohr austreten kann und anschließend über die Bohrungen 97, 98 an die Kühlleitung 15 zurückfließen kann, sodaß der Kühlkreislauf 11 über die Kühlleitungen 14, 15 mit dem Versorgungsgerät 1 geschlossen ist. Selbstverständlich ist es möglich, daß der Brenner 6 auch ohne einen derartigen Kühlkreislaufes 11 ausgebildet werden kann. Hierbei erfolgt die Kühlung des Brenners 6 ausschließlich über die unter Druck zugeführte Flüssigkeit 8, welche über die Bohrungen 35, 36, den Kanal 67, den Führungskanal 77 und den Fließkanal 90 in den Brenner 6 einströmt und anschließend gasförmig vom Fließkanal 90 über den Zwischenraum 83 und die Bohrung 94 in die Atmosphäre ausströmt. Hierbei wird die Abfuhr der Wärme ausschließlich durch die unter Druck eingepreßte Flüssigkeit 8 bzw. das Gas 19 abgeführt, d.h., daß die Flüssigkeit 8 bzw. das Gas 19 durch die Kanäle bzw. Strömungskanäle des Brenners 6 hindurchströmt und somit eine Kühlung des Brenners 6 erzielt wird.

Selbstverständlich ist es möglich, daß die Ausbildung bzw. die Formgebung der einzelnen Bauelemente nicht auf das dargestellte Ausführungsbeispiel beschränkt ist. Weiters ist es auch möglich, daß bei dem dargestellten Ausführungsbeispiel der Brenner 6 bzw. die zusammengehörigen Bauelemente aus einem Stück gebildet werden können, wobei die Funktion der einzelnen Baugruppen bzw. Bauelemente zueinander den Brenner 6 ergeben. Hierzu ist darauf zu achten, daß die Kathodenhülse 52, insbesondere deren leitende Teile 60 bis 62, isoliert von den außen um die Kathodenhülse 52 verlaufenden Bauelementen, insbesondere die Anode 93, angeordnet werden, sodaß ein Stromübergang vor dem Endbereich 68 des Brenners 6 vermieden wird.

Weiters ist aus dem dargestellten Ausführungsbeispiel zu entnehmen, daß die einzelnen Bauelemente des Brenners 6 - wie sie zuvor beschrieben wurden - in dem gemeinsamen Schutzgehäuse 21, welches z.B. aus Kunststoff besteht und mit punktierten Linien dargestellt ist, eingebaut sein kann. Hierzu ist es möglich, daß das Schutzgehäuse 21 aus mehreren Teilen, die über Schnappverbindungen bzw. Schraubverbindungen verbunden werden, gebildet sein kann.

Damit die Flüssigkeit 8 von dem flüssigen Zustand in den gasförmigen Zustand umgewandelt werden kann, ist es möglich, daß an den Außenflächen des Verdampfungselementes 84 ein Heizelement 99 angeordnet ist. Das Heizelement 99 wird dabei vom Versorgungsgerät 1 mit Strom und Spannung versorgt, sodaß eine Erwärmung des Verdampfungselementes 84 und somit der in dem Fließkanal 90 fließenden Flüssigkeit 8 möglich ist.

Damit nunmehr ein Benutzer einen Wasserdampf-Schneidprozeß durchführen kann, muß der Brenner 6 vom Versorgungsgerät 1 mit Energie, insbesondere mit Strom und Spannung, versorgt werden, wobei gleichzeitig mit dem Versorgen des Brenners 6 mit Strom und Spannung der Brenner 6 mit der Flüssigkeit 8, insbesondere mit Wasser, versorgt wird. Die Versorgung des Brenners 6 mit der Flüssigkeit 8 erfolgt ausschließlich unter Druck, d.h., daß die Flüssigkeit 8 über einen entsprechenden Druck, insbesondere zwischen 1 bar und 10 bar, bevorzugt 3 bar bis 6 bar, an den Brenner 6 befördert wird, wodurch durch die Zufuhr der Flüssigkeit 8 unter Druck diese in die im Brenner 6 angeordneten Kanäle gepreßt wird.

Damit die Flüssigkeit 8 unter Druck an den Brenner 6 befördert werden kann, ist es beispielsweise möglich, daß im Versorgungsgerät 1 eine Pumpenvorrichtung zum Fördern der Flüssigkeit 8 unter Druck an den Brenner 6 bzw. weitere aus dem Stand der Technik bekannte Fördermittel zum Befördern der Flüssigkeit 8 unter Druck über die Versorgungsleitung 7 eingesetzt werden können.

Selbstverständlich ist es möglich, daß anstelle einer Vorrichtung zum Fördern der Flüssigkeit 8 der Behälter 5 unter Druck gesetzt wird, sodaß ein selbständiges Einpressen der Flüssigkeit 8 in den Brenner 6 gewährleistet ist. Es ist auch möglich, daß beispielsweise der Behälter 5 bzw. direkt der Brenner 6 oder über das Versorgungsgerät 1 die Versorgungsleitung 7 mit einer unter Druck stehenden Wasserleitung verbunden wird, wobei jedoch sichergestellt sein muß, daß der Druck in der Wasserleitung eine entsprechende Höhe aufweist, sodaß ein automatisches oder selbständiges Fördern der Flüssigkeit 8 zum Brenner 6 gegeben ist. Bei derartigen Ausbildungen, wo die Flüssigkeit 8 unter Druck an das Versorgungsgerät 1 bzw. an den Brenner 6 befördert wird, ist es von Vorteil, daß ein Druckregelungsventil im Versorgungsgerät 1 bzw. im Brenner 6 eingebaut ist, sodaß eine Regelung des Druckes von der Steuervorrichtung 3 erfolgen kann. Wird jedoch ein Druckregelgerät, wie beispielsweise eine Pumpvorrichtung oder eine Pumpe, verwendet, so kann die Steuerung des Druckes für die Flüssigkeit 8 über die Drehzahl der Pumpe erfolgen. Diese Steuerung wird wiederum von der Steuervorrichtung 3 durchgeführt.

Bei dem dargestellten Ausführungsbeispiel weist das Versorgungsgerät 1 beispielsweise eine Pumpvorrichtung zum Befördern der Flüssigkeit 8 unter Druck vom Versorgungsgerät 1 zum Brenner 6 auf. Beim Aktivieren des Versorgungsgerätes 1 wird der Brenner 6 durch Aktivieren der Pumpenvorrichtung im Versorgungsgerät 1 über die Versorgungsleitung 7 mit der im Behälter 5 angeordneten Flüssigkeit 8 versorgt. Gleichzeitig wird von der Stromquelle 2 der Brenner 6 mit Energie beaufschlagt, d.h., daß an die Kathodenhülse 52 und an die Anode 93 Energie angelegt wird, sodaß durch Zünden des Lichtbogens 96 ein Stromkreis über dem Brenner 6 aufgebaut werden kann.

Damit der Lichtbogen 96 im Brenner 6 zwischen der Kathodenhülse 52, insbesondere zwischen einer vor der Anode 93 angeordneten Kathode 100 und der Anode 93 gezündet werden kann, ist es beispielsweise möglich, daß das Versorgungsgerät 1 einen Hochfrequenzgenerator zum Aussenden von Hochfrequenzsignalen aufweist. Die Steuervorrichtung 3 aktiviert dabei den Hochfrequenzgenerator, sodaß auf die Energieversorgung zum Versorgen des Brenners 6 ein Hochfrequenzsignal überlagert wird. Durch das Überlagern bzw. Aufmodulieren des Hochfrequenzsignales auf die Energieversorgung des Brenners 6 wird nunmehr erreicht, daß aufgrund des Abstandes bzw. des Zwischenraumes 83 zwischen der Kathode 100 und der Anode 93 eine Zündung des Lichtbogens 96 zustande kommt. Das Zündverfahren bzw. das Überlagern der Energieversorgung mit dem Hochfrequenzsignal ist bereits aus der Schweißtechnik bekannt und wird für ein derartiges Wasserdampf-Schneidverfahren eingesetzt.

Die Zündung des Lichtbogens 96 erfolgt dabei im Bereich der Kathode 100, also im Endbereich der Kathodenhülse 52. Der Lichtbogen 96 baut sich dabei an einer beliebigen Stelle der frei liegenden Kathodenhülse 52 und des Verdampfungselementes 84 über dem Zwischenraum 83 auf, d.h., daß der Lichtbogen 96 durch einen Überschlag von dem Teil 62 zum Verdampfungselement 84 gebildet wird, wodurch ein Stromfluß über den Brenner 6 erzielt wird. Bei länger andauernder Versorgung des Brenners 6 mit Energie wandert der Lichtbogen 96 aufgrund der Strömung des Gases 19 in den Bereich der eingesetzten Anode 93 nach vorne, wodurch im Bereich der in Längsrichtung der Längsmittelachse 39 verlaufenden Bohrung 94, aus der das Gas 19 ausströmt, der Lichtbogen 96 aufrechterhalten bleibt. Durch die Ausbildung der Kathode 100 mit einem Hafniumeinsatz bzw. Zirkoniumeinsatz oder anderen Einsätzen wird erreicht, daß sich der Hafniumeinsatz bzw. der Zirkoniumeinsatz gegenüber dem weiteren Material der Kathode 100, insbesondere Kupfer, höher erwärmt als das Kupfer, sodaß bei Vorbewegung des Lichtbogens 96 in den Bereich des Hafniumeinsatzes bzw. Zirkoniumeinsatzes der Lichtbogen 96 auf den Hafniumeinsatz bzw. Zirkoniumeinsatz übergeht und anschließend durch die höhere Wärme im Hafniumeinsatz bzw. Zirkoniumeinsatz an diesem verweilt und somit aufrecht erhalten bleibt.

Damit jedoch der Lichtbogen 96 gezündet werden kann, wird die vom Versorgungsgerät 1 zum Brenner 6 beförderte Flüssigkeit 8 vor der Zündung des Lichtbogens 96 von ihrem flüssigen Zustand in den gasförmigen Zustand zur Bildung des Gases 19 umgewandelt. Dies ist insofern von Vorteil, da dadurch die Zündung des Lichtbogens 96 zwischen der Kathode 100 und der Anode 93 erleichtert wird. Hierzu wird die Flüssigkeit 8 unter Druck vom Versorgungsgerät 1 über die Versorgungsleitung 7 zum Brenner 6 befördert und anschließend über das Heizelement 99 soweit erhitzt, daß ein Übergang vom flüssigen Zustand in den gasförmigen Zustand im Verdampfungselement 84 eintritt. Hierzu tritt die Flüssigkeit 8 über die Bohrungen 35, 36 in den Kanal 67 des Brenners 6 ein. Anschließend strömt die Flüssigkeit 8 über das Gewinde 75, 88 des Übergangsstückes 66 und des Verdampfungselementes 84 in den Bereich der Kathode 100, d.h., daß die Flüssigkeit 8 vom Kanal 67 über den Führungskanal 77 und den Fließkanal 90, der durch die einzelnen Gewindegänge 76 und 89 gebildet wird, in Richtung der umlaufenden Nut 80 strömt. Hierbei wird im Bereich des Verdampfungselementes 84 durch Beaufschlagung des Heizelementes 99 mit Energie die Flüssigkeit 8 im Fließkanal 90 soweit erhitzt, daß ein Übergang vom flüssigen Zustand in den gasförmigen Zustand vor der umlaufenden Nut 80 bewirkt wird, sodaß das Gas 19 über den Fließkanal 90, die umlaufende Nut 80 und die radial zur Längsmittelachse 39 angeordneten Bohrungen 81 in den Zwischenraum 83 einströmen kann. Von dort strömt das Gas 19 um die Kathode 100 bzw. die Kathodenhülse 52 zur Bohrung 94 der Anode 93, von der aus das Gas 19 aus dem Brenner 6 ausströmen kann.

Es besteht nun die Möglichkeit, daß vor dem Zünden des Lichtbogens 96 unterschiedliche Verfahren zum Vergasen der Flüssigkeit 8 eingesetzt werden können. Hierzu ist es beispielsweise möglich, daß vor der Förderung der Flüssigkeit 8 zum Brenner 6 von der Steuervorrichtung 3 das Heizelement 99 derart angesteuert wird, daß dieses das Verdampfungselement 84 auf eine entsprechende Temperatur aufheizt, sodaß nach Ablauf beispielsweise einer voreinstellbaren Zeitdauer von der Steuervorrichtung 3 die Pumpvorrichtung im Versorgungsgerät 1 zum Befördern der Flüssigkeit 8 unter Druck an den Brenner 6 gestartet wird. Durch die Vorerwärmung des Brenners 6 wird nun erreicht, daß beim Einpressen der Flüssigkeit 8 in den Brenner 6, insbesondere in die Kanäle, diese bereits auf eine entsprechend hohe Temperatur aufgeheizt sind, sodaß beim Durchströmen der Flüssigkeit 8 diese auf eine entsprechende Temperatur erwärmt wird, wodurch eine Vergasung der Flüssigkeit 8 zustande kommt und somit innerhalb der Kanäle die Flüssigkeit 8 in das Gas 19 umgewandelt wird. Da jedoch die Förderung der Flüssigkeit 8 unter Druck erfolgt, weisen die einzelnen Kanäle im Brenner 6 ebenfalls einen entsprechenden Druck auf, sodaß eine Strömungsrichtung für die Flüssigkeit 8 bzw. das Gas 19 im Inneren des Brenners 6 vorgegeben wird. Hierdurch strömt das Gas 19 von dem Fließkanal 90 über die Nuten 80 in den Zwischenraum 83, wodurch anschließend nach Ablauf der voreingestellten Zeitdauer die Steuervorrichtung 3 die Zündung des Lichtbogens 96 durch Aktivieren des Hochfrequenzgenerators zündet. Durch die Zündung des Lichtbogens 96 wird nun erreicht, daß eine entsprechende weitere Erwärmung bzw. Ionisierung des Gases 19 über den Lichtbogen 96 erfolgt, sodaß das Gas 19 mit hoher Temperatur aus dem Brenner 6 austreten kann. Gleichzeitig wird durch das Zuführen der Flüssigkeit 8 unter Druck bzw. durch das unter Druck ausströmende Gas 19 erreicht, daß der Lichtbogen 96, der an einer beliebigen Stelle zwischen der Anode 93 bzw. dem Verdampfungselement 84 und der Kathode 100 bzw. der Kathodenhülse 52 gezündet wurde, aufgrund der Strömung des Gases 19 in Richtung der Bohrung 94 wandert. Hierdurch wird erreicht, daß im Endbereich 68 eine stärkere Erwärmung des Brenners 6 über den Lichtbogen 96 zustande kommt, sodaß sichergestellt ist, daß das Gas 19 mit einer entsprechend hohen Temperatur ausströmt.

Nachdem eine entsprechende Zündung des Lichtbogens 96 durchgeführt wurde und sich die einzelnen Bauelemente des Brenners 6 aufgrund des gezündeten Lichtbogens und somit der daraus entstehenden Wärme auf eine entsprechende Temperatur erhitzt haben, wird von der Steuervorrichtung 3 das Heizelement 99 deaktiviert, sodaß keine weitere Beheizung des Brenners 6 über das Heizelement 99 erfolgt. Die Vergasung der Flüssigkeit 8 im Inneren des Verdampfungselementes 84, insbesondere im Fließkanal 90, wird nunmehr derartig erreicht, daß durch die Wärmeabgabe des Lichtbogens 96 im Inneren des Brenners 6 die anschließenden Bauelemente, insbesondere das Verdampfungselement 84, auf einer entsprechenden Temperatur aufgewärmt bzw. gehalten werden, sodaß eine automatische Verdampfung der Flüssigkeit 8 sichergestellt ist. Damit jedoch der Brenner 6 durch die Wärmeabgabe des Lichtbogens 96 nicht überhitzt wird, ist es nun möglich, daß die Steuervorrichtung 3 den Kühlkreislauf 11 aktivieren kann bzw. daß bei Verwendung eines Brenners 6 ohne Kühlkreislauf 11 die Kühlung durch Erhöhung der Menge der Flüssigkeit 8 erfolgt, d.h., daß dadurch bei der Förderung der Flüssigkeit 8 durch die einzelnen Kanäle so viel Wärme von den Bauelementen über die Flüssigkeit 8 aufgenommen wird, wodurch eine konstante Temperatur des Brenners 6 erzielt wird.

Eine weitere Möglichkeit zur Bildung des Gases 19 vor der Zündung des Lichtbogens 96 liegt darin, daß vor der Zündung des Lichtbogens 96 bzw. vor der Energiezuführung an die Anode 93 und Kathode 100 die Steuervorrichtung 3 die Pumpenvorrichtung aktiviert, sodaß die Flüssigkeit 8 an den Brenner 6 unter Druck befördert wird. Anschließend strömt die Flüssigkeit 8 unter Druck durch die einzelnen Strömungskanäle hindurch, wobei die Flüssigkeit 8 in den Zwischenraum 83 eintritt und über die Bohrung 84 in die Atmosphäre übergeht. Gleichzeitig bzw. nach Ablauf einer gewissen Zeitdauer aktiviert die Steuervorrichtung 3 das Heizelement 99, sodaß die vorbeiströmende Flüssigkeit 8 durch Erwärmen des Verdampfungselementes 84 erhitzt wird, sodaß nach Ablauf einer voreinstellbaren Zeitdauer eine Vergasung der Flüssigkeit 8 zustande kommt. Nachdem sichergestellt ist, daß die Flüssigkeit 8 in das Gas 19 im Brenner 6 umgewandelt wird, aktiviert die Steuervorrichtung 3 die Stromquelle 2, sodaß diese die Anode 93 und Kathode 100 mit Energie versorgt. Gleichzeitig wird von der Steuervorrichtung 3 der Hochfrequenzgenerator gestartet, sodaß durch Überlagern des Hochfrequenzimpulses eine Zündung im Zwischenraum 83 zwischen der Anode 93 bzw. des Verdampfungselementes 84 und der Kathode 100 erfolgt. Nachdem der Lichtbogen 96 gezündet wurde, erfolgt wiederum eine Erwärmung der einzelnen Bauelemente über den Lichtbogen 96, sodaß nach Ablauf einer voreinstellbaren Zeitdauer bzw. nach entsprechender Aufheizung der einzelnen Bauelemente die Steuervorrichtung 3 das Heizelement 99 deaktivieren kann und eine selbständige Vergasung der Flüssigkeit 8 im Verdampfungselement 84 erreicht wird.

Durch die Ausbildung des Führungskanals 77 und des Fließkanals 90 in Form eines Gewindes 75,88 wird erreicht, daß eine Zwangsführung bzw. eine definierte Führung der unter Druck stehenden Flüssigkeit 8 durch die einzelnen Gewindegänge 76, 89 bewirkt wird, wodurch die Flüssigkeit 8 tangential um die Hülse 78 strömt. Dadurch wird bewirkt, daß eine Verlängerung des Heizweges im Bereich des Verdampfungselementes 84 erzielt wird, sodaß sichergestellt ist, daß die Flüssigkeit 8 in den gasförmigen Zustand umgewandelt wird. Weiters wird in vorteilhafter Weise durch die Ausbildung des Fließkanals 90 erreicht, daß eine Verwendung des Brenners 6 in jeder beliebigen Lage möglich ist, d.h., daß in jeder beliebigen Lage des Brenners 6 eine gleichmäßige Förderung der Flüssigkeit 8 erzielt wird und ein gesichertes Umwandeln der Flüssigkeit 8 von ihrem flüssigen Zustand in den gasförmigen Zustand bewirkt wird. Weiters wird durch die Zuführung der Flüssigkeit 8 unter Druck erreicht, daß in den einzelnen Kanälen bzw. Strömungskanälen des Brenners 6 ebenfalls ein Druck aufgebaut bzw. der Druck beibehalten wird, sodaß der Benutzer immer im Endbereich 68 des Brenners 6 das ausströmende Gas 19 über die Bohrung 94 zur Verfügung hat. Selbstverständlich ist es möglich, daß die einzelnen Kanäle bzw. Strömungskanäle, wie der Führungskanal 77 und der Fließkanal 90, mit einem Doppelgewinde ausgeführt sein können. Es ist auch möglich, daß anstelle des angeordneten Gewindes 75, 88 die Führungskanäle 77 und der Fließkanal 90 durch einfache Längsschlitze bzw. Rillen im Verdampfungselement 84 gebildet sein können. Es ist auch möglich, daß der Führungskanal 77 und der Fließkanal 90 in Form einer umlaufenden Nut um die Hülse 78 ausgebildet wird.

Strömt nunmehr das Gas 19 von der Bohrung 94 aus der Anode 93 bzw. aus dem Verdampfungselement 84 heraus und hat der Lichtbogen 96 im Inneren des Brenners 6 gezündet, so wird das Gas 19 auf eine entsprechend hohe Temperatur durch die abgegebene Wärme des Lichtbogens 96 aufgeheizt, sodaß ein Wasserdampf-Schneidverfahren durchgeführt werden kann, d.h., daß das Gas 19 mit einer sehr hohen Temperatur aus der Anode 93 bzw. aus dem Verdampfungselement 84 austritt, sodaß durch die hohe Temperatur des Gases 19 der Benutzer des Brenners 6 ein Schneidverfahren, wie sie bereits aus dem Stand der Technik, beispielsweise durch die Plasma-Schneidverfahren, bekannt sind, durchführen kann.

Bei einer derartigen Ausbildung des Brenners 6 für ein Schneidverfahren zum Durchtrennen bzw. Aufschmelzen des Wertstückes 20 werden wesentliche Vorteile erzielt. Hierzu ist es nicht notwendig - wie es bei den üblichen Schneidverfahren der Fall ist -, daß das Werkstück 20 mit einem Potential der Energieversorgung verbunden werden muß, sondern, daß der Lichtbogen 96 im Inneren des Brenners 6 gezündet wird, sodaß am Werkstück 20 keinerlei Energie bzw. kein Potential angelegt werden muß, d.h., daß das Werkstück 20 potentialfrei ist und der Stromkreis im Inneren des Brenners 6 geschlossen wird.

Damit der Druck bzw. eine Dosierung der Flüssigkeit 8 zum Brenner 6 geregelt werden kann, ist beispielsweise im Versorgungsgerät 1 die Pumpvorrichtung angeordnet, d.h., daß bei Benötigung von einer größeren Flüssigkeitsmenge die Pumpvorrichtung beispielsweise mit mehr Energie beaufschlagt wird, sodaß die Drehzahl der Pumpvorrichtung erhöht wird und somit der Druck in der Versorgungsleitung 7 ebenfalls erhöht wird, wodurch mehr Flüssigkeit 8 zum Brenner 6 bzw. in dem Kanal 67 eingepreßt bzw, eingedrückt wird. Die Dosierung der Flüssigkeit 8 kann vom Benutzer am Versorgungsgerät 1 eingestellt werden. Es ist dabei möglich, daß die Flüssigkeit 8 mit einem Druck zwischen 1 bar und 10 bar, bevorzugt zwischen 3 bar und 6 bar, an den Brenner 6 befördert wird. Weiters ist es möglich, daß bei Verwendung eines Druckbehälters anstelle des Behälters 5 oder beim Verbinden der Versorgungsleitung 7 mit einer unter Druck stehenden Förderleitung einer Flüssigkeit 8 ein Druckregelventil eingesetzt wird, sodaß durch Ansteuerung von der Steuervorrichtung 3 der Druck über das Druckregelventil geregelt werden kann.

Da das Gas 19 im Brenner 6 durch die Zündung des Lichtbogens 96 auf eine entsprechend hohe Temperatur aufgeheizt wird, erhöht sich die Temperatur der einzelnen Bauelemente im Brenner 6. Dies kann soweit führen, daß bei längeren Schneidprozessen der Benutzer den Brenner 6 nicht mehr in den Händen halten kann, da der Brenner 6 durch das Gas 19 auf eine entsprechend hohe Temperatur aufgeheizt wird. Um dies zu vermeiden, ist es möglich, daß von der Steuervorrichtung 3 der Kühlkreislauf 18 gestartet wird, d.h., daß über die Kühlleitungen 14, 15 eine Kühlflüssigkeit, insbesondere Wasser, an den Brenner 6 gepumpt wird, sodaß im Inneren des Brenners 6 über die in der Kathodenhülse 52 angeordneten Bohrungen 97, 98 ein Kühlkreislauf 18 im Inneren des Brenners 6 aufgebaut werden kann. Der Kühlkreislauf 11 kann aus jedem beliebigen aus dem Stand der Technik bekannten Verfahren zum Kühlen eines Brenners 6 bzw. von der nahe kommenden Schweißtechnologie zum Kühlen eines Schweißbrenners gebildet werden.

Es ist auch möglich, daß bei entsprechender Dimensionierung der einzelnen Bauelemente und der Förderung der Flüssigkeit 8 der Kühlkreislauf 11 entfallen kann, sodaß die Kühlung des Brenners 6 über die Flüssigkeit 8 bzw. durch die Atmosphäre um den Brenner 6 erfolgt. Selbstverständlich ist es auch möglich, daß der Kühlkreislauf 11 diskontinuierlich eingesetzt werden kann, d.h., daß der Kühlkreislauf 11 nur dann gestartet wird, wenn die Temperatur des Brenners 6 über einen voreinstellbaren Temperaturwert ansteigt. Das Überwachen der Temperatur des Brenners 6 kann beispielsweise durch ein temperaturabhängiges Bauelement erfolgen, welches mit der Steuervorrichtung 3 verbunden ist, sodaß durch Vergleich mit einer voreinstellbaren Solltemperatur die Steuervorrichtung 3 den Kühlkreislauf 11 aktivieren bzw. deaktivieren kann. Hierzu ist es auch möglich, daß von der Steuervorrichtung 3 durch einen Drucksensor die Förderung der Flüssigkeit 8 an den Brenner 6 überwacht werden kann, sodaß bei Abfall des Druckes der Flüssigkeit 8 eine entsprechende Regelung, insbesondere eine Druckerhöhung, durchgeführt werden kann, bzw. daß die Förderung der Flüssigkeit 8 unterbrochen wird und gleichzeitig die Energiezufuhr über die Leitungen 9, 10 an den Brenner 6 deaktiviert wird.

Damit eine definierte Temperaturführung zur Aufrechterhaltung des Lichtbogens 96 an der Kathodenhülse 52 ermöglicht wird, wird die Kathodenhülse 52, die aus den Teilen 60 bis 62 gebildet wird, aus unterschiedlichen Materialien aufgebaut, wodurch eine gerichtete Führung der Wärme über die einzelnen Teile 60 bis 62 erzielt wird. Durch eine derartige Ausbildung der Kathodenhülse 52 wird nun in vorteilhafter Weise erreicht, daß die Abfuhr der Wärme von der Kathode 100, insbesondere dem Teil 62, gering gehalten wird, wodurch der Teil 62 eine entsprechende Temperatur aufweist und somit der Lichtbogen 96 aufrecht erhalten bleibt, d.h., daß durch eine geringe Wärmeabfuhr vom Teil 62 zum Teil 60 der Teil 62 auf eine entsprechend hohe Temperatur durch die Wärmeabgabe des Lichtbogens 96 aufgeheizt wird, und somit ein stabiler Lichtbogen 96 zwischen der Anode 93 und der Kathode 100 gebildet werden kann. Durch die geringe Wärmeabfuhr von der Kathode 100 in Richtung des Teils 60 wird weiters erreicht, daß auch die umliegenden Bauelemente, wie das Verdampfungselement 84 sowie der Zwischenraum 83, auf eine entsprechende Temperatur aufgeheizt bzw. konstant gehalten werden können.

Durch eine derartige Ausbildung des Brenners 6 bzw. die Ausbildung des Führungskanals 77 und des Fließkanals 90 tangential bzw. spiralenförmig um eine Achse, insbesondere um die Längsmittelachse 39 des Brenners 6, wird in vorteilhafter Weise erreicht, daß im Verdampfungselement 84 eine gleichmäßige Verdampfung der Flüssigkeit 8 stattfinden kann, wobei hierdurch ein gleichmäßiges Strömen des Gases 19 zur Bohrung 94 erreicht wird, sodaß ein Abreißen des Lichtbogens 96 verhindert wird. Ein weiterer Vorteil einer derartigen Ausbildung der Kanäle bzw. Strömungskanäle, insbesondere des Führungskanals 77 und des Fließkanals 90, in Form von Rillen, Nuten, Einbuchtungen usw. liegt darin, daß die durch die Vergasung der Flüssigkeit 8 anfallenden Siederückstände vom Benutzer mechanisch entfernt werden können, sodaß eine lange Lebensdauer des Brenners 6 gewährleistet ist.

Selbstverständlich ist es möglich, daß bei dem dargestellten Brenner 6 die einzelnen Strömungskanäle, insbesondere der Kanal 67, der Führungskanal 77 oder der Fließkanal 90, eine entsprechende Vorrichtung aufweisen, mit der eine Querschnittsveränderung des Strömungskanals durchgeführt werden kann, sodaß die Fließgeschwindigkeit der Flüssigkeit 8 bzw. des Gases 19 im Inneren des Brenners 6 verändert werden kann. Hierzu ist es beispielsweise möglich, daß über eine Ringanordnung der Benutzer von außen durch Drehen des Ringes eine Querschnittsverminderung durchführen kann.

Die Steuerung des Brenners 6, insbesondere der Flüssigkeitsmenge bzw. der Energiemenge, kann, wie bereits zuvor beschrieben, durch den Benutzer vom Versorgungsgerät 1 aus geregelt werden. Hierzu ist es beispielsweise möglich, daß die Flüssigkeitsmenge proportional zur Energiemenge von der Steuervorrichtung 3 geregelt wird, d.h., daß durch einfaches Einstellen, beispielsweise der Energieversorgung des Brenner 6, insbesondere der Stromhöhe, von der Steuervorrichtung 3 die dazugehörige Flüssigkeitsmenge berechnet wird und somit die einzelnen Komponenten zur Förderung der Flüssigkeit 8, insbesondere bei dem dargestellten Ausführungsbeispiel die Pumpvorrichtung mit den entsprechend berechneten Werten, eine Ansteuerung durchführen kann bzw. können. Hierzu ist es auch möglich, daß weitere aus dem Stand der Technik bekannte Elemente zur Regelung von Flüssigkeiten 8 bzw. von Energie, insbesondere Strom und Spannung, eingesetzt werden können. Es ist beispielsweise möglich, daß im Brenner 6 ein Temperaturfühler zum Überwachen der Temperatur der einzelnen Bauelemente bzw. eines bestimmten Bauelementes oder der Gastemperatur oder anderer Komponenten angeordnet sein kann.

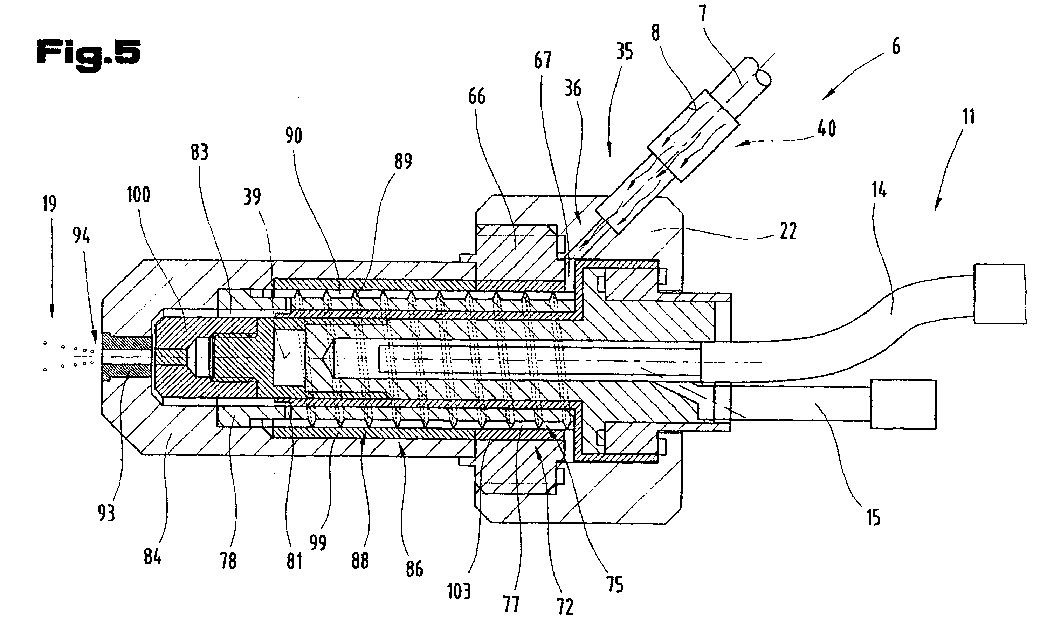

In Fig. 5 ist ein weiteres Ausführungsbeispiel des Brenners 6 mit den einzelnen Bauelementen, wie sie in den Figuren 2 bis 4 beschrieben sind, dargestellt, wobei für die selben Bauelemente die selben Bezugszeichen verwendet werden.

Die Versorgung des Brenners 6 mit der unter Druck stehenden Flüssigkeit 8 aus dem Behälter 5 des Versorgungsgerätes 1 erfolgt wiederum über die Bohrungen 35, 36 des Aufnahmeteils 22, wobei die Flüssigkeit 8 anschließend über den Kanal 67, den Führungskanal 77 und den Fließkanal 90 zu den radial um die Längsmittelachse 39 verlaufenden Bohrungen 81 der Hülse 78 in den Zwischenraum 83 strömt. Im Inneren des Brenners 6, insbesondere im Fließkanal 90, erfolgt eine Zustandsänderung der Flüssigkeit 8 in das Gas 19. Das Gas 19 kann über die Anode 93, insbesondere durch die Bohrung 94 der Anode 93, vom Innenraum des Brenners 6 nach außen in die Atmosphäre austreten.

Der Unterschied zu dem in den Fig. 2 bis 4 dargestelltem Ausführungsbeispiel des Brenners 6 liegt nun darin, daß das Gewinde 88 des Verdampfungselementes 84 nicht mehr am Verdampfungselement 84 angeordnet ist, sondern daß das Gewinde 88 zur Bildung des Fließkanals 90 und des Führungskanals 77 an der Außenfläche der Hülse 78 angeordnet ist, wobei an der Hülse 78 ein Außengewinde mit dem Gewindegang 89 angeordnet ist. Durch die Ausbildung der Steigung des Gewindes 88 von bevorzugt 1 mm bis 10 mm wird in den Zwischenräumen zwischen den einzelnen Gewindegängen 89 der Fließkanal 90 bzw. der Führungskanal 77 für die Flüssigkeit 8 gebildet.

Damit jedoch ein entsprechender Fließkanal 90 bzw. Führungskanal 77 geschaffen werden kann, weisen die weiteren Bauelemente, insbesondere das Verdampfungselement 84 und das Übergangsstück 66 nunmehr eine plane Oberfläche, die mit dem Gewinde 88 abschließt, auf, sodaß durch das Überstülpen der beiden Bauelemente über das Gewinde 88 ein Abschluß zwischen den einzelnen Bauelementen geschaffen wird und somit eine entsprechende Ausbildung des Fließkanals 90 bzw. des Führungskanals 77, wie in den Fig. 2 bis 4 beschrieben, erreicht wird.

Weiters ist es möglich, daß das Heizelement 99 zum Erwärmen der Flüssigkeit 8 nicht auf der Außenfläche des Verdampfungselementes 84 angeordnet ist, sondern, daß das Heizelement 99 im Inneren der Bohrung 86 des Verdampfungselementes 84 angeordnet ist, sodaß ein direkter Kontakt des Heizelementes 99 mit der Flüssigkeit 8 geschaffen wird. Weiters ist es möglich, daß ein weiteres Heizelement 103 in der Bohrung 72 des Übergangsstückes 66 angeordnet ist, sodaß beim Übertritt der Flüssigkeit 8 vom Kanal 67 in den Führungskanal 77 bereits eine Erwärmung über das Heizelement 103 durchgeführt werden kann.

Hierzu ist es möglich, daß die Heizelemente 99, 103 durch entsprechende Isolierungen von den übrigen Bauelementen elektrisch isoliert sind, sodaß ein Kurzschluß aufgrund der vorbeiströmenden Flüssigkeit 8 bzw. des vorbeiströmenden Gases 19 oder zwischen dem stromführenden Verdampfungselement 84 verhindert wird.

Die Funktionsweise des dargestellten Brenners 6 entspricht der Funktionsweise des Brenners 6 der zuvor beschriebenen Fig. 2 bis 4, d.h., daß wiederum im Verdampfungselement 84 durch Erwärmen der Flüssigkeit 8 über die Heizelemente 99, 103 die Flüssigkeit 8 von ihrem flüssigen Zustand in einen gasförmigen Zustand umgewandelt wird, sodaß das Gas 19 gebildet wird. Das Gas 19 strömt anschließend über den Strömungskanal, insbesondere über das Gewinde 88, in Richtung der Bohrungen 81 und gelangt über die Bohrungen 81 in den Zwischenraum 83 des Brenners 6, sodaß durch den Lichtbogen 96 zwischen der Anode 93 und der Kathode 100 eine weitere Erwärmung des Gases 19 durchgeführt wird und somit beim Austritt des Gases 19 aus der Bohrung 94 der Anode 93 dem Benutzer ein entsprechend heißes Gas 19 für einen Schneidprozeß zur Verfügung steht. Die weiteren Funktionsweisen bezüglich der Steuermöglichkeiten sind ebenfalls den Fig. 2 bis 4 zu entnehmen.

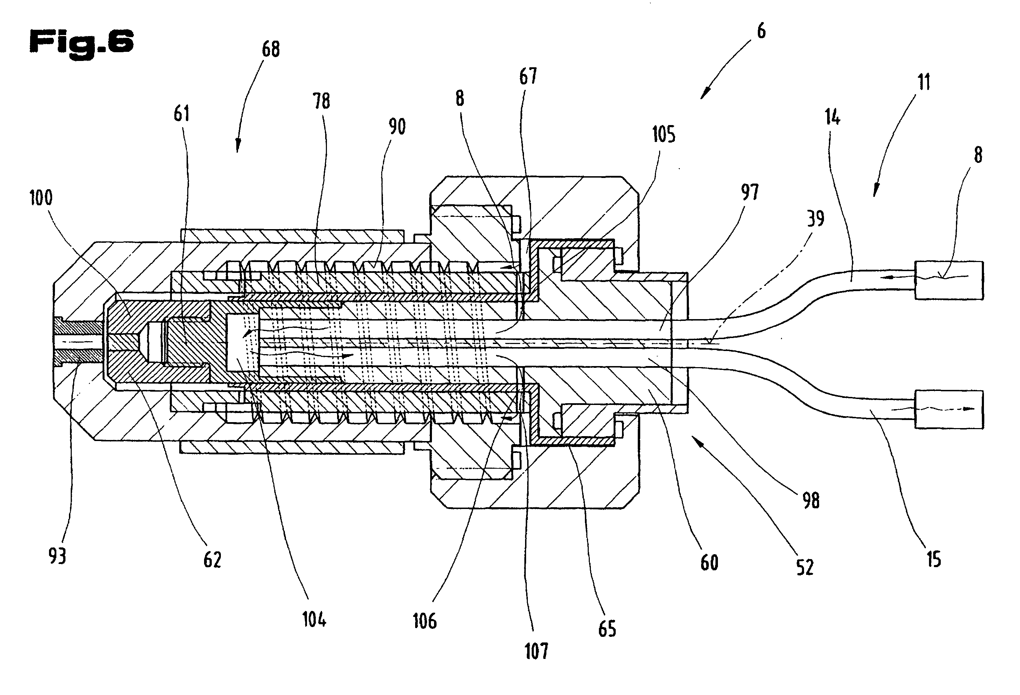

In Fig. 6 ist ein weiteres Ausführungsbeispiel des Brenners 6 dargestellt, wobei für die selben Teile wiederum dieselben Bezugszeichen verwendet werden.

Der Unterschied zu den in den zuvor beschriebenen Fig. 1 bis 5 dargestellten Ausführungsbeispiele liegt nun darin, daß die Zuführung der Flüssigkeit 8 nicht mehr gesondert über die Versorgungsleitung 7 durchgeführt wird, sondern, daß die Versorgung des Brenners 6 mit der Flüssigkeit 8 mit dem Kühlkreislauf 11 kombiniert ist, d.h., daß eine Abzweigung der Flüssigkeit 8 vom Kühlkreislauf 11, insbesondere von den Kühlleitungen 14, 15 bzw. den Bohrungen 97, 98, stattfindet.

Hierzu ist ein anderer Aufbau des Kühlkreislaufes 11 dargestellt. Der Kühlkreislauf 11 ist wiederum in der Kathodenhülse 52 angeordnet, wobei nunmehr die Kathodenhülse 52 derartig ausgebildet ist, daß zwei parallel zu der Längsmittelachse 39 verlaufende Bohrungen 97, 98 angeordnet sind. Im Endbereich 68 des Brenners 6 weist die Kathodenhülse 52, welche wiederum aus den Teilen 60 bis 62 gebildet wird, einen Zwischenraum 104 auf. Die Bohrungen 97, 98 erstrecken sich bis in den Zwischenraum 104, welcher zwischen dem Teil 60 und 61 der Kathodenhülse 52 angeordnet ist, sodaß die Kühlflüssigkeit bzw. die Flüssigkeit 8 beim Zuführen über die Kühlleitung 14 und die Bohrung 97 in den Zwischenraum 104 fließen kann und anschließend über die weitere Bohrung 98 an das Versorgungsgerät 1 zurückfließt, sodaß der Kühlkreislauf 11 geschlossen ist.

Damit eine Abzweigung der Flüssigkeit 8 vom Kühlkreislauf 11 erfolgen kann, weist die Kathodenhülse 52 im Bereich des Kanals 67 radial um die Längsmittelachse 39 angeordnete Bohrungen 105 auf, die in die Bohrungen 97, 98 für den Kühlkreislauf 11 münden. Hierzu sind Fluchten zur Bohrung 105 der Kathodenhülse 52 ebenfalls Bohrungen 106, 107 in der Isolierhülse 65 und der Hülse 78 angeordnet, sodaß ein Stromfluß der Flüssigkeit 8 in den Führungskanal 77 bzw. in den Kanal 67 ermöglicht wird. Es ist auch möglich, daß beim Zusammenbauen der einzelnen Bauelemente des Brenners 6 über Bohrungen 105 bis 107 ein Dichtungselement mit einer im Mittel verlaufenden Bohrung angeordnet ist, sodaß ein dichtender Abschluß zwischen den einzelnen Bauelementen, insbesondere der Hülse 78, der Isolierhülse 65 und der Kathodenhülse 52 geschaffen wird und somit ein Austritt der Flüssigkeit 8 zwischen den einzelnen Bauelementen verhindert wird.

Bei dem dargestellten Ausführungsbeispiel ist es auch möglich, daß durch getrennte Ansteuerung der Kühlleitungen 14, 15 die Förderung der Flüssigkeit 8 über nur eine Kühlleitung 14, 15 erfolgt, d.h., daß beispielsweise bei einer Anordnung eines Sperrelementes 4 in jeder Kühlleitung 14, 15, insbesondere einem Ventil, die Steuervorrichtung 3 bei nicht benötigtem Kühlkreislauf 11 nur ein Sperrelement 4 freigibt, sodaß über die im Versorgungsgerät 1 angeordnete Pumpe die Flüssigkeit 8 beispielsweise nur über die Kühlleitung 14 an den Brenner 6 gefördert wird, sodaß die Flüssigkeit 8 in den Innenraum des Brenners 6, insbesondere in den Zwischenraum 104, einströmen kann, wobei anschließend die Flüssigkeit 8 über die Bohrungen 105 bis 107 in den Fließkanal 90 einströmen kann. Dies ist insofern möglich, da durch die Förderung der Flüssigkeit 8 unter Druck ein entsprechender Druck im Brenner 6 aufgebaut wird, sodaß die Flüssigkeit 8 durch die Bohrungen 105 bis 107 in den Kanal 67 bzw. in den Fließkanal 90 eingepreßt wird, wodurch wiederum, entsprechend den zuvor beschriebenen Figuren, eine Verdampfung der Flüssigkeit 8 durchgeführt werden kann.

Reicht der Energieentzug, insbesondere der Wärmeentzug, über die Flüssigkeit 8, also durch das Ausströmen des Gases 19 durch die Anode 93, nicht aus, so ist es möglich, daß die Steuervorrichtung 3 durch Aktivieren des weiteren Sperrelementes 4 für die Kühlleitung 15 den Kühlkreislauf 11 schließt, sodaß zusätzlich zur Förderung der Flüssigkeit 8 in den Fließkanal 90 ein Kühlkreislauf 11 über die beiden Bohrungen 97, 98 aufgebaut werden kann. Hierbei ist es wiederum möglich, daß eine diskontinuierliche Verwendung des Kühlkreislaufes 11 durchgeführt werden kann.

Die Funktion des Brenners 6 kann wiederum aus den zuvor beschriebenen Figuren entnommen werden.

Ein weiterer Vorteil bei dem dargestellten Ausführungsbeispiel liegt darin, daß durch die Führung der Bohrungen 97, 98 bzw. durch die Anordnung des Zwischenraums 104 in dem Endbereich 68 des Brenners 6 eine bessere Kühlung des Brenners 6 erzielt wird, da die Kühlstrecke des Brenners 6 entsprechend verlängert werden kann und somit mehr Wärme vom Bereich des Lichtbogens 96 entzogen wird. Hierzu ist es auch möglich, daß die Kathodenhülse 52 aus nur zwei Teilen gebildet wird, sodaß der Zwischenraum 104 möglichst nahe an der Anode 93 angeordnet ist und somit ein guter Wärmeentzug von der Kathode 100 des Brenners 6 erzielt wird.

Durch die Ausbildung des Kühlkreislaufes 11 bzw. des Zwischenraumes 104 wird weiters auch erreicht, daß bei nicht aktivem Kühlkreislauf 11 die Flüssigkeit 8 durch die Kathode 100 vorerwärmt wird, sodaß ein rascheres Vergasen der Flüssigkeit 8 im Fließkanal 90 ermöglicht wird. Dies geschieht insofern, da durch Absperren der weiteren Kühlleitung 15 die Flüssigkeit 8 bis zur Kathode 100 vorgedrückt wird, sodaß anschließend über die weitere Bohrung 98 ein Rücklauf der Flüssigkeit 8 erzielt wird, wobei im Zwischenraum 104 die Flüssigkeit 8 durch die Kathode 100 auf eine entsprechende Temperatur vorerwärmt wird, sodaß beim Eintritt in den Fließkanal 90 eine geringere Wärmezufuhr zum Vergasen der Flüssigkeit 8 benötigt wird. Hierzu ist es auch möglich, daß eine Verbindung der Bohrung 97 mit dem Fließkanal 90 über die Bohrungen 105 bis 107 entfallen kann, sodaß eine Zwangsführung der Flüssigkeit 8 über den Zwischenraum 104 zu den weiteren Bohrungen 105 bis 107, welche mit der Bohrung 98 für den Kühlkreislauf 11 in Verbindung stehen, erfolgt.

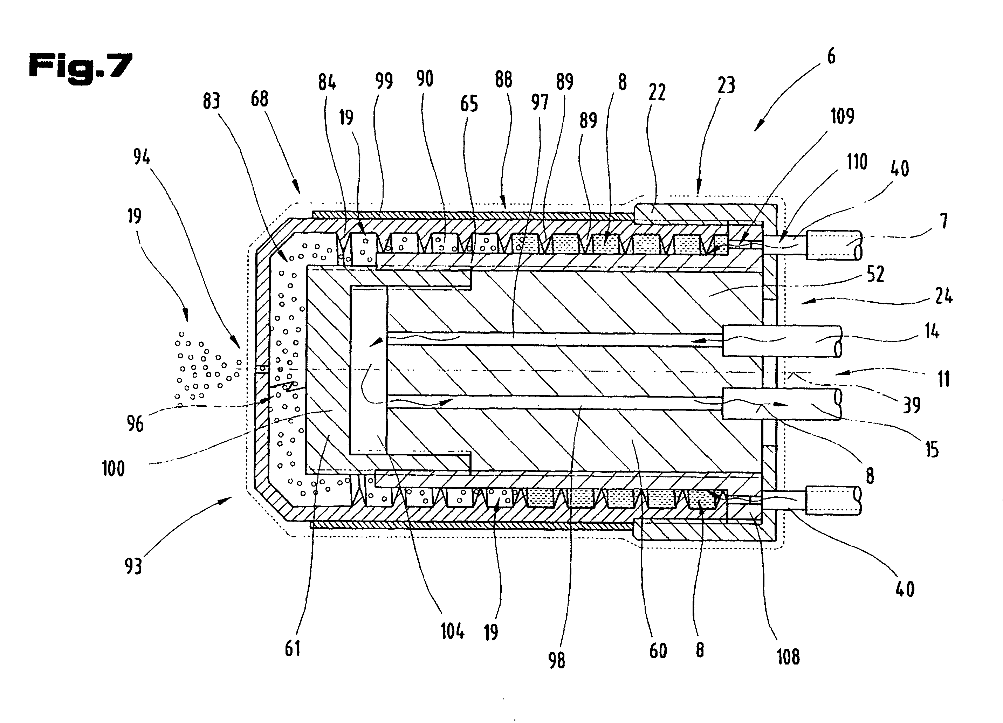

In Fig. 7 ist ein weiteres Ausführungsbeispiel des Brenners 6 gezeigt, wobei wiederum die Funktionsweise des Brenners 6 aus den zuvor beschriebenen Fig. 1 bis 6 entnommen werden kann. Bei dem dargestellten Ausführungsbeispiel weisen die einzelnen Bauelemente des Brenners 6 eine gegenüber den zuvor beschriebenen Fig. 1 bis 6 unterschiedliche Form auf, wobei jedoch für die gleichen Teile bzw. in ihrer Funktion gleichen Teile wiederum die gleichen Bezugszeichen verwendet werden.

Der Brenner 6 weist nunmehr die einzelnen Bauelemente, nämlich das Aufnahmeteil 22, die Kathodenhülse 52, die Isolierhülse 65, das Verdampfungselement 84 und das Heizelement 99, auf.

Das Aufnahmeteil 22 weist hierbei zwei Bohrungen 23, 24 auf, wobei die einzelnen Bauelemente über die Bohrung 23 miteinander verbunden bzw. positioniert werden. Die Bohrung 24 hat die Aufgabe, daß die Kathodenhülse 52 über die Kühlleitungen 14, 15 mit dem Versorgungsgerät 1 verbunden werden kann, d.h., daß eine Durchführung der Kühlleitungen 14, 15 für den Kühlkreislauf 11 über die Bohrung 24 möglich ist. Selbstverständlich ist es möglich, daß anstelle der Bohrung 24 zwei Bohrungen, die den Kühlleitungen 14, 15 zugeordnet sind, angeordnet sein können.

Die Kühlleitungen 14, 15 sind mit der Kathodenhülse 52 derartig verbunden, daß die Flüssigkeit 8 beim Aus- bzw. Eintritt in die Kühlleitungen 14, 15 in die Bohrungen 97, 98 der Kathodenhülse 52 strömen kann. Hierzu ist die Kathodenhülse 52 nunmehr zweiteilig ausgebildet, d.h., daß im Endbereich 68 des Brenners 6 zwischen dem Teil 60 und 61 der Zwischenraum 104 geschaffen wird, sodaß ein Austritt der Flüssigkeit 8 aus der Bohrung 97 in den Zwischenraum 104 möglich ist. Anschließend strömt die Flüssigkeit 8 vom Zwischenraum 104 über die Bohrung 98 in die Kühlleitung 15, sodaß der Kühlkreislauf 11 geschlossen ist. Durch die Ausbildung des Zwischenraumes 104 möglichst nahe an der Anode 93 bzw. am Lichtbogen 96 wird erreicht, daß die Kathode 100 im Bereich des Lichtbogens 96 sehr gut gekühlt werden kann, sodaß eine entsprechend hohe Energieabfuhr bzw. Wärmeabfuhr über den Kühlkreislauf 11 geschaffen wird und eine Überhitzung des Brenners 6 verhindert wird. Selbstverständlich ist es möglich, daß die Kühlung des Brenners 6 wiederum nur ausschließlich über die unter Druck an den Brenner 6 beförderte Flüssigkeit 8 erfolgen kann.

Das Verdampfungselement 84 weist wiederum das Gewinde 88 auf, wobei zwischen den einzelnen Gewindegängen 89 der Fließkanal 90 ausgebildet ist. Damit eine Isolierung des Verdampfungselementes 84 zu der Kathodenhülse 52 geschaffen werden kann, ist zwischen dem Verdampfungselement 84 und der Kathodenhülse 52 die Isolierhülse 65 angeordnet. Diese weist im Endbereich einen Vorsprung 108 auf, wodurch eine Anpassung des Durchmessers der Isolierhülse 85 an den Außendurchmesser des Verdampfungselementes 84 erreicht wird.

Beim Zusammenbauen der einzelnen Bauelemente wird zuerst die Kathodenhülse 52 in die Isolierhülse 65 positioniert. Hierzu ist es möglich, daß im Übergangsbereich zwischen der Isolierhülse 65 und der Kathodenhülse 52 eine Gewindeanordnung angeordnet ist, sodaß ein Zusammenschrauben der beiden Bauelemente ermöglicht wird. Anschließend werden die beiden Teile, insbesondere die Isolierhülse 65, in die Bohrung 23 des Aufnahmeteils 22 positioniert bzw. eingeschraubt. Selbstverständlich ist es wiederum möglich, daß die Bohrung 23 eine Gewindeanordnung aufweist, sodaß ein Einschrauben der Isolierhülse 65 jederzeit möglich ist. Über die Isolierhülse 65 wird anschließend das Verdampfungselement 84 wiederum in die Bohrung 23 des Aufnahmeteils 22 eingesteckt bzw. eingeschraubt, sodaß eine Ausbildung des Fließkanals 90 zwischen dem Gewinde 88 und der Isolierhülse 65 geschaffen wird.

Damit nunmehr die Flüssigkeit 8 vom Versorgungsgerät 1 in den Fließkanal 90 befördert werden kann, weist die Isolierhülse 65 sowie das Aufnahmeteil 22 im Anschlußbereich an die Versorgungsleitung 7 jeweils eine Bohrung 109, 110 auf, sodaß durch Verbinden der Bohrung 110 mit der Versorgungsleitung 7 beispielsweise durch ein entsprechendes Anschlußstück 40 eine Versorgung des Fließkanals 90 mit der Flüssigkeit 8 möglich ist. Selbstverständlich ist es möglich, daß umlaufend um die Längsmittelachse 39 weitere Bohrungen 109, 110 zum Versorgen des Fließkanals 90 mit der Flüssigkeit 8 angeordnet sein können. Hierzu ist es möglich, daß die einzelnen Anschlußstücke 40 anschließend in eine gemeinsame Versorgungsleitung 7 zusammengeführt werden, bzw. daß die einzelnen Bohrungen 110 über Extraleitungen mit dem Versorgungsgerät 1 verbunden werden.

Damit ein Erwärmen der Flüssigkeit 8 vor dem Zünden des Lichtbogens 96 im Fließkanal 90 möglich ist, ist am Außenumfang des Verdampfungselementes 84, wie in den Fig. 2 bis 4 beschrieben, das Heizelement 99 angeordnet. Durch die Anordnung des Heizelementes 99 wird erreicht, daß beim Beaufschlagen des Heizelementes 99 mit Energie das Verdampfungselement 84 derartig erwärmt wird, daß die durch den Fließkanal 90 strömende Flüssigkeit 8 von ihrem flüssigen Zustand in den gasförmigen Zustand übergeht, sodaß anschließend über die in Längsrichtung der Längsmittelachse 39 des Brenners 6 angeordnete Bohrung 94 das gebildete Gas 19 ausströmen kann.

Ein weiterer Unterschied zu den zuvor beschriebenen Fig. 1 bis 6 liegt darin, daß das Verdampfungselement 84 nunmehr einteilig ausgebildet ist, d.h., daß die Anode 93 nicht mehr durch einen Extrateil gebildet wird, sondern, daß das gesamte Verdampfungselement 84 die Anode 93 ausbildet, wodurch wiederum eine Zündung des Lichtbogens 96 zwischen der Kathodenhülse 52 und dem Verdampfungselement 84 stattfinden kann. Der Lichtbogen 96 wandert aufgrund der Strömungsgeschwindigkeit des Gases 19 anschließend im Inneren des Brenners 6 nach dem Zünden wiederum in den Bereich der Bohrung 94, sodaß sichergestellt ist, daß beim Austritt des Gases 19 aus dem Innenraum des Brenners 6 eine Erwärmung des Gases 19 zustande kommt und somit ein Schneidverfahren mit dem Brenner 6 jederzeit möglich ist.

Bei dem dargestellten Ausführungsbeispiel wird der Aufnahmeteil 22 bevorzugt aus einem nicht leitenden Material, wie beispielsweise Kunststoff, gebildet, sodaß eine komplette Isolierung des Verdampfungselementes 84 von der Kontakthülse 52 geschaffen wird. Weiters ist es möglich, daß das Heizelement 99 nicht auf den Außenumfang des Verdampfungselementes 84 angeordnet ist, sondern, daß das Heizelement 99 direkt *auf* der Isolierhülse 65 angeordnet ist, wodurch wiederum beim Vorbeiströmen der Flüssigkeit 8 eine Erwärmung der Flüssigkeit 8 stattfinden kann. Dies ist insofern von Vorteil, da dadurch ein besserer Wärmeübergang vom Heizelement 99 zur Flüssigkeit 8 geschaffen wird, wodurch eine raschere Vergasung der Flüssigkeit 8 erzielt wird.

Selbstverständlich ist es möglich, daß die Flüssigkeit 8 nicht über die Versorgungsleitung 7 zugeführt werden muß, sondern, daß eine Abzweigung der Flüssigkeit 8 aus dem Kühlkreislauf 11 durch quer zur Längsmittelachse 39 verlaufende Bohrungen, wie dies in Fig. 6 gezeigt ist, möglich ist.

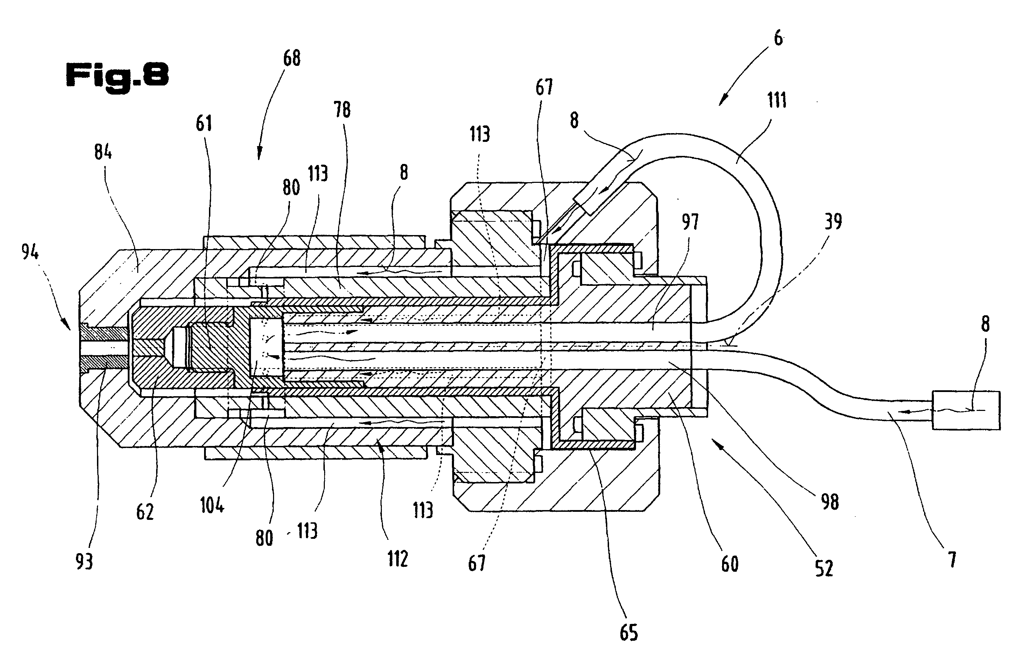

In Fig. 8 ist ein anderes Ausführungsbeispiel des Brenners 6 für ein Wasserdampf-Schneidverfahren gezeigt. Das dargestellte Ausführungsbeispiel entspricht der Bauweise der Fig. 2 bis 6, wobei selbstverständlich jede beliebige weitere Bauform für den Brenner 6 eingesetzt werden kann.

Die Funktionsweise des Brenners 6 bezüglich der Steuerung und Zuführung der Flüssigkeit 8 kann aus den zuvor beschriebenen Figuren entnommen werden.

Der Unterschied zu den zuvor beschriebenen Figuren liegt nun darin, daß der Brenner 6 keinen eigenen Kühlkreislauf aufweist, sondern daß durch Zuführung der Flüssigkeit 8 über die Versorgungsleitung 7 zum Brenner 6 und anschließend durch das Ausströmen des Gases 19 aus dem Brenner 6 eine Wärmeabfuhr durch die zugeführte Menge der Flüssigkeit 8 bzw. des Gases 19 erzielt wird, d.h., daß die an dem Brenner 6, insbesondere an der Anode 93 und der Kathode 100, über den Lichtbogen 96 an die Bauelemente übertragene Wärmeenergie durch das Arbeitsmedium, insbesondere die Flüssigkeit 8, wieder abgeführt wird, wobei die Abfuhr der übertragenen Wärmeenergie durch Aufheizen des Gases 19 bzw. der Flüssigkeit 8 erfolgt.

Hierbei wird der Brenner 6 derartig ausgebildet, daß in der Kathodenhülse 52 wiederum die Bohrungen 97, 98 angeordnet sind, wobei nunmehr die Versorgungsleitung 7 direkt mit der Bohrung 98 verbunden wird, sodaß beim Fördern der Flüssigkeit 8 zur Bohrung 98 die Flüssigkeit 8 über die Bohrung 98 in den Zwischenraum 104 eintreten kann. Von dort aus strömt anschließend die Flüssigkeit 8 über die weitere Bohrung 97 durch die Kathodenhülse 52 in entgegengesetzter Richtung zurück, worauf sie beim Austritt aus der Bohrung 97 über eine Zusatzleitung 111 an die Bohrung 35 bzw. 36 befördert bzw. geleitet wird. Anschließend wird die Flüssigkeit 8 unter Druck in den Kanal 67 eingepreßt, sodaß ein Verteilen der Flüssigkeit 8 im Kanal 67 stattfindet und somit ein Vorströmen der Flüssigkeit 8 in den Endbereich 68 des Brenners 6 über in ihrem Querschnitt vorgegebene Strömungskanäle 112 erfolgt.

Der Vorteil einer derartigen Zuführung der Flüssigkeit 8 liegt nun darin, daß durch das Durchströmen der Kathodenhülse 52 eine Vorerwärmung der Flüssigkeit 8 stattfindet, sodaß anschließend in den Strömungskanälen 112, in denen die Verdampfung der Flüssigkeit 8 stattfindet, weniger Energie zum Verdampfen der Flüssigkeit 8 zugeführt werden muß, sodaß die Flüssigkeit 8 von ihrem flüssigen Zustand in den gasförmigen Zustand übergeführt werden kann. Gleichzeitig mit dem Durchströmen der Kathodenhülse 52 wird weiters erreicht, daß eine entsprechende Kühlung der Kathodenhülse 52 von der Flüssigkeit 8 durchgeführt wird, sodaß eine Überhitzung des Brenners 6 verhindert werden kann.

Bei dem dargestellten Ausführungsbeispiel sind die Strömungskanäle 112 nicht, wie in dem zuvor beschriebenen Ausführungsbeispiel, durch Gewinde 75, 88 dargestellt, sondern es sind nunmehr im Verdampfungselement 84, insbesondere in der Bohrung 86, Längsrillen 113 angeordnet. Die einzelnen Längsrillen 113 weisen dabei einen entsprechenden Querschnitt auf und sind am Umfang verteilt in der Bohrung 86 des Verdampfungselementes 84 angeordnet. Durch die Ausbildung der Längsrillen 113 wird nun erreicht, daß die Flüssigkeit 8 über den Kanal 67 in die einzelnen am Umfang der Bohrung 86 verteilt angeordneten Längsrillen 113 einströmen kann, wodurch wiederum eine definierte bzw. vorgegebene Führung für die Flüssigkeit 8 in Richtung der Anode 93 geschaffen wird.

Das Überführen bzw. Umwandeln der Flüssigkeit 8 in den gasförmigen Zustand, insbesondere in das Gas 19, sowie weitere Steuervorgänge oder Funktionsweisen des Brenners 6 können aus den zuvor beschriebenen Figuren entnommen werden.

Selbstverständlich ist es möglich, daß anstelle von Längsrillen 113 im Brenner 6, insbesondere im Verdampfungselement 84, Ausnehmungen bzw. einzelne Bohrungen angeordnet sein können, wobei bei Verwendung von Bohrungen zusätzlich Querbohrungen in Richtung der Nut 80 angeordnet werden.

Es kann grundsätzlich gesagt werden, daß bei dem erfindungsgemäßen Brenner 6 eine definierte bzw. vorgegebene Führung der Flüssigkeit 8 im Inneren des Brenners 6 durch unterschiedliche Arten von Kanälen bzw. Strömungskanälen 112, wie den Kanal 87, den Führungskanal 77, den Fließkanal 99 oder durch Längsrillen 113 bzw. andere Ausführungen von Strömungskanälen 112, geschaffen wird. Hierzu ist es jedoch bei einer derartigen Form eines Brenners 6 erforderlich, daß die Flüssigkeit 8 unter Druck bevorzugt zwischen 3 bar und 6 bar an den Brenner 6 befördert wird, wodurch ein entsprechendes Durchpressen der Flüssigkeit 8 durch die einzelnen Kanäle ermöglicht wird. Durch das Fördern der Flüssigkeit 8 unter Druck wird weiters erreicht, daß eine Lageunabhängigkeit des Brenners 6 geschaffen werden kann, d.h., daß sowohl bei Überkopfarbeiten als auch in jeder beliebigen weiteren Position der Brenner 6 mit Flüssigkeit 8 ohne Beeinflussung der Schwerkraft der Erde versorgt werden kann und somit jederzeit das Gas 19 dem Benutzer für einen Schneidprozeß zur Verfügung steht.

Bei den zuvor beschriebenen Figuren ist es selbstverständlich möglich, daß zum Zünden des Lichtbogens 96 weitere aus dem Stand der Technik bekannte Verfahren eingesetzt werden können. Hierzu ist es beispielsweise möglich, daß das Vorwärmen der Bauelemente bzw. das Vergasen der Flüssigkeit 8 über einen Pilotlichtbogen durchgeführt werden kann. Selbstverständlich ist es auch möglich, daß die Kathodenhülse 52 bzw. die Kathode 100 beweglich im Brenner 6 angeordnet ist, sodaß der Benutzer durch einfaches Pressen der Kathodenhülse 52 an die Anode 93 einen Kurzschluß bildet, wobei beim Abheben der Kathode 100 anschließend der Lichtbogen 96 gezogen bzw. gezündet wird.

Weiters ist es auch möglich, daß bei den zuvor beschriebenen, unterschiedlichen Brennern 6 ein Teil des Energieflusses über das Werkstück 20 geführt werden kann, d.h., daß, wie in Fig. 1 mit strichlierten Linien gezeigt, das Werkstück 20 mit einer Leitung 9, 10, insbesondere mit der Leitung 10, verbunden wird, sodaß ein entsprechendes Potential von der Stromquelle ebenfalls am Werkstück 20 angelegt wird und somit zwischen der Kathode 100 und dem Werkstück 20 ein weiterer Lichtbogen 96 gezündet werden kann. Hierzu ist es möglich, daß im Inneren des Brenners 6 der Lichtbogen 96 gebildet wird, wogegen zusätzlich beim Ausströmen des Gases 19 zwischen dem Werkstück 20 und der Kathode 100 der weitere Lichtbogen 96 gezündet wird, sodaß eine weitere Erwärmung des Gases 19 bzw. eine Aufrechterhaltung der Temperatur des Gases 19 erreicht wird.

Hierzu ist es jedoch erforderlich, daß das Werkstück 20 mit einem höheren Potential als das Verdampfungselement 84 angespeist wird, sodaß eine Zündung des Lichtbogens 96 erreicht wird, d.h., daß beispielsweise am Werkstück 20 das positive Potential angeordnet wird, sodaß durch die Verwendung der Anode 93 mit dem positiven Potential und gleichzeitig mit der Verwendung der Kathodenhülse 52 mit dem negativen Potential ein Lichtbogen 96 zwischen der Kathodenhülse 52 und der Anode 93, insbesondere dem Verdampfungselement 84, gezündet wird und zusätzlich ein weiterer Lichtbogen 96 zwischen der Kathodenhülse 52 über die Bohrung 94 mit dem Werkstück 20 entstehen kann bzw. gezündet werden kann.

Selbstverständlich ist es möglich, daß bei den zuvor beschriebenen Ausführungsbeispielen am Verdampfungselement 84 nicht die Anode 93 angeordnet ist, sondern daß das Verdampfungselement 84 die Kathode 100 ausbildet, wobei anschließend die Kathodenhülse 52 nunmehr die Anode 93 ausbildet, d.h., daß ein Potentialwechsel zwischen den beiden Bauelementen, insbesondere dem Verdampfungselement 84 und der Kathodenhülse 52, durchgeführt werden kann.

Bei den zuvor beschriebenen Fig. 1 bis 8 ist es selbstverständlich möglich, daß zum Vergasen der Flüssigkeit 8 anstelle des Heizelementes 99, 103 ein anderes Verfahren zum Erwärmen der Flüssigkeit 8 eingesetzt werden kann. Hierzu ist es beispielsweise möglich, daß zur Erwärmung der Flüssigkeit 8 bzw. zum Vergasen der Flüssigkeit 8 ein Wechselstromübergang durch die Flüssigkeit 8 stattfinden kann.

Weiters ist es möglich, daß eine Zündung des Lichtbogens 96 ohne vorhergehende Vergasung der Flüssigkeit 8 stattfinden kann. Hierzu wird der Versorgungsenergie für den Brenner 6 wiederum ein Hochfrequenzsignal überlagert. Damit jedoch eine Zündung des Lichtbogens 96 mit zwischen der Anode 93 und der Kathode 100 befindlichen Flüssigkeit 8 möglich ist, wird eine Energieerhöhung während der Zündung des Lichtbogens 96 durchgeführt. Durch die Erhöhung der Energie am Brenner 6 wird erreicht, daß die Flüssigkeit 8, die sich zwischen der Anode 93 und der Kathode 100 befindet, über die Bohrung 94 durch den Stromfluß über die Flüssigkeit 8 und somit durch die daraus entstehende Erwärmung nach außen gepreßt wird, sodaß durch die erhöhte Energiezufuhr die Flüssigkeit 8 erwärmt wird und anschließend in den gasförmigen Zustand übergeht, sodaß eine automatische Zündung des Lichtbogens 96 möglich ist. Bei einer derartigen Zündung ist es jedoch erforderlich, daß eine gewisse Anlaufzeit zur Stabilisierung des Lichtbogens 96 bzw. zum Auspressen der Flüssigkeit 8 durch die Bohrung 94 benötigt wird. Nachdem der Lichtbogen 96 gezündet bzw. stabilisiert wurde, kann die Energie zum Versorgen des Brenners 6 reduziert werden, da nur mehr eine Aufrechterhaltung des Lichtbogens 96 zwischen der Kathode 100 und der Anode 93 durchgeführt werden muß.

Grundsätzlich kann zu den unterschiedlichen erfindungsgemäßen Brennern 6 gesagt werden, daß der Brenner 6 über eine Versorgungsleitung 7 mit einem Flüssigkeitsversorgungssystem, insbesondere dem Behälter 5 oder einer Wasserleitung, verbunden ist, und daß im Brenner 6 zumindest ein einen vorgebbaren Querschnitt und Verlauf aufweisender Kanal bzw. Strömungskanal 112 für die Flüssigkeit 8 angeordnet und zur Umwandlung der Flüssigkeit 8 in einen gasförmigen Zustand, insbesondere in das Gas 19, ausgebildet ist, wobei das Flüssigkeitsversorgungssystem zur Umwandlung einer Flüssigkeit 8 in den gasförmigen Zustand ausgebildet ist und über eine Leitung mit dem Zwischenraum 83 zwischen Kathode 100 und Anode 93 verbunden werden kann. Das Flüssigkeitsversorgungssystem ist beispielsweise durch einen die Flüssigkeit 8 aufnehmenden Behälter 5 oder eine Zufuhrleitung für die unter Druck stehende Flüssigkeit 8 gebildet.

Das Flüssigkeitsversorgungssystem und/oder der Behälter 5 für die Flüssigkeit 8 ist in dem Versorgungsgerät 1 angeordnet. Eine Länge des Kanals bzw. Strömungskanals 112 bzw. eine Oberfläche desselben ist so bemessen, daß bei der vorbestimmbaren Wärmezufuhr mittels Heizelementen 99, 103 eine zum vollständigen Verdampfen der zugeführten Flüssigkeit 8 benötigte Wärmeenergie zugeführt wird. Das Heizelement 99, 103 kann durch das Verdampfungselement 84, welches sich von dem zwischen der Kathode 100 und Anode 93 angeordneten Zwischenraum 83 bis in den Bereich des Kanals bzw. Strömungskanals 112 erstreckt, gebildet werden. Das Heizelement 99 ist durch Widerstandsheizelemente, Heizpatronen, Strahlungsheizkörper oder dgl. gebildet.

Das Verdampfungselement 84 bildet zumindest einen Teil der Oberfläche des Kanals bzw. Strömungskanals 112 aus. Es ist weiters möglich, daß die Kathodenhülse 52 einen Zirkulationskanal, z.B. Bohrungen, ausbildet, die sich in Längsrichtung des Brenners 6 erstrecken, wobei ein Auslaß des Zirkulationskanals mit dem Kanal bzw. Strömungskanal 112 bzw. dem Zwischenraum 83 zwischen der Kathode 100 und der Anode 93 verbunden ist.

Der Kanal bzw. Strömungskanal 112 ist um eine Längsmittelachse 39 des Brenners 6 umlaufend, z.B. schraubenlinienförmig, ausgebildet. Weiters ist es möglich, daß der Kanal bzw. Strömungskanal 112 parallel zur Längsmittelachse 39 des Brenners 6 verlaufend angeordnet sein kann, wobei beispielsweise der Kanal bzw. der Strömungskanal 112 über seine Länge einen unterschiedlichen oder sich bevorzugt stetig verjüngenden Querschnitt aufweisen kann.

Die Flüssigkeit 8 oder die in den gasförmigen Zustand übergeführte Flüssigkeit 8 wird unter Druck dem Brenner 6 bzw. dem Zwischenraum 83 zwischen Anode 93 und Kathode 100 zugeführt. Im Fließkanal 90 wird durch Erwärmen der Flüssigkeit 8 diese von ihrem flüssigen Zustand in einen gasförmigen Zustand, insbesondere in das Gas 19, umgewandelt. Hierzu ist die Länge des Kanals bzw. Strömungskanals 112 größer als die zum Umwandeln der Flüssigkeit 8 in den gasförmigen Zustand in Abhängigkeit von der zugeführten Wärmeenergie benötigte Länge, sodaß sichergestellt ist, daß die Flüssigkeit 8 in das Gas 19 umgewandelt wird.

Die Menge der zugeführten Flüssigkeit 8 kann so geregelt werden, daß die durch den Lichtbogen 96 entstehende, in die Bauelemente des Brenners 6 übertragene Wärmeenergie zur Umwandlung der Flüssigkeit 8 in den gasförmigen Zustand verbraucht wird.

Weiters ist es möglich, daß die Flüssigkeit 8 außerhalb des Brenners 6 in einen gasförmigen Zustand übergeführt wird und somit das Gas 19, insbesondere der Wasserdampf, in den Zwischenraum 83 zwischen Anode 93 und Kathode 100 über die Versorgungsleitung 7 zugeführt wird, worauf eine weitere Erwärmung des Gases 19 durch den Lichtbogen 96 erfolgt.

Es ist auch möglich, daß der Lichtbogen 96 zwischen einer Anode 93 und einer Kathode 100 im Brenner 6 und der Kathode 100 im Brenner 6 und einem Werkstück 20 aufgebaut wird, wobei das Werkstück 20 an einem höheren positiven Potential anliegt als die Anode 93 im Brenner 6.

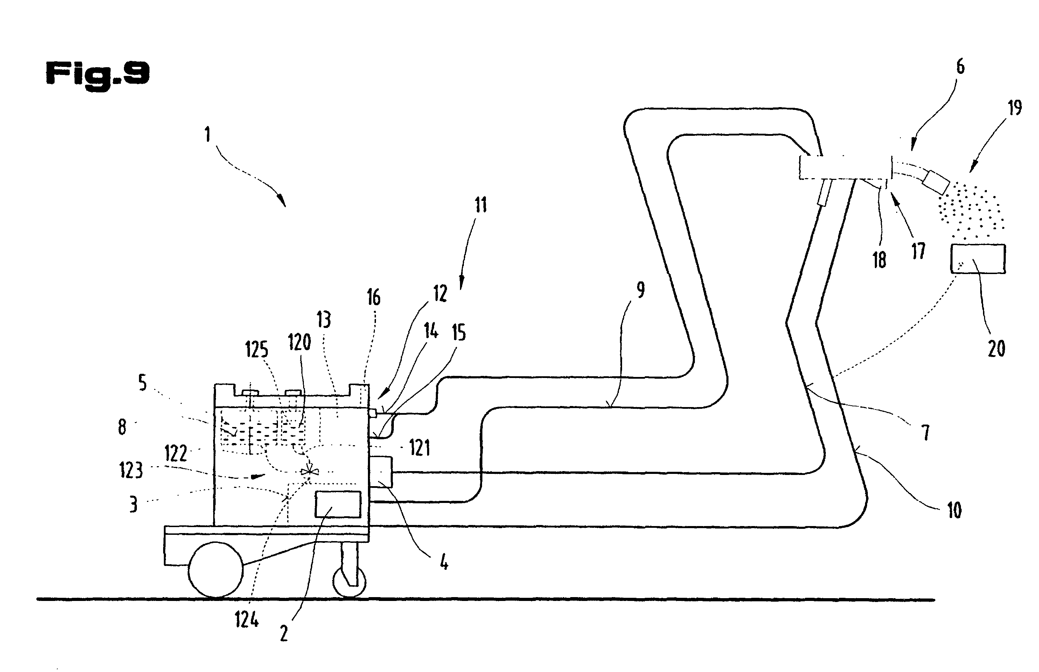

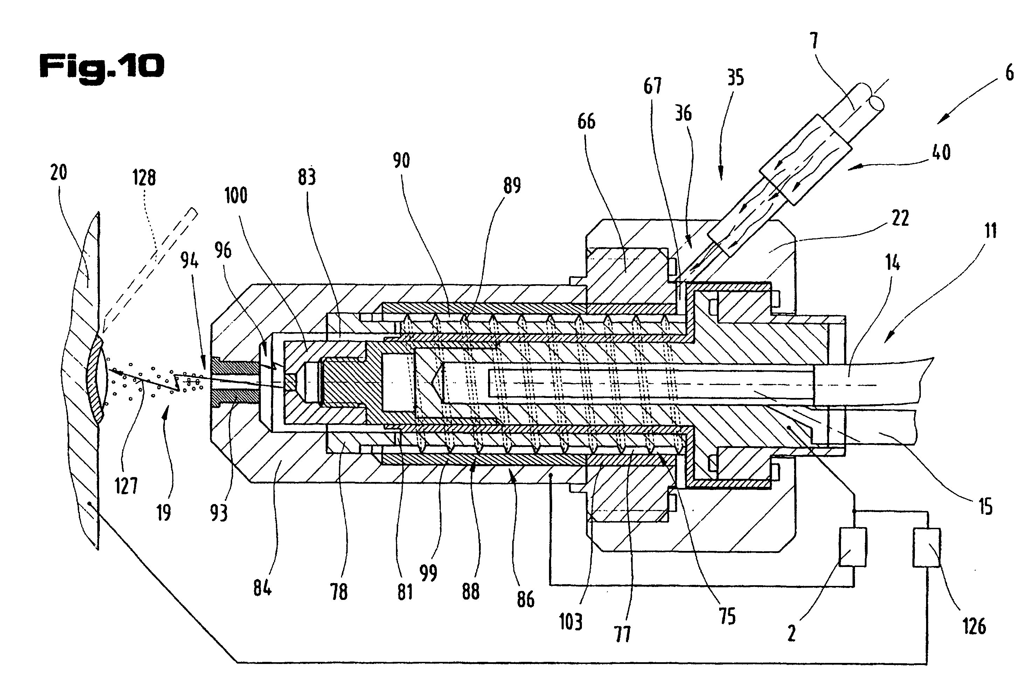

In den Fig. 9 und 10 ist ein schematischer Aufbau eines Wasserdampf-Schneid- und/oder Schweißgerätes sowie ein Ausführungsbeispiel eines entsprechenden Brenners 6 gezeigt, wobei für die gleichen Teile der zuvor beschriebenen Figuren gleiche Bezugzeichen verwendet werden.

Der in Fig. 9 dargestellte, schematische Aufbau eines Schneid- und/oder Schweißgerätes entspricht dem schematischen Aufbau wie er in Fig. 1 beschrieben ist. Bei diesem Aufbau können die einzelnen in den zuvor beschriebenen Fig. 1 bis 8 dargestellten Ausführungsbeispiele der unterschiedlichen Brenner 6 eingesetzt werden. Soll jedoch das Versorgungsgerät 1 sowohl als Schneidgerät als auch als Schweißgerät eingesetzt werden, so empfiehlt es sich, den Brenner 6, wie er in Fig. 10 dargestellt und beschrieben ist, zu verwenden.

Der Unterschied zu dem in Fig. 1 schematisch dargestellten Aufbau liegt darin, daß nunmehr im Versorgungsgerät 1 zumindest zwei voneinander getrennte, unterschiedliche Flüssigkeitsversorgungssysteme und/oder Behälter 5 und 120 angeordnet sind. Dadurch wird erreicht, daß in den einzelnen Behältern 5 und 120 unterschiedliche Flüssigkeiten 8 gelagert werden können, d.h. daß beispielsweise in dem Behälter 5 als Flüssigkeit 8 Wasser eingefüllt wird, wogegen in dem weiteren Behälter 120 beispielsweise anorganische oder organische Lösungsmittel bzw. chemische Zusätze eingefüllt werden.

Die einzelnen Behälter 5, 120 bzw. die eingesetzten Flüssigkeitsversorgungssysteme werden anschließend über Leitungen 121, 122 unter Zwischenschaltung eines Vermischungssystemes, insbesondere eines Mischventils 123, verbunden. Ein Ausgang des Mischventils 123 ist mit dem Brenner 6 bzw. dem Anschlußstück 40 des Brenners 6 verbunden. Selbstverständlich ist es möglich, wie dies in den zuvor beschriebenen Fig. 1 bis 8 erwähnt ist, daß bei der Versorgung des Brenners 6 mit der Flüssigkeit 8 über den Kühlkreislauf 11 diese Behälter 5 und 120, insbesondere der Ausgang des Mischventils 123, mit dem Kühlkreislauf 11 verbunden wird. Dadurch ist wiederum sichergestellt, daß der Brenner 6 mit einem entsprechenden Flüssigkeitsgemisch bzw. mit der entsprechenden Flüssigkeit 8 versorgt wird und die Flüssigkeit 8 gleichzeitig als Kühlmittel herangezogen wird.

Damit eine entsprechende Steuerung des Mischverhältnisses über das Mischventil 123 durchgeführt werden kann, ist die Steuervorrichtung 3 über eine Steuerleitung 124 mit einem Steuereingang des Mischventils 123 verbunden. Dadurch kann gewährleistet werden, daß durch Einstellen eines entsprechenden Mischverhältnisses über die Eingabe- und/oder Anzeigevorrichtung 16 von der Steuervorrichtung 3 eine entsprechende Ansteuerung des Mischventiles 123 vorgenommen wird und somit ein entsprechendes voreinstellbares Gemisch durch in den Behältern 5, 120 angeordneten Flüssigkeiten 8 und 125 hergestellt werden kann. Wie schon zuvor erwähnt ist es möglich, daß beispielsweise in dem Behälter 5 die Flüssigkeit 8, insbesondere Wasser, eingefüllt wird, wogegen in dem weiteren Behälter 120 eine weitere Flüssigkeit 125, insbesondere anorganische oder organische Lösungsmittel bzw. chemische Zusätze, gelagert werden. Die Förderung des Flüssigkeitsgemisches vom Versorgungsgerät 1 zum Brenner 6 kann aus den zuvor beschriebenen Figuren entnommen werden, d.h. daß beispielsweise über eine Pumpvorrichtung dieses Flüssigkeitsgemisch vom Versorgungsgerät 1 zum Brenner 6 über die Versorgungsleitung 7 gepumpt wird, wobei anschließend im Brenner 6 eine entsprechende Vergasung bzw. Verdampfung des Flüssigkeitsgemisches durchgeführt wird, sodaß aus dem Brenner 6 ein entsprechend erhitztes Gas 19 austreten kann.

Der Vorteil einer derartigen Lösung liegt nun darin, daß der Benutzer beispielsweise bei ungenügender Vorkenntnis zum Zusammenmischen zweier Flüssigkeiten 8, 125 diese unabhängig voneinander in den einzelnen Behältern 5 und 120 einfüllen kann und anschließend durch ein entsprechend vorgegebenes Steuer- bzw. Regelverfahren ein selbständiges Zusammenmischen der unabhängigen Flüssigkeiten 8 und 125 über das Mischventil 123 gewährleistet wird.

Selbstverständlich ist es möglich, daß der Benutzer das Flüssigkeitsgemisch außerhalb dieser Behälter 5, 120 zusammenmischen kann und anschließend beispielsweise in einem Behälter 5 oder 120 oder in beide Behälter 5 und 120 dieses Flüssigkeitgemisch einfüllen kann, sodaß ein Vermischen der beiden Flüssigkeiten 8, 125 über das Mischventil 123 nicht mehr notwendig ist.

Ein weiterer wesentlicher Vorteil dieser Lösung liegt darin, daß in dem Versorgungsgerät 1 die Behälter 5, 120 ein entsprechendes Volumen aufweisen können, wodurch eine relativ lange Schneiddauer bzw. Schweißdauer mit den Flüssigkeiten 8, 125 über dem Brenner 6 vom Benutzer durchgeführt werden kann. Hierzu ist es auch möglich, daß, wie zuvor beschrieben, das Versorungsgerät 1 direkt mit einem Flüssigkeitsversorgungssystem verbunden werden kann, beispielsweise an einer Wasserleitung und einem für die anorgangischen bzw. organischen oder chemischen Flüssigkeiten 125 verwendeten Tank, sodaß eine nahezu unbegrenzte Schweiß- bzw Schneiddauer erzielt werden kann.

Ein wesentlicher Vorteil liegt auch darin, daß der Benutzer die Möglichkeit hat, das Mischverhältnis jederzeit zu verändern, wodurch eine einfache Anpassung an die unterschiedlichsten Scheid- und/oder Schweißverfahren bzw. an die unterschiedlichen Materialien der Werkstücke 20 erreicht wird. Bei den aus dem Stand der Technik bekannten Systemen wird ein Behälter 5 direkt am Brenner 6 angeordnet, wodurch der Benutzer bei einer Änderung des Mischverhältnisses das in den Behälter 5 eingefüllte Flüssigkeitsgemisch entfernen und ein neues Flüssigkeitsgemisch einfüllen muß bzw. durch Zufuhr neuer Flüssigkeit 8, 120 das Flüssigkeitsgemisch verändern kann. Durch die Anordnung der Behälter 5, 120 wird auch noch erreicht, daß die Baugröße des Brenners 6 gering gehalten werden kann und somit die Flexiblität bzw, die Anwenderfreundlichkeit des Brenners 6 vergrößert wird.

Selbstverständlich ist es möglich, daß weitere Behälter 5, 120 im Versorgungsgerät 1 angeordnet werden können. Diese weiteren Behälter 5, 120 müssen anschließend wiederum über Leitungen 121, 122 mit einem entsprechenden Mischventil 123 verbunden werden bzw. durch mehrere Mischventile 123 zu einem einzigen Versorgungsstrang, insbesondere zu der Versorgungsleitung 7, zusammengeführt werden. Dadurch wird wiederum in vorteilhafter Weise erreicht, daß eine beliebige Verwendung und/oder Vermischung von unterschiedlichen Flüssigkeiten 8, 125 möglich ist, da nur durch einfaches Ergänzen des Versorgungsgerätes 1 mit zusätzlichen Behältern 5, 120 mehrere unterschiedliche Flüssigkeiten 8, 125 eingesetzt werden können.

In Fig. 10 ist ein weiteres Ausführungsbeispiel eines Brenners 6 gezeigt, wobei der Aufbau dieses Brenners 6 dem Ausführungsbeispiel des Brenners 6 nach Fig. 5 entspricht. Selbstverständlich ist es möglich, daß das in diesen Brenner 6 eingesetzte System, insbesondere eines Doppellichtbogensystemes, für die weiteren zuvor beschriebenen Brenner 6 eingesetzt werden kann.

Dieser Brenner 6 wird wiederum aus den einzelnen Teilen, wie zuvor beschrieben, gebildet. Dieser Brenner 6 wird nunmehr von zumindest zwei unabhängig galvanisch getrennten Stromquellen 2, 126 mit Energie versorgt, d.h. daß im Versorgungsgerät 1 nicht mehr nur eine Stromquelle 2 sondern eine weitere Stromquelle 126 angeordnet ist, welche über die Steuervorrichtung 3 ebenfalls geregelt bzw. gesteuert werden kann. Diese Stromquellen 2, 126 können beispielsweise durch eine Inverterstromquelle, wie sie aus dem Stand der Technik bekannt sind, gebildet werden. Durch den Einsatz mehrerer Stromquellen 2, 126, insbesondere von zwei Stromquellen 2, 126, wird erreicht, daß der Brenner 6 mit zwei unterschiedlichen, unabhängigen Stromkreisen versorgt werden kann.

Wie schematisch dargestellt, wird der Brenner 6, insbesondere die Kathode 100, mit den beiden Stromquellen 2, 126 verbunden. Damit jedoch ein erster Stromkreis aufgebaut werden kann, wird die erste Stromquelle 2 mit der Anode 93 verbunden, sodaß nunmehr zwischen der Kathode 100 und der Anode 93 ein entsprechender Lichtbogen 96 gebildet bzw. gezündet werden kann. Dieser Lichtbogen 96 wird im Inneren des Brenners 6, insbesondere im Zwischenraum 83, gebildet, wobei, wie zuvor beschrieben, durch die Gasströmung der Lichtbogen 96 in den vorderen Bereich des Brenners 6 wandert. Selbstverständlich ist es möglich, daß durch Anordnung der Anode 93 an einer anderen Stelle im Brenner 6, beispielsweise im Bereich des Führungskanals 77, der Lichtbogen 96 gezielt an einer beliebigen Stelle im Inneren des Brenners 6 gebildet werden kann. Hierbei muß nur darauf geachtet werden, daß die Anoden 93 gegenüber den weiteren stromführenden Teilen isoliert wird, sodaß ein Übergreifen des Lichbogens 96 verhindert wird.

Die weitere Stromquelle 126 wird nun wiederum einerseits mit der Kathode 100 des Brenners 6 verbunden und andererseits mit dem Werkstück 20. Dadurch wird nunmehr erreicht, daß zwischen dem Brenner 6 und dem Werkstück 20 ein Potentialunterschied gebildet wird, sodaß es durch ein entsprechendes Zündverfahren, wie es zuvor beschrieben ist, zu einer Ausbildung eines weiteren Lichtbogens 127 zwischen dem Werkstück 20 und der Kathode 100 kommt. Dabei tritt nunmehr der Effekt ein, daß durch das Verbinden des Werkstückes 20 mit der Stromquelle 126 der Lichtbogen 127 vom Inneren des Brenners 6, also von der Kathode 100, durch die Bohrung 94 an das Werkstück 20 gebildet wird. Dadurch wird ein sogenannter direkt wirkender Lichtbogen 127 gebildet und es kann mit diesem Brenner 6 sowohl ein Schneidverfahren als auch ein Schweißverfahren durchgeführt werden. Damit ein entsprechendes Schweißverfahren durchgeführt werden kann, muß der Benutzer lediglich einen Zusatzwerkstoff bzw. Zusatzmaterial, insbesondere einen Schweißdraht 128, in den Bereich des extern wirkenden Lichtbogens 127 zuführen.

Durch die Verwendung von zwei unabhängigen Stromquellen 2, 126 wird in vorteilhafter Weise erreicht, daß die Steuerung der Energiemenge für die einzelnen Lichtbögen 96, 127 unabhängig voneinander durchgeführt werden kann. Weiters wird durch eine derartige Ausbildung des Brenners 6 mit zwei Lichtbögen 96, 127 erreicht, daß die Erhitzung bzw. Erwärmung des im Brenner 6 umgewandelten Gases erhöht wird. Selbstverständlich ist es möglich, daß bei einem derartigen Brenner 6 die einzelnen Lichtbögen 96, 127 unabhängig voneinander gebildet bzw. aufgebaut werden können, d.h. daß beispielsweise der Brenner 6 mit dem extern wirkenden Lichtbogen 127 betrieben wird, ohne daß dabei der im Inneren des Brenners 6 mögliche Lichtbogen 96 gezündet wird. Es ist auch möglich, daß beliebig viele Lichtbögen 96, 127 gebildet werden können, wobei jedoch darauf zu achten ist, daß die einzelnen Stromkreise für die einzelnen Lichtbögen 96, 127 voneinander isoliert werden, sodaß eine unabhängige Steuerung erfolgen kann.

Der Ordnung halber sei abschließend darauf hingewiesen, daß zum besseren Verständnis des Aufbaus des Brenners dieser bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3, 4; 5; 6; 7; 8; 9; 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Versorgungsgerät
- 2: Stromquelle
- 3: Steuervorrichtung
- 4: Sperrelement
- 5: Behälter

- 6: Brenner
- 7: Versorgungsleitung
- 8: Flüssigkeit
- 9: Leitung
- 10: Leitung

- 11: Kühlkreislauf
- 12: Strömungswächter
- 13: Flüssigkeitsbehälter
- 14: Kühlleitung
- 15: Kühlleitung

- 16: Eingabe- und/oder Anzeigevorrichtung
- 17: Bedienungselement
- 18: Taster
- 19: Gas
- 20: Werkstück

- 21: Schutzgehäuse
- 22: Aufnahmeteil
- 23: Bohrung
- 24: Bohrung
- 25: Bohrung

- 26: Durchmesser
- 27: Durchmesser
- 28: Durchmesser
- 29: Stirnfläche
- 30: Dichtungsnut

- 31: Dichtung
- 32: Stirnfläche
- 33: Dichtungsnut
- 34: Dichtung
- 35: Bohrung

- 36: Bohrung
- 37: Mittelachse
- 38: Winkel
- 39: Längsmittelachse
- 40: Anschlußstück

- 41: Durchmesser
- 42: Durchmesser
- 43: Isolierelement
- 44: Bohrung
- 45: Durchmesser

- 46: Außendurchmesser
- 47: Außendurchmesser
- 48: Stirnfläche
- 49: Länge
- 50: Länge

- 51: Länge
- 52: Kathodenhülse
- 53: Außendurchmesser
- 54: Vorsprung
- 55: Außendurchmesser

- 56: Außenfläche
- 57: Stirnfläche
- 58: Dichtungsnut
- 59: Dichtung
- 60: Teil

- 61: Teil
- 62: Teil
- 63: Längsbereich
- 64: Außendurchmesser
- 65: Isolierhülse

- 66: Übergangsstück
- 67: Kanal
- 68: Endbereich
- 69: Außendurchmesser
- 70: Vorsprung

- 71: Vorsprung
- 72: Bohrung
- 73: Durchmesser
- 74: Außendurchmesser
- 75: Gewinde

- 76: Gewindegang
- 77: Führungskanal
- 78: Hülse
- 80: Nut

- 81: Bohrung
- 82: Bohrung
- 83: Zwischenraum
- 84: Verdampfungselement
- 85: Länge

- 86: Bohrung
- 87: Durchmesser
- 88: Gewinde
- 89: Gewindegang
- 90: Fließkanal

- 91: Bohrung
- 92: Durchmesser
- 93: Anode
- 94: Bohrung
- 95: Durchmesser

- 96: Lichtbogen
- 97: Bohrung
- 98: Bohrung
- 99: Heizelement
- 100: Kathode

- 103: Heizelement
- 104: Zwischenraum
- 105: Bohrung

- 106 107 108: Vorsprung
- 109: Bohrung
- 110: Bohrung

- 111: Zusatzleitung
- 112: Strömungskanal
- 113: Längsrille

- 120: Behälter

- 121: Leitung
- 122: Leitung
- 123: Mischventil
- 124: Steuerleitung
- 125: Flüssigkeit

- 126: Stromquelle
- 127: Lichtbogen
- 128: Schweißdraht

## Patentansprüche

1. Schweissgerät für ein Schneidverfahren, insbesondere ein Wasserdampf-Schneidverfahren, bestehend aus einem Brenner (6), einer Steuervorrichtung (3), einem Flüssigkeitsversorgungssystem und einer Stromquelle (2), wobei der Brenner über Leitungen (9, 10) mit der Stromquelle (2) und über eine Versorgungsleitung (7) mit dem Flüssigkeitsversorgungssystem verbunden ist, und im Brenner zumindest ein Kanal bzw. Strömungskanal (112) mit einem vorgegebenen Querschnitt angeordnet und zur Umwandlung der Flüssigkeit in einen gasförmigen Zustand insbesondere ein Gas, ausgebildet ist, wobei der Brenner zumindest eine Kathode (100) und eine Anode (93) umfaßt, und das Flüssigkeitsversorgungssystem über eine Leitung (7) mit einem Zwischenraum zwischen der Kathode und der Anode verbunden ist, **dadurch gekennzeichnet, daß** der Brenner ein Heizelement (99, 103) enthält und daß eine Länge des Kanals bzw. Strömungskanals (112) bzw. eine Oberfläche desselben so bemesen ist, daß bei einer vorbestimmbaren Wärmezufuhr durch die Heizelemente eine zum vollständigen Verdampfen der zugeführten Flüssigkeit (8) benötigte Wärmeenergie zuführbar ist.

2. Schweissgerät nach Anspruch 1, **dadurch gekennzeichnet, daß** das Heizelement (99, 103) durch Widerstandsheizelemente, Heizpatronen, Strahlungsheizkörper oder dgl. gebildet ist.

3. Schweissgerät nach einem der Ansprüche 1 oder 2, **dadurch gekennzeichnet, daß** das Heizelement (99, 103) durch ein Verdampfungselement (84), welches sich vom Zwischenraum (83) zwischen der Kathode (100) und Anode (93) bis in den Bereich des Kanals bzw. Strömungskanals (112) erstreckt, gebildet ist.

4. Schweissgerät nach Anspruch 3, **dadurch gekennzeichnet, daß** das Verdampfungselement (84) zumindest einen Teil der Oberfläche des Kanals bzw. Strömungskanals (112) bildet.

5. Schweissgerät nach einem oder mehreren der vorhergehenden Ansprüche, **dadurch gekennzeichnet, daß** das Flüssigkeitsversorgungssystem beispielsweise durch einen die Flüssigkeit (8) aufnehmenden Behälter (5) oder eine Zufuhrleitung für eine unter Druck stehende Flüssigkeit (8) gebildet ist.

6. Schweissgerät nach einem oder mehreren der vorhergehenden Ansprüche, **dadurch gekennzeichnet, daß** das Flüssigkeitsversorgungssystem und/oder der Behälter (5) für die Flüssigkeit (8) in dem Versorgungsgerät (1) angeordnet ist.

7. Schweissgerät nach einem oder mehreren der vorhergehenden Ansprüche, **dadurch gekennzeichnet, daß** eine die Kathode (100) bildende Kathodenhülse (52) einen Zirkulationskanal, z.B. Bohrungen, die sich in Längsrichtung derselben erstrecken, aufweist, und daß ein Auslaß des Zirkulationskanals mit dem Kanal bzw. Strömungskanal (112) bzw. dem Zwischenraum (83) zwischen der Kathode (100) und der Anode (93) verbunden ist.

8. Schweissgerät nach einem oder mehreren der vorhergehenden Ansprüche, **dadurch gekennzeichnet, daß** der Kanal bzw. Strömungskanal (112) um eine Längsmittelachse (39) des Brenners (6) umlaufend, z.B. schraubenlinienförmig, ausgebildet ist.

9. Schweissgerät nach einem oder mehreren der vorhergehenden Ansprüche, **dadurch gekennzeichnet, daß** der Kanal bzw. Strömungskanal (112) parallel zur Längsmittelachse (39) des Brenners (6) verlaufend angeordnet ist.

10. Schweissgerät nach einem oder mehreren der vorhergehenden Ansprüche, **dadurch gekennzeichnet, daß** der Kanal bzw. der Strömungskanal (112) über seine Länge einen unterschiedlichen oder sich bevorzugt stetig verjüngenden Querschnitt aufweist.

11. Schweissgerät nach einem oder mehreren der vorhergehenden Ansprüche, **dadurch gekennzeichnet, daß** im Versargnngsgerät (1) ein Hochfrequenzgenerator zum Zünden eines Lichtbogens (96) zwischen der Kathode (100) und der Anode (93) angeordnet ist.

12. Schweissgerät nach einem oder mehreren der vorhergehenden Ansprüche, **dadurch gekennzeichnet. daß** der Brenner (6) aus mehreren Bauelementen, beispielsweise aus einem Aufnahmeteil (22), einem Isolierelement (43), einer Kathodenhülse (52), einer Isolierhülse (65), einem Übergangsstück (66), einer Hülse (78) und einem Verdampfungselement (84) gebildet ist.

13. Schweissgerät nach einem oder mehreren der vorhergehenden Ansprüche, **dadurch gekennzeichnet, daß** das Verdampfungselement (84) eine Bohrung (86) aufweist, in welcher ein Gewinde (88) für den Fließkanal (90) angeordnet ist.

14. Schweissgerät nach einem oder mehreren der vorhergehenden Ansprüche, **dadurch gekennzeichnet, daß** das Gewinde (88) des Yerdampfungselementes (84), insbesondere ein Gewindegang (89), eine Steigung zwischen 1 mm und 6 mm bevorzugt 3 mm aufweist.

15. Schweissgerät nach einem oder mehreren der vorhergehenden Ansprüche, **dadurch gekennzeichnet, daß** der Fließkanal (90) für die Flüssigkeit (8) durch zwei nebeneinander angeordneten Gewindegängen (89) gebildet ist.

16. Schweissgerät nach einem oder mehreren der vorhergehenden Ansprüche, **dadurch gekennzeichnet, daß** dem Gewinde (86) des Verdampfungselementes (84) ein Heizelement (99) zugeordnet ist.

17. Schweissgerät nach einem oder mehreren der vorhergehenden Ansprüche, **dadurch gekennzeichnet, daß** das Heizelement (99) an der Außenfläche des Verdampfungselementes (84) angeordnet ist.

18. Schweissgerät nach einem oder mehreren der vorhergehenden Ansprüche, **dadurch gekennzeichnet, daß** in eine Bohrung bzw. eine Öffnung des Verdampfungselementes (84) eine Anode (93) aus einem gut elektrisch leitenden Material eingesetzt bzw. über eine Gewindeanordnung einschraubbar ist.

19. Schweissgerät nach einem oder mehreren der vorhergehenden Ansprüche, **dadurch gekennzeichnet, daß** die Anode (93) in Längsrichtung der Längsmittelachse (39) des Brenners (6) eine Bohrung (94) aufweist, über die das im Inneren des Brenners (6) gebildete Gas (19) austritt.

20. Schweissgerät nach einem oder mehreren der vorhergehenden Ansprüche, **dadurch gekennzeichnet, daß** die Kathodenhülse (52) bevorzugt aus mehreren Teilen (60 bis 62) gebildet ist.

21. Schweissgerät nach einem oder mehreren der vorhergehenden Ansprüche, **dadurch gekennzeichnet, daß** die einzelnen Teile (60 bis 62) der Kathodenhülse (52) aus unterschiedlichen Materialien, insbesondere aus elektrisch leitenden Materialien, gebildet sind und beispielsweise über eine Gewindeanordnung miteinander verbunden sind.

22. Schweissgerät nach einem oder mehreren der vorhergehenden Ansprüche, **dadurch gekennzeichnet, daß** im Bereich der Anode (93) die Kathodenhülse (52) die Kathode (100) ausbildet.

23. Schweissgerät nach einem oder mehreren der vorhergehenden Ansprüche, **dadurch gekennzeichnet, daß** zwischen der Kathodenhülse (52) und dem Verdampfungselement (84) ein Zwischenraum (83) gebildet ist, durch den das Gas (19) zur Bohrung (94) der Anode (93) strömt.

24. Schweissgerät nach einem oder mehreren der vorhergehenden Ansprüche, **dadurch gekennzeichnet, daß** der Lichtbogen (96) im Zwischenraum (83) zwischen der Anode (93) und der Kathode (100) ausgabildet ist.

25. Schweissgerät nach einem oder mehreren der vorhergehenden Ansprüche, **dadurch gekennzeichnet, daß** in der Kathodenhülse (52), insbesondere im Teil (60), Bohrungen (97, 98) für einen Kühlkreislauf (11) einer Kühlflüssigkeit angeordnet sind, wobei die Bohrungen (97, 98) beispielsweise über Kühlleitung (14, 15) mit dem Versorgungsgerät (1) verbunden sind.

26. Schweissgerät nach einem oder mehreren der vorhergehenden Ansprüche, **dadurch gekennzeichnet, daß** zwischen einem Teil (60) und einem weiteren Teil (61) der Kathodenhülse (52) ein Zwischenraum (104) für die Kühlflüssigkeit bzw. für die Flüssigkeit (8) angeordnet ist, wobei die Bohrungen (97, 98) in den Zwischenraum (104) hineinmünden.

27. Schweissgerät nach einem oder mehreren der vorhergehenden Ansprüche, **dadurch gekennzeichnet, daß** die Kathodenhülse (52) über die Isolierhülse (65) und dem Isolierelement (43) von den weiteren Bauelementen des Brenners (6) elektrisch isoliert ist.

28. Schweissgerät nach einem oder mehreren der vorhergehenden Ansprüche, **dadurch gekennzeichnet, daß** die Kathodenhülse (52) über die Isolierhülse (65) und dem Isolierelement (43) in einer Bohrung (24) des Aufnahmeteils (22) positioniert ist.

29. Schweissgerät nach einem oder mehreren der vorhergehenden Ansprüche, **dadurch gekennzeichnet, daß** über die Isolierhülse (65) eine Hülse (78) angeordnet ist.

30. Schweissgerät nach einem oder mehreren der vorhergehenden Ansprüche, **dadurch gekennzeichnet, daß** die Hülse (78) einen Zwischenraum zwischen der Isolierhülse (65) und dem Gewinde (88) des Verdampfungselementes (84) ausfüllt.

31. Schweissgerät nach einem oder mehreren der vorhergehenden Ansprüche, **dadurch gekennzeichnet, daß** die Hülse (78) im Endbereich, der der Anode (93) bzw. der Kathode (100) zugeordnet ist, eine umlaufende Nut (80) aufweist, wobei die Nut (80) mit dem Fließkanal (90) in Verbindung steht.

32. Schweissgerät nach einem oder mehreren der vorhergehenden Ansprüche, **dadurch gekennzeichnet, daß** im Bereich der Nut (80) die Hülse (78) radial um die Längsmittelachse (39) verlaufende Bohrungen (81) aufweist, wobei die Bohrungen (81) in den Zwischenraum (83) zwischen dem Verdampfungselement (84) und der Kathodenhülse (52) münden.

33. Schweissgerät nach einem oder mehreren der vorhergehcnden Ansprüche, **dadurch gekennzeichnet, daß** zum Befestigen des Verdampfungselementes (84) dieses bevorzugt über eine Gewindeanordnung mit einem Übergangsstück (66) verbunden ist, wobei das Übergangsstück (66) in einer Bohrung (23) des Aufnahmeteils (22) positioniert bzw. über eine Gewindeanordnung befestigt ist.

34. Schweissgerät nach einem oder mehreren der vorhergehenden Ansprüche, **dadurch gekennzeichnet, daß** das Übergangsstück (66) eine Bohrung (72) aufweist, in der bevorzugt ein Gewinde (75), welches dem Gewinde (88) des Verdampfungselementes (84) entspricht, angeordnet ist.

35. Schweissgerät nach einem oder mehreren der vorhergehenden Ansprüche, **dadurch gekennzeichnet, daß** das Gewinde (88) des Übergangsstückes (66), insbesondere ein Gewindegang (76), eine Steigung zwischen I mm und 6 mm bevorzugt 3 mm aufweist.

36. Schweissgerät nach einem oder mehreren der vorhergehenden Ansprüche, **dadurch gekennzeichnet, daß** ein Führungskanal (77) für die Flüssigkeit (8) im Übergangsstück (66) angeordnet ist.

37. Schweissgerät nach einem oder mehreren der vorhergehenden Ansprüche, **dadurch gekennzeichnet, daß** der Führungskanal (77) durch zwei nebeneinander angeordneten Gewindegängen (76) gebildet ist.

38. Schweissgerät nach einem oder mehreren der vorhergehenden Ansprüche, **dadurch gekennzeichnet, daß** zwischen dem Übergangsstück (66), welches in der Bohrung (23) des Aufnahmeteils (22) angeordnet ist, und der Isolierhülse (65), welches in der Bohrung (24) des Aufnahmeteils (22) angeordnet ist, ein Kanal (67) angeordnet bzw. ausgebildet ist.

39. Schweissgerät nach einem oder mehreren der vorhergehenden Ansprüche, **dadurch gekennzeichnet, daß** das Aufnahmeteil (22) weitere Bohrungen (35, 36) zum Verbinden des Aufnahmeteils (22), insbesondere des Brenners (6), über die Versorgungsleitung (7) mit dem Versorgungsgerät (1) aufweist.

40. Schweissgerät nach einem oder mehreren der vorhergehenden Ansprüche, **dadurch gekennzeichnet, daß** eine der Bohrungen (35, 36), insbesondere die Bohrung (35), in den Kanal (67) mündet.

41. Schweissgerät nach einem oder mehreren der vorhergehenden Ansprüche, **dadurch gekennzeichnet, daß** die Flüssigkeit (8) von dem Behälter (5) im Versorgungsgerät (1) über die Versorgungsleitung (7), den Kanal (67) und dem Führungskanal (77) in den Fließkanal (90) des Verdampfungselementes (84) strömt.

42. Schweissgerät nach einem oder mehreren der vorhergehenden Ansprüche, **dadurch gekennzeichnet, daß** die einzelnen Bauelemente des Brenners (6) in ein Schutzgehäuse (21) eingebaut sind.

43. Schweissgerät nach einem oder mehreren der vorhergehenden Ansprüche, **dadurch gekennzeichnet, daß** das Schutzgehäuse (21) aus einem nicht elektrisch leitenden Material gebildet ist.

44. Schweissgerät nach einem oder mehreren der vorhergehenden Ansprüche, **dadurch gekennzeichnet, daß** zum Fördern der Flüssigkeit (8) von dem Behälter (5) des Versorgungsgerätes (1) zum Brenner (6) in dem Versorgungsgerät (1) eine Pumpvorrichtung angeordnet ist.

45. Schweissgerät nach einem oder mehreren der vorhergehenden Ansprüche, **dadurch gekennzeichnet, daß** das Gewinde (88) an der Außenfläche der Hülse (78) angeordnet ist.

46. Schweissgerät nach einem oder mehreren der vorhergehenden Ansprüche, **dadurch gekennzeichnet, daß** in der Bohrung (86) benachbart zu dem an der Hülse (78) angeordneten Gewinde (88) das Heizelement (99) angeordnet ist.

47. Schweissgerät nach einem oder mehreren der vorhergehenden Ansprüche, **dadurch gekennzeichnet, daß** in der Bohrung (72) ein weiteres Heizelement (103) angeordnet ist, welches dem Gewinde (88) der Hülse (78) zugeordnet ist.

48. Schweissgerät nach einem oder mehreren der vorhergehenden Ansprüche, **dadurch gekennzeichnet, daß** die Zuführung der Flüssigkeit (8) zu dem Kanal (67) oder dem Führungskanal (77) oder dem Fließkanal (90) vom Kühlkreislauf (11) erfolgt, wobei die einzelnen Bauelemente, insbesondere die Kathodenhülse (52), die Isolierhülse (65) und die Hülse (78), radial um die Längsmittelachse (39) verlaufende Bohrungen (105 bis 107), die fluchtend zueinander angeordnet sind, aufweisen.

49. Schweissgerät nach einem oder mehreren der vorhergehenden Ansprüche, **dadurch gekennzeichnet, daß** die Bohrungen (105, 106, 107) der Kathodenhülse (52) mit den Bohrungen (97, 98) des Kühlkreislaufes (11) verbunden sind.

50. Schweissgerät nach einem oder mehreren der vorhergehenden Ansprüche, **dadurch gekennzeichnet, daß** der Brenner (6) aus den Bauelementen der Kathodenhülse (52), der Isolierhülse (65) und dem Verdampfungselement (84) gebildet ist.

51. Schweissgerät nach einem oder mehreren der vorhergehenden Ansprüche, **dadurch gekennzeichnet, daß** die Isolierhülse (65) und das Verdampfungselement (84) durch das Aufnahmeteil (22) zueinander fixiert bzw. positioniert sind, wobei beispielsweise in den Berührungsbereichen der einzelnen Bauelemente eine Gewindeanordnung angeordnet ist.

52. Schweissgerät nach einem oder mehreren der vorhergehenden Ansprüche, **dadurch gekennzeichnet, daß** in dem Versorgungsgerät (1) zumindest zwei unterschiedliche Flüssigkeitsversorgungssysteme und/oder Behälter (5, 120) angeordnet sind.

53. Schweissgerät nach einem oder mehreren der vorhergehenden Ansprüche, **dadurch gekennzeichnet, daß** die Flüssigkeitsversorgungssysteme und/oder die Behälter (5, 120) über Leitungen (121, 122) unter Zwischenschaltung einer Mischvorrichtung bzw. eines Mischsystems, insbesondere eines Mischventiles (123), miteinander verbunden sind.

54. Schweissgerät nach einem oder mehreren der vorhergehenden Ansprüche, **dadurch gekennzeichnet, daß** ein Ausgang des Mischventiles (123) mit dem Brenner (6) bzw. dem Anschlußstück (40) des Brenners (6) und/oder mit dem Kühlkreislauf (11) verbunden ist.

55. Schweissgerät nach einem oder mehreren der vorhergehenden Ansprüche, **dadurch gekennzeichnet, daß** die Steuervorrichtung (3) über eine Steuerleitung (124) mit einem Steuereingang des Mischventils (123) verbunden ist.

56. Schweissgerät nach einem oder mehreren der vorhergehenden Ansprüche, **dadurch gekennzeichnet, daß** das Mischverhältnis der beiden in dem Behälter (5, 120) angeordneten Flüssigkeiten (8, 125), insbesondere von Wasser und anorganischen oder organischen Flüssigkeiten (125), vom Benutzer über die Eingabe- und/oder Anzeigevorrichtung (16) einstellbar bzw. von der Steuervorrichtung (3) regelbar oder steuer- bar ist.

57. Schweissgerät nach einem oder mehreren der vorhergehenden Ansprüche, **dadurch gekennzeichnet, daß** der Brenner (6) mit zumindest zwei galvanisch getrennten Stromquellen (2, 126) verbunden ist.

58. Schweissgerät nach einem oder mehreren der vorhergehenden Ansprüche, **dadurch gekennzeichnet, daß** die erste Stromquelle (2) mit der Kathode (100) und der Anode (93) des Brenners (6) und die weitere Stromquelle (126) mit der Kathode (100) des Brenners (6) und dem Werkstück (20) zum Ausbilden jeweils eines Lichtbogens (96, 127) verbunden ist.

59. Verfahren zum Schneiden von Materialien, insbesondere Wasserdampf-Schneidverfahren, bei dem zwischen zumindest einer Anode (93) und einer Kathode (100) ein Lichtbogen aufgebaut wird, mit dem ein aus einer Flüssigkeit (8) hergestelltes Gas ionisiert und erhitzt wird, wobei die Flüssigkeit oder die in den gasförmigen Zustand übergeführte Flüssigkeit unter Druck dem Brenner bzw. dem Zwischenraum zwischen Anode und Kathode zugeführt wird, **dadurch gekennzeichnet, daß** die Wärmeenergie zur Verdampfung der Flüssigkeit über ein Heizelement (99, 103) und den Lichtbogen in die Bauelemente des Brenners übertragen wird, wobei die Menge der Flüssigkeit so geregelt wird, daß die Wärmeenergie zur Umwandlung der Flüssigkeit in den gasförmigen Zustand verbraucht wird.

60. Verfahren nach Anspruch 59, **dadurch gekennzeichnet, daß** die Flüssigkeit über einenKanal bzw. Strömungskanals zugeführt wird und eine Länge des Kanals bzw. Strömungskanals größer gewählt wird als die zum Umwandeln der Flüssigkeit in den gasförmigen Zustand in Abhängigkeit von der zugeführten Wärmeenergie benötigte Länge.

61. Verfahren nach Anspruch 59 oder 60, **dadurch gekennzeichnet, daß** vor dem Zünden des Lichtbogens im Brenner die Flüssigkeit in das Gas umgewandelt wird, wobei sich das Gas zwischen der Anode und der Kathode sammelt.

62. Verfahren nach einem oder mehreren der vorhergehenden Ansprüche 59 bis 61, **dadurch gekennzeichnet, daß** zum Zünden des Lichtbogens ein Hochfrequenzsignal auf die Energieversorgung des Brenners, insbesondere der Anode und der Kathode, aufmoduliert wird.

63. Verfahren nach einem oder mehreren der vorhergehenden Ansprüche 59 bis 62, **dadurch gekennzeichnet, daß** die Flüssigkeit im Brenner radial in Längsrichtung um die Längsmittelachse des Brenners durch den Fließkanal befördert wird.

64. Verfahren nach einem oder mehreren der vorhergehenden Ansprüche 59 bis 63, **dadurch gekennzeichnet, daß** die Flüssigkeit außerhalb des Brenners in einen gasförmigen Zustand übergeführt und das Gas, insbesondere der Wasserdampf, in den Zwischenraum zwischen Anode und Kathode zugeführt wird.

65. Verfahren nach einem oder mehreren der vorhergahenden Ansprüche 59 bis 64, **dadurch gekennzeichnet, daß** ein Lichtbogen zwischen einer Anode und einer Kathode im Brenner und der Kathode im Brenner und einem Werkstück aufgebaut wird, wobei das Werkstück an einem höheren positiven Potential anliegt als die Anode im Brenner.

66. Verfahren nach einem oder mehreren der vorhergehenden Ansprüche 59 bis 65, **dadurch gekennzeichnet, daß** über den Brenner zumindest zwei Stromkreise aufgebaut werden, wobei der erste Stromkreis zwischen der Kathode und der Anode des Brenners und der zweite Stromkreis zwischen der Kathode des Brenners und dem Werkstück gebildet wird.

67. Verfahren nach einem oder mehreren der vorhergehenden Ansprüche 59 bis 66, **dadurch gekennzeichnet, daß** zwischen der Kathode und der Anode ein Lichtbogen und zwischen der Kathode und dem Werkstück ein weiterer Lichtbogen gebildet wird.

## Claims

1. Welding apparatus for a cutting process, in particular a steam cutting process, consisting of a torch (6), a control system (3), a liquid supply system and a power source (2), the torch being connected via lines (9, 10) to the power source (2) and via a supply line (7) to the liquid supply system, and at least one passage or flow passage (112) with a predetermined cross section, designed to convert the liquid into a gaseous state, in particular a gas, is provided in the torch, the torch having at least a cathode (100) and an anode (93), and the liquid supply system being connected via a line (7) to a gap between the cathode and the anode, **characterised in that** the torch contains a heating element (99, 103) and a length of the passage or flow passage (112) and a surface thereof is dimensioned so that when a predeterminable amount of heat is applied by the heating elements, a heat energy needed to completely vaporise the delivered liquid (8) can be delivered.

2. Welding apparatus as claimed in claim 1, **characterised in that** the heating element (99, 103) is provided in the form of resistance heating elements, heating cartridges, radiant heaters or such like.

3. Welding apparatus as claimed in one of claims 1 or 2, **characterised in that** the heating element (99, 103) is provided in the form of a vaporising element (84), which extends from the gap (83) between the cathode (100) and anode (93) into the region of the passage or flow passage (112).

4. Welding apparatus as claimed in claim 3, **characterised in that** the vaporising element (84) forms at least a part of the surface of the passage or flow passage (112).

5. Welding apparatus as claimed in one or more of the preceding claims, **characterised in that** the liquid supply system is provided, for example, in the form of a container (5) receiving the liquid (8) or a line for delivering a liquid (8) under pressure.

6. Welding apparatus as claimed in one or more of the preceding claims, **characterised in that** the liquid supply system and/or the container (5) for the liquid (8) is disposed in the supply apparatus (1).

7. Welding apparatus as claimed in one or more of the preceding claims, **characterised in that** a cathode sleeve (52) forming the cathode (100) has a circulation passage, e.g. bores, extending in the longitudinal direction thereof and an outlet of the circulation passage is connected to the passage or flow passage (112) and the gap (83) between the cathode (100) and the anode (93).

8. Welding apparatus as claimed in one or more of the preceding claims, **characterised in that** the passage or flow passage (112) is designed so that it runs around a longitudinal mid-axis (39) of the torch (6), e.g. is helical in shape.

9. Welding apparatus as claimed in one or more of the preceding claims, **characterised in that** the passage or flow passage (112) is arranged so as to extend parallel with the longitudinal mid-axis (39) of the torch (6).

10. Welding apparatus as claimed in one or more of the preceding claims, **characterised in that** the passage or flow passage (112) has a differing or preferably constantly tapering cross section along its length.

11. Welding apparatus as claimed in one or more of the preceding claims, **characterised in that** a high-frequency generator for igniting an arc (96) between the cathode (100) and the anode (93) is disposed in the supply apparatus (1).

12. Welding apparatus as claimed in one or more of the preceding claims, **characterised in that** the torch (6) is made up of several components, for example a receiving part (22), an insulating element (43), a cathode sleeve (52), an insulating sleeve (65), a transition piece (66), a sleeve (78) and a vaporising element (84).

13. Welding apparatus as claimed in one or more of the preceding claims, **characterised in that** the vaporising element (84) has a bore (86), in which a thread (88) for the flow passage (90) is arranged.

14. Welding apparatus as claimed in one or more of the preceding claims, **characterised in that** the thread (88) of the vaporising element (84), in particular a thread pitch (89), has a lead of between 1 mm and 6 mm, preferably 3 mm.

15. Welding apparatus as claimed in one or more of the preceding claims, **characterised in that** the flow passage (90) for the liquid (8) is made up of two thread pitches (89) arranged adjacent to one another.

16. Welding apparatus as claimed in one or more of the preceding claims, **characterised in that** a heating element (99) is assigned to the thread (86) of the vaporising element (84).

17. Welding apparatus as claimed in one or more of the preceding claims, **characterised in that** the heating element (99) is arranged on the external face of the vaporising element (84).

18. Welding apparatus as claimed in one or more of the preceding claims, **characterised in that** an anode (93) made from a material that is not a good electrical conductor is used or can be screwed into a bore or an orifice of the vaporising element (84) by means of a thread arrangement.

19. Welding apparatus as claimed in one or more of the preceding claims, **characterised in that** the anode (93) has a bore (94) in the longitudinal direction of the longitudinal mid-axis (39) of the torch (6), through which the gas (19) generated in the interior of the torch (6) is discharged.

20. Welding apparatus as claimed in one or more of the preceding claims, **characterised in that** the cathode sleeve (52) is preferably made up of several parts (60 to 62).

21. Welding apparatus as claimed in one or more of the preceding claims, **characterised in that** the individual parts (60 to 62) of the cathode sleeve (52) are made from different materials, in particular from electrically conductive materials, and are connected to one another by means of a thread arrangement, for example.

22. Welding apparatus as claimed in one or more of the preceding claims, **characterised in that** the cathode sleeve (52) serves as the cathode (100) in the region of the anode (93).

23. Welding apparatus as claimed in one or more of the preceding claims, **characterised in that** a gap (83) is formed between the cathode sleeve (52) and the vaporising element (84), through which the gas (19) flows to the bore (94) of the anode (93).

24. Welding apparatus as claimed in one or more of the preceding claims, **characterised in that** the arc (96) is formed in the gap (83) between the anode (93) and the cathode (100).

25. Welding apparatus as claimed in one or more of the preceding claims, **characterised in that** bores (97, 98) for a coolant circuit (11) for a coolant liquid are provided in the cathode sleeve (52), in particular in the part (60), the bores (97, 98) being connected via coolant line (14, 15) with the supply apparatus (1).

26. Welding apparatus as claimed in one or more of the preceding claims, **characterised in that** a gap (104) is provided between a part (60) and another part (61) of the cathode sleeve (52) for the coolant liquid or for the liquid (8), the bores (97, 98) opening into the gap (104).

27. Welding apparatus as claimed in one or more of the preceding claims, **characterised in that** the cathode sleeve (52) is electrically insulated from the other components of the torch (6) by means of the insulating sleeve (65) and the insulating element (43).

28. Welding apparatus as claimed in one or more of the preceding claims, **characterised in that** the cathode sleeve (52) is positioned in a bore (24) of the receiving part (22) by means of the insulating sleeve (65) and the insulating element (43).

29. Welding apparatus as claimed in one or more of the preceding claims, **characterised in that** a sleeve (78) is positioned by means of the insulating sleeve (65).

30. Welding apparatus as claimed in one or more of the preceding claims, **characterised in that** the sleeve (78) fills a gap between the insulating sleeve (65) and the thread (88) of the vaporising element (84).

31. Welding apparatus as claimed in one or more of the preceding claims, **characterised in that** in the end region co-operating with the anode (93) and the cathode (100), the sleeve (78) has a circumferential groove (80), the groove (80) communicating with the flow passage (90).

32. Welding apparatus as claimed in one or more of the preceding claims, **characterised in that** the sleeve (78) has bores (81) radially running around the longitudinal mid-axis (39) in the region of the groove (80), the bores (81) opening into the gap (83) between the vaporising element (84) and the cathode sleeve (52).

33. Welding apparatus as claimed in one or more of the preceding claims, **characterised in that** in order to fix the vaporising element (84), the latter is preferably connected to a transition piece (66) by means of a thread arrangement, the transition piece (66) being positioned in a bore (23) of the receiving part (22) and fixed by means of a thread arrangement.

34. Welding apparatus as claimed in one or more of the preceding claims, **characterised in that** the transition piece (66) has a bore (72), in which a thread (75) is preferably arranged, which matches the thread (88) of the vaporising element (84).

35. Welding apparatus as claimed in one or more of the preceding claims, **characterised in that** the thread (88) of the transition piece (66), in particular a thread pitch (76), has a lead of between 1 mm and 6 mm, preferably 3 mm.

36. Welding apparatus as claimed in one or more of the preceding claims, **characterised in that** a guide passage (77) is provided in the transition piece (66) for the liquid (8).

37. Welding apparatus as claimed in one or more of the preceding claims, **characterised in that** the guide passage (77) is formed by two thread pitches (76) arranged adjacent to one another.

38. Welding apparatus as claimed in one or more of the preceding claims, **characterised in that** a passage (67) is provided or formed between the transition piece (66), which is arranged in the bore (23) of the receiving part (22), and the insulating sleeve (65), which is arranged in the bore (24) of the receiving piece (22).

39. Welding apparatus as claimed in one or more of the preceding claims, **characterised in that** the receiving part (22) has other bores (35, 36) for connecting the receiving part (22), in particular the torch (6) to the supply apparatus (1) via the supply line (7).

40. Welding apparatus as claimed in one or more of the preceding claims, **characterised in that** one of the bores (35, 36), in particular the bore (35), opens into the passage (67).

41. Welding apparatus as claimed in one or more of the preceding claims, **characterised in that** the liquid (8) flows from the container (5) in the supply apparatus (1) via the supply line (7), the passage (67) and the guide passage (77) into the flow passage (90) of the vaporising element (84).

42. Welding apparatus as claimed in one or more of the preceding claims, **characterised in that** the individual components of the torch (6) are built-into a protective housing (21).

43. Welding apparatus as claimed in one or more of the preceding claims, **characterised in that** the protective housing (21) is made from a material that is not electrically conductive.

44. Welding apparatus as claimed in one or more of the preceding claims, **characterised in that** a pump system is provided in the supply apparatus (1) for conveying the liquid (8) from the container (5) of the supply apparatus (1) to the torch (6).

45. Welding apparatus as claimed in one or more of the preceding claims, **characterised in that** the thread (88) is arranged on the external face of the sleeve (78).

46. Welding torch as claimed in one or more of the preceding claims, **characterised in that** the heating element (99) is arranged in the bore (86) adjacent to the thread (88) provided on the sleeve (78).

47. Welding apparatus as claimed in one or more of the preceding claims, **characterised in that** another heating element (103) is arranged in the bore (72), which co-operates with the thread (88) of the sleeve (78).

48. Welding apparatus as claimed in one or more of the preceding claims, **characterised in that** the liquid (8) is delivered to the passage (67) or the guide passage (77) or the flow passage (90) from the coolant circuit (11), the individual components, in particular the cathode sleeve (52), the insulating sleeve (65) and the sleeve (78), having bores (105 to 107), which are arranged flush with one another, extending radially about the longitudinal mid-axis (39).

49. Welding apparatus as claimed in one or more of the preceding claims, **characterised in that** the bores (105, 106, 107) of the cathode sleeve (52) are connected to the bores (97, 98) of the coolant circuit (11).

50. Welding apparatus as claimed in one or more of the preceding claims, **characterised in that** the torch (6) is made up of the components comprising the cathode sleeve (52), the insulating sleeve (65) and the vaporising element (84).

51. Welding apparatus as claimed in one or more of the preceding claims, **characterised in that** the insulating sleeve (65) and the vaporising element (84) are fixed and positioned relative to one another by means of the receiving part (22), a thread arrangement being provided in the contact regions of the individual components, for example.

52. Welding apparatus as claimed in one or more of the preceding claims, **characterised in that** at least two different liquid supply systems and/or containers (5, 120) are provided in the supply apparatus (1).

53. Welding apparatus as claimed in one or more of the preceding claims, **characterised in that** the liquid supply systems and/or the containers (5, 120) are connected to one another via lines (121, 122), with a mixing device or a mixing system, in particular a mixing valve (123) connected in between.

54. Welding apparatus as claimed in one or more of the preceding claims, **characterised in that** an outlet of the mixing valve (123) connects with the torch (6) and the connecting piece (40) of the torch (6) and/or with the coolant circuit (11).

55. Welding apparatus as claimed in one or more of the preceding claims, **characterised in that** the control system (3) is connected via a control line (124) to a control input of the mixing valve (123).

56. Welding apparatus as claimed in one or more of the preceding claims, **characterised in that** the mixing ratio of the two liquids (8, 125) disposed in the containers (5, 120), in particular of water and inorganic or organic liquids (125) can be set by the user via the input and/or output device (16) and can be regulated or controlled by the control system (3).

57. Welding apparatus as claimed in one or more of the preceding claims, **characterised in that** the torch (6) is connected to at least two galvanically separated power sources (2, 126).

58. Welding apparatus as claimed in one or more of the preceding claims, **characterised in that** the first power source (2) is connected to the cathode (100) and the anode (93) of the torch (6) and the other power source (126) is connected to the cathode (100) of the torch (6) and the workpiece (20) in order to form a respective arc (96, 127).

59. Method of cutting materials, in particular a steam-cutting method, whereby an arc is generated between at least an anode (93) and a cathode (100), by which a gas generated from a liquid is ionised and heated, the liquid or the liquid converted into the gaseous state being delivered to the torch or the gap between anode and cathode under pressure, **characterised in that** the heat for vaporising the liquid is transmitted by means of a heating element (99, 103) and the arc to the components of the torch, the quantity of liquid being regulated so that the heat is consumed by the conversion of the liquid into the gaseous state.

60. Method as claimed in claim 59, **characterised in that** the liquid is delivered via a passage or a flow passage and a length of the passage or flow passage is selected so as to be longer than the length needed to convert the liquid into the gaseous state depending on the heat applied.

61. Method as claimed in claim 59 or 60, **characterised in that**, prior to igniting the arc in the torch, the liquid is converted into gas, the gas accumulating between the anode and the cathode.

62. Method as claimed in one or more of the preceding claims 59 to 61, **characterised in that** in order to ignite the arc, a high-frequency signal is modulated to the power supply of the torch, in particular the anode and the cathode.

63. Method as claimed in one or more of the preceding claims 59 to 62, **characterised in that** the liquid in the torch is conveyed radially in the longitudinal direction about the longitudinal mid-axis of the torch through the flow passage.

64. Method as claimed in one or more of the preceding claims 59 to 63, **characterised in that** the liquid is transformed into a gaseous state externally to the torch and the gas, in particular the steam, is delivered to the gap between anode and cathode.

65. Method as claimed in one or more of the preceding claims 59 to 64, **characterised in that** an arc is generated between an anode and a cathode in the torch and the cathode in the torch and a workpiece, the workpiece being placed at a higher positive potential than the anode in the torch.

66. Method as claimed in one or more of the preceding claims 59 to 65, **characterised in that** at least two current circuits are established across the torch, the first current circuit being established between the cathode and the anode of the torch and the second current circuit being established between the cathode of the torch and the workpiece.

67. Method as claimed in one or more of the preceding claims 59 to 66, **characterised in that** an arc is formed between the cathode and the anode and another arc is formed between the cathode and the workpiece.

## Revendications

1. Appareil de soudage destiné à un procédé de découpe, notamment un procédé de découpe à vapeur d'eau, constitué d'un brûleur (6), d'un dispositif de commande (3), d'un système d'alimentation en liquide et d'une source de courant (2), où le brûleur est relié par des lignes (9, 10) à la source de courant (2) et par un conduit d'alimentation (7) au système d'alimentation en liquide, et où est réalisé dans le brûleur au moins un canal respectivement un canal d'écoulement (112) d'une section transversale prédéterminée et est réalisé pour transformer le liquide en un état gazeux, notamment en un gaz, où le brûleur comprend au moins une cathode (100) et une anode (93), et le système d'alimentation en liquide est relié par un conduit (7) à un espace intermédiaire entre la cathode et l'anode, **caractérisé en ce que** le brûleur comporte un élément chauffant (99, 103) et **en ce qu'**une longueur du canal respectivement du canal d'écoulement (112) respectivement une surface de celui-ci est dimensionnée de façon que lors d'une amenée de chaleur prédéfinissable par les éléments chauffants, une énergie thermique requise pour l'évaporation complète du liquide amené (8) peut être amenée.

2. Appareil de soudage selon la revendication 1, **caractérisé en ce que** l'élément chauffant (99, 103) est formé par des éléments chauffants à résistance, des cartouches chauffantes, des corps chauffants à rayonnement ou analogue.

3. Appareil de soudage selon l'une des revendications 1 ou 2, **caractérisé en ce que** l'élément chauffant (99, 103) est formé par un élément d'évaporation (84) qui s'étend depuis l'espace intermédiaire (83) entre la cathode (100) et l'anode (93) jusque dans la zone du canal respectivement canal d'écoulement (112).

4. Appareil de soudage selon la revendication 3, **caractérisé en ce que** l'élément d'évaporation (84) forme au moins une partie de la surface du canal respectivement du canal d'écoulement (112).

5. Appareil de soudage selon l'une ou plusieurs des revendications précédentes, **caractérisé en ce que** le système d'alimentation en liquide est constitué, par exemple, par un récipient (5) recevant le liquide (8) ou un conduit d'amenée d'un liquide (8) sous pression.

6. Appareil de soudage selon l'une ou plusieurs des revendications précédentes, **caractérisé en ce que** le système d'alimentation en liquide et/ou le récipient (5) pour le liquide (8) est disposé dans l'appareil d'alimentation (1).

7. Appareil de soudage selon l'une ou plusieurs des revendications précédentes, **caractérisé en ce qu'**une douille de cathode (52) formant la cathode (100) présente un canal de circulation, par exemple des perçages qui s'étendent dans la direction longitudinale de celle-ci, et **en ce qu'**une sortie du canal de circulation est reliée au canal respectivement au canal d'écoulement (112) respectivement à l'espace intermédiaire (83) entre la cathode (100) et l'anode (93).

8. Appareil de soudage selon l'une ou plusieurs des revendications précédentes, **caractérisé en ce que** le canal respectivement canal d'écoulement (112) est réalisé pour s'étendre autour d'un axe médian longitudinal (39) du brûleur (6), par exemple en une forme hélicoïdale.

9. Appareil de soudage selon l'une ou plusieurs des revendications précédentes, **caractérisé en ce que** le canal respectivement canal d'écoulement (112) est disposé pour s'étendre parallèlement à l'axe médian longitudinal (39) du brûleur (6).

10. Appareil de soudage selon l'une ou plusieurs des revendications précédentes, **caractérisé en ce que** le canal respectivement canal d'écoulement (112) présente sur sa longueur une section transversale différente ou qui, de préférence, diminue continuellement.

11. Appareil de soudage selon l'une ou plusieurs des revendications précédentes, **caractérisé en ce qu'**il est disposé dans l'appareil d'alimentation (1) un générateur haute fréquence pour l'allumage d'un arc (96) entre la cathode (100) et l'anode (93).

12. Appareil de soudage selon l'une ou plusieurs des revendications précédentes, **caractérisé en ce que** le brûleur (6) est constitué de plusieurs composants, par exemple d'une partie de réception (22), d'un élément isolant (43), d'un tube de cathode (52), d'une gaine d'isolation (65), d'une pièce de transition (66), d'une douille (78) et d'un élément d'évaporation (84).

13. Appareil de soudage selon l'une ou plusieurs des revendications précédentes, **caractérisé en ce que** l'élément d'évaporation (84) présente un perçage (86) dans lequel est disposé un filetage (88) pour le canal d'écoulement (90).

14. Appareil de soudage selon l'une ou plusieurs des revendications précédentes, **caractérisé en ce que** le filetage (88) de l'élément d'évaporation (84), en particulier un pas de vis (89), présente un pas entre 1 mm et 6 mm, de préférence de 3 mm.

15. Appareil de soudage selon l'une ou plusieurs des revendications précédentes, **caractérisé en ce que** le canal d'écoulement (90) pour le liquide (8) est formé par deux pas de vis juxtaposés (89).

16. Appareil de soudage selon l'une ou plusieurs des revendications précédentes, **caractérisé en ce qu'**un élément chauffant (99) est associé au filetage (86) de l'élément d'évaporation (84).

17. Appareil de soudage selon l'une ou plusieurs des revendications précédentes, **caractérisé en ce que** l'élément chauffant (99) est disposé à la face extérieure de l'élément d'évaporation (84).

18. Appareil de soudage selon l'une ou plusieurs des revendications précédentes, **caractérisé en ce que** dans un perçage respectivement une ouverture de l'élément d'évaporation (84), une anode (93) en un matériau bon conducteur électrique est placée respectivement peut être vissée par un agencement de filetage.

19. Appareil de soudage selon l'une ou plusieurs des revendications précédentes, **caractérisé en ce que** l'anode (93) présente dans la direction longitudinale de l'axe médian longitudinal (39) du brûleur (6) un perçage (94) par lequel sort le gaz (19) formé dans l'intérieur du brûleur (6).

20. Appareil de soudage selon l'une ou plusieurs des revendications précédentes, **caractérisé en ce que** le tube de cathode (52) est formé de préférence par plusieurs parties (60 à 62).

21. Appareil de soudage selon l'une ou plusieurs des revendications précédentes, **caractérisé en ce que** les parties individuelles (60 à 62) du tube de cathode (52) sont réalisées en des matériaux différents, notamment en des matériaux conducteurs électriquement et sont reliées par exemple par un agencement de filetage entre elles.

22. Appareil de soudage selon l'une ou plusieurs des revendications précédentes, **caractérisé en ce qu'**au voisinage de l'anode (93), la douille de cathode (52) forme la cathode (100).

23. Appareil de soudage selon l'une ou plusieurs des revendications précédentes, **caractérisé en ce qu'**un espace intermédiaire (83) est formé entre la douille de cathode (52) et l'élément d'évaporation (84) à travers lequel le gaz (19) s'écoule vers le perçage (94) de l'anode (93).

24. Appareil de soudage selon l'une ou plusieurs des revendications précédentes, **caractérisé en ce que** l'arc (96) est formé dans l'espace intermédiaire (83) entre l'anode (93) et la cathode (100).

25. Appareil de soudage selon l'une ou plusieurs des revendications précédentes, **caractérisé en ce que** dans le tube de cathode (52), notamment dans la partie (60), des perçages (97, 98) sont disposés pour un circuit de refroidissement (11) d'un liquide de refroidissement, où les perçages (97, 98) sont reliés par exemple par le conduit de refroidissement (14, 15) à l'appareil d'alimentation (1).

26. Appareil de soudage selon l'une ou plusieurs des revendications précédentes, **caractérisé en ce qu'**il est disposé entre une partie (60) et une autre partie (61) du tube de cathode (52), un espace intermédiaire (104) pour le liquide de refroidissement respectivement pour le liquide (8), où les perçages (97, 98) débouchent dans l'espace intermédiaire (104).

27. Appareil de soudage selon l'une ou plusieurs des revendications précédentes, **caractérisé en ce que** le tube de cathode (52) est isolé électriquement par la douille d'isolation (65) et l'élément d'isolation (43) des autres composants du brûleur (6).

28. Appareil de soudage selon l'une ou plusieurs des revendications précédentes, **caractérisé en ce que** le tube de cathode (52) est positionné par la douille d'isolation (65) et l'élément d'isolation (43) dans un perçage (24) de la partie de réception (22).

29. Appareil de soudage selon l'une ou plusieurs des revendications précédentes, **caractérisé en ce que** sur la douille d'isolation (65) est disposée une douille (78).

30. Appareil de soudage selon l'une ou plusieurs des revendications précédentes, **caractérisé en ce que** la douille (78) remplit un espace intermédiaire entre la douille d'isolation (65) et le filage (88) de l'élément d'évaporation (84).

31. Appareil de soudage selon l'une ou plusieurs des revendications précédentes, **caractérisé en ce que** la douille (78) présente dans la zone d'extrémité qui est associée à l'anode (93) respectivement à la cathode (100), une rainure (80) s'étendant tout autour, où la rainure (80) est en liaison avec le canal d'écoulement (90).

32. Appareil de soudage selon l'une ou plusieurs des revendications précédentes, **caractérisé en ce qu'**au voisinage de la rainure (80), la douille (78) présente des perçages (81) s'étendant radialement autour de l'axe médian longitudinal (39), où les perçages (81) débouchent dans l'espace intermédiaire (83) entre l'élément d'évaporation (84) et le tube de cathode (52).

33. Appareil de soudage selon l'une ou plusieurs des revendications précédentes, **caractérisé en ce que** pour la fixation de l'élément d'évaporation (84), celui-ci est relié de préférence par un agencement de filetage à une pièce de transition (66), où la pièce de transition (66) est positionnée dans un perçage (23) de la partie de réception (22) respectivement est fixée par un agencement de filetage.

34. Appareil de soudage selon l'une ou plusieurs des revendications précédentes, **caractérisé en ce que** la pièce de transition (66) présente un perçage (72) dans lequel est disposé de préférence un filetage (75) qui corrcspond au filetage (88) de l'élément d'évaporation (84).

35. Appareil de soudage selon l'une ou plusieurs des revendications précédentes, **caractérisé en ce que** le filetage (88) de la pièce de transition (66), notamment un pas de vis (76), présente un pas entre 1 mm et 6 mm, de préférence de 3 mm.

36. Appareil de soudage selon l'une ou plusieurs des revendications précédentes, **caractérisé en ce qu'**un canal de guidage (77) pour le liquide (8) est disposé dans la pièce de transition (66).

37. Appareil de soudage selon l'une ou plusieurs des revendications précédentes, **caractérisé en ce que** le canal de guidage (77) est formé par deux pas de vis (76) disposés l'un à côté de 1' autre.

38. Appareil de soudage selon l'une ou plusieurs des revendications précédentes, **caractérisé en ce qu'**un canal (67) est disposé respectivement formé entre la pièce de transition (66) qui est disposée dans le perçage (23) de la partie de réception (22) et la douille d'isolation (65) qui est disposée dans le perçage (24) de la partie de réception (22).

39. Appareil de soudage selon l'une ou plusieurs des revendications précédentes, **caractérisé en ce que** la partie de réception (22) présente d'autres perçages (35, 36) pour relier la partie de réception (22), notamment le brûleur (6), par le conduit d'alimentation (7) à l'appareil d'alimentation (1).

40. Appareil de soudage selon l'une ou plusieurs des revendications précédentes, **caractérisé en ce qu'**un des perçages (35, 36), notamment le perçage (35), débouche dans le canal (67).

41. Appareil de soudage selon l'une ou plusieurs des revendications précédentes, **caractérisé en ce que** le liquide (8) s'écoule du récipient (5) dans l'appareil d'alimentation (1) par le conduit d'alimentation (7), le canal (67) et le canal de guidage (77) dans le canal d'écoulement (90) de l'élément d'évaporation (84).

42. Appareil de soudage selon l'une ou plusieurs des revendications précédentes, **caractérisé en ce que** les composants individuels du brûleur (6) sont montés dans un boîtier de protection (21).

43. Appareil de soudage selon l'une ou plusieurs des revendications précédentes, **caractérisé en ce que** le boîtier de protection (21) est réalisé en un matériau non conducteur électriquement.

44. Appareil de soudage selon l'une ou plusieurs des revendications précédentes, **caractérisé en ce que** pour le convoyage du liquide (8) du récipient (5) de l'appareil d'alimentation (1) au brûleur (6), un dispositif de pompage est disposé dans l'appareil d'alimentation (1).

45. Appareil de soudage selon l'une ou plusieurs des revendications précédentes, **caractérisé en ce que** le filetage (88) est disposé à la face extérieure de la douille (78).

46. Appareil de soudage selon l'une ou plusieurs des revendications précédentes, **caractérisé en ce que** l'élément chauffant (99) est disposé dans le perçage (86) au voisinage du filetage (88) disposé à la douille (78).

47. Appareil de soudage selon l'une ou plusieurs des revendications précédentes, **caractérisé en ce qu'**un autre élément chauffant (103) est disposé dans le perçage (72) et qui est associé au filetage (88) du manchon (78).

48. Appareil de soudage selon l'une ou plusieurs des revendications précédentes, **caractérisé en ce que** l'amenée du liquide (8) au canal (67) ou au canal de guidage (77) ou au canal d'écoulement (90) a lieu depuis le circuit de refroidissement (11), où les différents composants, notamment le tube de cathode (52), la douille d'isolation (65) et la douille (78) présentent des perçages (105 à 107) s'étendant radialement autour de l'axe médian longitudinal (39) qui sont disposés d'une manière alignée.

49. Appareil de soudage selon l'une ou plusieurs des revendications précédentes, **caractérisé en ce que** les perçages (105, 106, 107) du tube de cathode (52) sont reliés aux perçages (97, 98) du circuit de refroidissement (11).

50. Appareil de soudage selon l'une ou plusieurs des revendications précédentes, **caractérisé en ce que** le brûleur (6) est formé par les composants du tube de cathode (52), de la douille d'isolation (65) et de l'élément d'évaporation (84).

51. Appareil de soudage selon l'une ou plusieurs des revendications précédentes, **caractérisé en ce que** la douille d'isolation (65) et l'élément d'évaporation (84) sont fixés respectivement positionnés par la partie de réception (22) l'un relativement à l'autre, où par exemple dans les zones de contact des composants individuels, un agencement de filetage est disposé.

52. Appareil de soudage selon l'une ou plusieurs des revendications précédentes, **caractérisé en ce que** dans l'appareil d'alimentation (1), au moins deux systèmes d'alimentation en liquide et/ou récipients (5, 120) différents sont disposés.

53. Appareil de soudage selon l'une ou plusieurs des revendications précédentes, **caractérisé en ce que** les systèmes d'alimentation en liquide et/ou les récipients (5, 120) sont reliés par des conduits (121, 122) en intercalant un dispositif de mélange respectivement un système de mélange, notamment une vanne de mélange (123).

54. Appareil de soudage selon l'une ou plusieurs des revendications précédentes, **caractérisé en ce qu'**une sortie de la vanne de mélange (123) est reliée au brûleur (6) respectivement à la pièce de raccordement (40) du brûleur (6) et/ou au circuit de refroidissement (11).

55. Appareil de soudage selon l'une ou plusieurs des revendications précédentes, **caractérisé en ce que** le dispositif de commande (3) est relié par une ligne de commande (124) à une entrée de commande de la vanne de mélange (123).

56. Appareil de soudage selon l'une ou plusieurs des revendications précédentes, **caractérisé en ce que** le rapport de mélange des deux liquides (8, 125) se trouvant dans le récipient (5, 120), notamment de l'eau et de liquides inorganiques ou organiques (125), est réglable par l'utilisateur par le dispositif d'entrée et/ou d'affichage (16) respectivement est réglable ou peut être commandé par le dispositif de commande (3).

57. Appareil de soudage selon l'une ou plusieurs des revendications précédentes, **caractérisé en ce que** le brûleur (6) est relié à au moins deux sources de courant (2, 126) séparées d'une manière galvanique.

58. Appareil de soudage selon l'une ou plusieurs des revendications précédentes, **caractérisé en ce que** la première source de courant (2) est reliée à la cathode (100) et à l'anode (93) du brûleur (6), et l'autre source de courant (126) à la cathode (100) du brûleur (6) et à la pièce (20) pour réaliser respectivement un arc (96, 127).

59. Procédé de découpe de matériaux, notamment procédé de découpe à vapeur d'eau, où est créé entre au moins une anode (93) et une cathode (100) un arc au moyen duquel est ionisé et chauffé un gaz réalisé à partir d'un liquide (8), où le liquide ou bien le liquide amené à l'état gazeux est amené sous pression au brûleur respectivement à l'espace intermédiaire entre l'anode et la cathode, **caractérisé en ce que** l'énergie thermique pour l'évaporation du liquide est transférée par un élément chauffant (99, 103) et l'arc dans les composants du brûleur, où la quantité de liquide est réglée de façon que l'énergie thermique soit utilisée pour transformer le liquide en état gazeux.

60. Procédé selon la revendication 59, **caractérisé en ce que** le liquide est amené par un canal respectivement un canal d'écoulement, et qu'une longueur du canal respectivement du canal d'écoulement est sélectionnée pour être plus grande que la longueur requise pour transformer le liquide en état gazeux en fonction de l'énergie thermique amenée.

61. Procédé selon la revendication 59 ou 60, **caractérisé en ce qu'**avant l'allumage de l'arc dans le brûleur, le liquide est transformé en gaz, où le gaz s'accumule entre l'anode et la cathode.

62. Procédé selon l'une ou plusieurs des revendications précédentes 59 à 61, **caractérisé en ce que** pour l'allumage de l'arc, un signal haute fréquence est modulé sur l'alimentation en énergie du brûleur, notamment sur l'anode et la cathode.

63. Procédé selon l'une ou plusieurs des revendications précédentes 59 à 62, **caractérisé en ce que** le liquide dans le brûleur est convoyé radialement dans la direction longitudinale autour de l'axe médian longitudinal du brûleur à travers le canal d'écoulement.

64. Procédé selon l'une ou plusieurs des revendications précédentes 59 à 63, **caractérisé en ce que** le liquide est amené à l'extérieur du brûleur à l'état gazeux et **en ce que** le gaz, notamment la vapeur d'eau, est amené dans l'espace intermédiaire entre l'anode et la cathode.

65. Procédé selon l'une ou plusieurs des revendications précédentes 59 à 64, **caractérisé en ce qu'**un arc est créé entre une anode et une cathode dans le brûleur, et la cathode dans le brûleur et une pièce, où la pièce s'applique à un potentiel positif plus élevé que l'anode dans le brûleur.

66. Procédé selon l'une ou plusieurs des revendications précédentes 59 à 65, **caractérisé en ce que** par le brûleur, au moins deux circuits électriques sont formés, où le premier circuit électrique est formé entre la cathode et l'anode du brûleur et le second circuit électrique entre la cathode du brûleur et la pièce.

67. Procédé selon l'une ou plusieurs des revendications précédentes 59 à 66, **caractérisé en ce qu'**il est formé entre la cathode et l'anode un arc et entre la cathode et la pièce un autre arc.
